# EUROPEAN PATENT SPECIFICATION

(11) **EP 2 723 177 B1**
(45) Date of publication and mention of the grant of the patent: **06.09.2017**
(21) Application number: 12800725.9
(22) Date of filing: 13.06.2012
(51) Int. Cl.: A01N 27/00, A01N 37/50, A01N 43/54, A01N 43/653, A01N 47/24, A01N 43/88, A01N 43/90, A01N 59/20, A01N 25/30, A01N 25/00, A01P 3/00

(54) **DELIVERY OF PARAFFINIC OIL-CONTAINING COMPOSITIONS TO ROOT TISSUE OF PLANTS**
VERABREICHUNG VON PARAFFINÖLHALTIGEN ZUSAMMENSETZUNGEN AN DAS WURZELGEWEBE VON PFLANZEN
ADMINISTRATION DE COMPOSITIONS CONTENANT DE L'HUILE PARAFFINIQUE EN DIRECTION DU TISSU RACINAIRE DE PLANTES

(30) Priority: 13.06.2011 US 201161496500 P
(43) Date of publication of application: 30.04.2014
(73) Proprietor: Suncor Energy Inc., Calgary, Alberta T2P 3E3 (CA)
(72) Inventor: FEFER, Michael, Whitby, Ontario L1N 7A7 (CA); LIU, Jun, Oakville, Ontario L6H 6H3 (CA)
(74) Representative: Peterreins Schley
(86) International application number: PCT/CA2012/050401
(87) International publication number: WO 2012/171126

(56) References cited:
- WO-A1-96/21353
- CA-A1- 2 507 482
- CA-C- 2 209 920
- CN-A- 101 238 820
- GB-A- 1 499 397
- US-A- 3 426 126
- US-A1- 2007 197 387
- US-A1- 2009 325 922
- WICKS, T.J. ET AL.: 'Control of grapevine powdery mildew with mineral oil: an assessment of oil concentration and spray volume' AUSTRALIAN JOURNAL OF GRAPE AND WINE RESEARCH vol. 5, no. 2, 1999, pages 62 - 65, XP055085669

## Description

### TECHNICAL FIELD

This disclosure features methods for the delivery of compositions, e.g., fungicidal compositions that include a paraffinic oil and a metal phthalocyanine pigment to one or more plants for, e.g., promoting the health of the one or more plants.

### BACKGROUND

Rusts are plant diseases caused by fungal pathogens of the order Pucciniales. Rusts can affect a variety of plants, including monocotyledons and dicotyledons, as well as various plant organs, including leaves, stems, fruits and seeds. Rust is typically observed as colored powdery pustules composed off tiny spores that form on the lower plant organ surfaces. Common rust-causing fungal species include Gymnosporangium juniperi-virginianae (Cedar-apple rust) which attacks apple and pear and hawthorn; Cronartium ribicola (White pine blister rust); which attacks white pines and currants; Hemileia vastatrix (Coffee rust) which attacks coffee plant; Puccinia graminis (wheat stem rust) which attacks Kentucky bluegrass, barley, and wheat; Puccinia coronata (Crown Rust of Oats and Ryegrass) which attacks oats; Phakopsora meibomiae and P. pachyrhizi (soybean rust) which attacks soybean and various legumes; Uromyces phaseoli (Bean rust) which attacks bean; Puccinia hemerocallidis (Daylily rust) which attacks Daylily; Puccinia persistens subsp. triticina causes (wheat rust in grains, also known as 'brown or red rust'); P. sriiformis (yellow or stripe rust); Uromyces appendeculatus which attacks bean.

Wheat stem rust is caused by the fungus Puccinia graminis and is a significant disease affecting cereal crops, particularly wheat (Triticum spp.) An epidemic of stem rust on wheat caused by race Ug99 is currently spreading across Africa, the Middle East, and Asia, and threatening large numbers of people who are dependent on wheat for sustenance. The rust fungus attacks the parts of the plant which are above ground. Spores that land on green wheat plants form a pustule that invades the outer layers of the stalk. Where infection has occurred on the stem or leaf, elliptical blisters or pustules called uredia develop. Infected plants produce fewer tillers and set fewer seed.

Soybean rust is a disease that primarily affects soybeans and other legumes. It is caused by two species of fungi, Phakopsora pachyrhizi and Phakopsora meibomiae. Soybean rust has been reported in Asia, Australia, Africa, South America and North America. Soybean rust is spread by wind-borne spores, which are released in cycles of seven days to two weeks. Yield losses can be severe with this disease and losses of 10-80% have been reported.

Multi-pronged approaches are desirable to address the spread of fungal infection. A variety of preventative methods may be employed. For example, rust diseases are correlated to relatively high moisture. Accordingly, avoidance of overhead watering at night, using drip irrigation, reducing crop density, and the use of fans to circulate air flow may serve to lower the relative moisture and decrease the severity of rust infection.

Other strategies may include reducing the area of the plant that the pathogen destroys, or slowing down the spread of the fungus. Fungus-resistant plants may be used to interrupt the disease cycle because many rusts are host-specific. This approach has proven very successful in the past for control of wheat stem rust; however, Ug99 is currently virulent against most wheat varieties. Currently, there are no commercial soybean varieties with resistance to soybean rust. Accordingly, soybean rust is managed with fungicides.

In large agricultural operations, conventional synthetic fungicides can be used to control fungal pathogens. De-methylation inibitors (DMI) such tebuconazole (Folicur^{™}, Bayer) and propioconazole (Tilt^{™}) may be effective for the control of wheat stem rust, while tetraconazole (Domark^{™}, Valent) be effective for the control of soybean rust. Quinone Outside Inhibitors (QoI), such as pyraclostrobin (Headline^{™}, BASF), may be effective for the control of soybean rust, while azoxystrobin (Quadris^{™}) may be effective for the control of wheat stem rust.

Conventional fungicides are generally applied by air to the foliage as contact between the pathogen with the fungicide is required for efficacy. This process can expensive and fungicide application is often reserved for seasons when foliar diseases are severe. Second, conventional fungicides typically target specific sites of important pathogen proteins. Accordingly, strains may develop resistance to the fungicide after repeat applications. Third, the efficacy of conventional chemical fungicides is not always satisfactory for some of the diseases, such as Fusarium Head Blight (Scab). Finally, conventional fungicides are generally not acceptable for use in organic farming.

As an alternative approach to conventional chemical fungicides, oil-in-water emulsions comprising paraffinic oils (paraffinic oil-in-water emulsions) and paraffinic spray oils have been used in turfgrass management practices for controlling turfgrass pests (see, for example, Canadian Patent Application 2,472,806 and Canadian Patent Application 2,507,482). In addition, oil-in-water formulations comprising paraffinic oils and a pigment for controlling turfgrass pests have been reported (see, for example, WO 2009/155693). For example, Petro-Canada produces CIVITAS™, is a paraffinic oil-in-water emulsion that functions as a broad spectrum fungicide and insecticide for use on golf course turf and landscape ornamentals, used for example to control powdery mildew, adelgids and webworms on landscape ornamentals (US EPA REG. NO. 69526-13). Product labeling indicates that CIVITAS™ may be applied as part of an alternating spray program or in tank mixes with other turf and ornamental protection products; and that CIVITAS™ may be used as a preventative treatment with curative properties for the control of many important diseases on turf, including fairways and roughs.

WO 96/21353 A1, US 3,426,126 A, US 3,426,126 A, GB 1 499 397 A, and CN 101 237 820 A disclose pesticidal and herbicidal compositions comprising paraffinic oil emulsions applied to the roots of plants.

### SUMMARY

The present invention relates to methods for controlling a disease caused by fungi or bacteria in a plant or for increasing the amount of endophytic bacteria in the roots of a plant, which comprises applying a composition comprising a paraffinic oil and a metal phthalocyanine pigment to root tissue of the plant.

Advantageously, the methods described herein can provide ease of use to the end-user. For example, the methods described herein can facilitate the treatment of particularly large and/or tall plants (e.g., trees) since the compositionscan be applied at ground level, e.g., at the base of the large and/or tall plants (e.g., trees), for example during regular watering. As another example, the methods described herein can make use of existing irrigation infra-structure, thereby obviating the need for the additional acquisition of spraying equipment to apply the compositions. As a further example, the methods described herein provide an alternative to aerial application of pesticide (e.g., crop dusting) which can be associated with environmental concerns, including spray drift and occupational health. In still yet another example, the methods described herein can also avoid the potential injury (e.g phytotoxicity) on the foliage that can sometimes be associated with foliar application of a fungicide.

While not wishing to be bound by theory, it is believed that applying the compositions described herein to the root tissue in a plant increases the amount of endophytiic bacteria living inside the roots of the plant. It is believed that Root endophtyes invade openings in the roots from the soil, and live inside plants without causing disease. Endophytes may activate ISR in the plant and result in the activation of faster and stronger resistance to later attack by pathogens. In some instances, many of these endophytes, along with bacteria associated with the root surface, not only result in ISR, but also enhance plant growth. It is thought that plants can detect various compounds produced by these bacteria and then respond to them.

The compositionscan further include (but are not limited to) one or more of the following: one or more emulsifiers, one or more pigments, one or more silicone surfactants, one or more anti-settling agents, one or more other active agents (e.g., conventional chemical fungicides (e.g., a DMI or a QoI); or one or more plant growth regulators), and water. In some implementations, the composition can be in the form of a single composition (e.g., which is contained within a storage pack). Typically, the composition is applied after dilution with water (e.g., by soil drench). In other implementations, the composition can include two or more separately contained (e.g., packaged) compositions, each containing one or more of the above-mentioned components. Said compositions can be combined and applied after dilution with water; or each composition can be applied separately either simultaneously or sequentially, and after dilution with water (e.g., by soil drench).

Implementations can include any one or more of the following features.

The composition can be applied to a growing medium that is in proximity to a base and root system of the plant, wherein the amount of the composition that is applied to the growing medium is sufficient to penetrate the growing medium and contact the root tissue for uptake by the plant.

In general, the compositions are applied in an amount that is greater than the amount, which would contact the growing medium by run-off after spraying the ariel portions of the plant with the same amount of the compositions. Examples of such amounts are provided throughout this disclosure.

The growing medium can include any surface of the growing medium that is from 0cm (0 inches) to 183cm (six feet) (e.g., 0cm (0 inches) to 152cm (five feet), 0cm (0 inches) to 122cm (four feet), 0cm (0 inches) to 91cm (three feet), 0cm (0 inches) to 61cm (two feet), 0cm (0 inches) to 30cm (12 inches), 0cm (0 inches) to 15cm (six inches), 0cm (0 inches) to 2,5cm (one inch), 0cm (0 inches) to 1.25cm (0.5 inch) from the base of the plant and any growing medium that is from 0cm (0 inches to 61cm (24 inches) beneath said surface of the growing medium.

The growing medium can be soil.

The composition can be applied as a bolus.

The composition can be applied by pouring and/or root bathing.

The composition can be applied over a time period of at least ten seconds (e.g., at least five seconds, at least two seconds).

The composition can be applied by soil drenching.

The composition can be applied by drip irrigation.

The composition can be applied by soil injection.

The method can further include adding water (e.g.,to the growing medium) after the composition has been applied.

The aerial exterior portion of the plant is free (e.g., contains less than 5%, or 4%, or 3%, or 2%, or 1%, or 0%) of the composition during application of the composition to the root tissue.

The composition is not applied to any aerial portion of the plant during application of the composition to the root tissue.

The aerial exterior portion of the plant is free (e.g., contains less than 5%, or 4%, or 3%, or 2%, or 1%, or 0%) of the composition.

The composition is not applied to any aerial portion of the plant.

The method can further include applying one or more conventional chemical fungicides to the plant (e.g., .the one or more conventional chemical fungicides can be applied to an aerial portion of the plant).

The plant can be a crop plant (e.g., wheat, barley, soybean, tomatoes, potatoes, or corn, or any combination thereof; e.g., wheat or tomatoes). In certain implementations, the composition further includes from 50 to 99 parts per weight of water (e.g., the composition can be an oil-in-water emulsion). The composition can be applied at a rate of from 935.4 L/ha (100 gal/acre) to 7483.2 L/ha (800 gal/acre) (e.g., 1870.8 L/ha (200 gal/acre) to 3741.6 L/ha (400 gal/acre)).

The plant can be a tree (e.g., a maple tree, a citrus tree, an apple tree, a pear tree, an oak tree, an ash tree, a pine tree, or a spruce tree, or any combination thereof; e.g., a maple tree). In certain implementations, the composition further includes from 5 to 99 parts per weight of water (e.g., the composition can be an oil-in-water emulsion).

The methods described herein can be effective in controlling fungal diseases, including, e.g., maple tar spot in maple trees; or wheat stem rust, soybean rust, leaf rust, stripe rust, fusarium head blight, spot blotch, and Septoria complex in crop plants; or bacterial disease such as bacterial speck or bacterial spot. In some implementations, the combined effect of two (or more) components of the composition (e.g., the paraffinic oil and the pigment) on controlling fungal disease is greater than the expected sum of each component's individual effect on controlling a fungal disease (e.g., maple tar spot in maple trees; or wheat stem rust, soybean rust, leaf rust, stripe rust, fusarium head blight, spot blotch, and Septoria complex in crop plants). In certain implementations, the combined effect of the two (or more) components present in the compositions described herein is a synergistic effect.

The plant can be monocotyledonous. The monocotyledonous plant may be of the order Poaceae. The plant may be of the genus Triticum, Secale, Hordeum, Oryza, Zea, or Elymus. The fungal pathogen may be of the order Pucciniales. The fungal pathogen may be of the genus Puccinia. The fungal pathogen may be of the species Puccinia graminis, Puccinia triticina, or Puccinia sriiformis. The fungal pathogen can also be Bipolaris sorokiniana or Fusarium graminearum.

The plant can be dicotyledonous. The plant can be of the order Fabaceae. The plant can be of the species Glycine max. The fungal pathogen can be of the genus Phakopsora. The fungal pathogen can be Phakopsora pachyrhizi and Phakopsora meibomiae. The plant can be of the genus Gossypium. The fungal pathogen can be Phakopsora gossypii.

The compositions can further include water. The compositions can be in the form of an oil in water emulsion. As used herein, the term "oil-in-water emulsion" refers to a mixture in which one of the paraffinic oil and water (e.g., the paraffinic oil) is dispersed as droplets in the other (e.g., the water). In some implementations, an oil-in-water emulsion is prepared by a process that includes combining the paraffinic oil, water, and any other components and the paraffinic oil and applying shear until the emulsion is obtained. Typically, a white milky color is indicative of the formation of an emulsion in the absence of any pigment; and a green color is observed in the presence of a pigment.

The oil-in-water emulsion can be used in a range from 870.8 to 3741.6 L/ha (200 to 400 gallons per acre) for soil drench application or water-in application (including irrigation water).

The paraffinic oil can include a paraffin having a number of carbon atoms of from 12 to 50. The paraffin can have a number of carbon atoms of from about 16 to 35. The paraffin can have an average number of carbon atoms of 23.

The paraffinic oil may have a paraffin content of at least 80%. The paraffinic oil may have a paraffin content of at least 90%. The paraffinic oil may have a paraffin content of at least 99%.

The paraffinic oil can include synthetic isoparaffins.The weight ratio of the paraffinic oil to the emulsifier can be from 10:1 to 500:1.

The weight ratio of the paraffinic oil to the emulsifier can be 50:1.

The compositions can further include a de-methylation inhibitor (DMI). The DMI may be tetraconazole, tebuconazole, propioconazole, azaconazole, bitertanol, bromuconazole, cyproconazole, difenoconazole, diniconazole, epoxiconazole, etaconazole, fenbuconazole, fluquinconazole, flusilazole, flutriafol, hexaconazole, imibenconazole, ipconazole, metconazole, myclobutanil, penconazole, prothioconazole, simeconazole, triadimefon, triadimenol, triticonazole, imazalil, oxpoconazole, pefurazoate, prochloraz, triflumizole, fenarimol, nuarimol, triforine, or pyrifenox..

The compositions can further include a Quinone outside Inhibitor (QoI). The QoI may be azoxystrobin, enestrobin, picoxystrobin, pyraclostrobin, trifloxystrobin, dimoxystrobin, metominostrobin, orysastrobin, famoxadonem, fluoxastrobin, fenamidone, or pyribencarb.

The compositions can further include an emulsifier (e.g., a natural or synthetic alcohol ethoxylate, an alcohol alkoxylate, an alkyl polysaccharide, a glycerol oleate, a polyoxyethylene-polyoxypropylene block copolymer, an alkyl phenol ethoxylate, a polymeric surfactant, a polyethylene glycol, a sorbitan fatty acid ester ethoxylate, or a combination thereof).

The emulsifier can include a natural or synthetic alcohol ethoxylate.

The composition further includes a metal phthalocyanine pigment (e.g., a polychlorinated (Cu II) phthalocyanine).

The pigment can be a water-based pigment dispersion.

The compositions can further include a silicone surfactant.

The compositions can further include a pigment and a silicone surfactant.

The compositions can further include a pigment, a silicone surfactant, and an emulsifier.

In certain implementations, the compositions can further include an emulsifier and a combination of a pigment and a silicone surfactant, and the combined effect of the emulsifier, the paraffinic oil, the pigment and the silicone surfactant is greater than the expected sum of each component's individual effect on controlling infection by the fungal pathogen (e.g., the aforementioned components can be present in amounts that, when applied to the plant, are synergistically effective at controlling infection by the fungal pathogen). The pigment can be a polychlorinated (Cu II) phthalocyanine. The pigment can be dispersed in water. The emulsifier can include a natural or synthetic alcohol ethoxylate, an alcohol alkoxylate, an alkyl polysaccharide, a glycerol oleate, a polyoxyethylene-polyoxypropylene block copolymer, an alkyl phenol ethoxylate, a polymeric surfactant, a polyethylene glycol, a sorbitan fatty acid ester ethoxylate, or a combination thereof. The pigment can be dispersed in oil. The emulsifier may include a natural or synthetic alcohol ethoxylate, a polymeric surfactant, a sorbitan fatty acid ester, or a combination thereof, and the composition may further comprises a polyethylene glycol according to formula IV:

R¹-O-(CH₂CH₂O)_{f}-R²

wherein R1 = H or CH2=CH-CH2 or COCH3; R2 = H or CH2=CH-CH2 or COCH3; and f ≥ 1.

The ratio of the paraffinic oil-in-water emulsion to the combination of the pigment and the silicone surfactant can be from 32:1 to 1:4.

The ratio of the paraffinic oil to the pigment can be from about 1:5 to 100:1, such as 30:1).

The weight ratio of the paraffinic oil to the emulsifier can be from 10:1 to 100:1.

The weight ratio of the pigment to the silicone surfactant can be from 2:1 to 50:1.

The weight ratio of the paraffinic oil to the conventional chemical fungicide can be from 2:1 to 10,000:1

The fungicidal composition can be applied to the root tissue of the plant. The application to the root tissue can be by soil drench.

The compositions further include one or more anti-settling agents.

### Definitions

As used herein, the term "growing medium" refers to any soil (of any composition) or soil-free (e.g. hydroponic) medium that is suitable for growing and cultivating a plant. The growing medium can further include any naturally occurring and/or synthetic substance(s) that are suitable for growing and cultivating a plant.

As used herein, the term "any surface of the growing medium" refers to the surface that is directly exposed to natural and/or simulated light and/or weather.

As used herein, the term "applying" includes contacting the surface of the growing medium with the combinations (e.g., compositions, e.g., fungicidal compositions)as described anywhere herein (e.g., by pouring or root bathing), contacting an area that is beneath the surface of the growing medium with a combination as described anywhere herein (e.g., by soil injection), or any combination thereof. In some implementations, applying is carried out by soil drenching. In some implementations, applying is carried out by drip irrigation.

As used herein, the term "crop plant" refers to a non-woody plant, which is grown, tended to, and harvested in a cycle of one year or less as source of foodstuffs and/or energy. Examples of crop plants include, without limitation, sugar cane, wheat, rice, corn (maize), potatoes, sugar beets, barley, sweet potatoes, cassava, soybeans, tomatoes, legumes (beans and peas).

As used herein, the term "tree" refers to a woody perennial plant having a single stem or trunk and bearing lateral branches at some distance from the ground. In certain implementations, the tree is deciduous. In other implementations, the tree is evergreen (e.g., coniferous). In still other implementations, the tree is deciduous or evergreen and is grown, tended to, and harvested in a cycle of one year or less as source of foodstuffs. In a further implementation, the plant is a shrub. Examples of trees include, without limitation, maple trees, citrus trees, apple trees, pear trees, an oak tree, an ash tree, a pine tree, and a spruce tree.

In some implementations, the plant is a turf grass. As used herein, the term "turf grass" refers to a cultivated grass that provides groundcover, for example a turf or lawn that is periodically cut or mowed to maintain a consistent height. Grasses belong to the *Poaceae* family, which is subdivided into six subfamilies, three of which include common turf grasses: the *Festucoideae* subfamily of cool-season turf grasses; and the *Panicoideae* and *Eragrostoideae* subfamiles of warm-season turf grasses. A limited number of species are in widespread use as turf grasses, generally meeting the criteria of forming uniform soil coverage and tolerating mowing and traffic. In general, turf grasses have a compressed crown that facilitates mowing without cutting off the growing point. In the present context, the term "turf grass" includes areas in which one or more grass species are cultivated to form relatively uniform soil coverage, including blends that are a combination of differing cultivars of the same species, or mixtures that are a combination of differing species and/or cultivars.

Examples of turf grasses include, without limitation:
- bluegrasses (Poa spp.), such as kentucky bluegrass (Poa pratensis), rough bluegrass (Poa trivialis), Canada bluegrass (Poa compressa), annual bluegrass (Poa annua), upland bluegrass (Poa glaucantha), wood bluegrass (Poa nemoralis), bulbous bluegrass (Poa bulbosa), Big Bluegrass (Poa ampla), Canby Bluegrass (Poa canbyi), Pine Bluegrass (Poa scabrella), Rough Bluegrass (Poa trivialis), Sandberg Bluegrass (Poa secunda);
- the bentgrasses and Redtop (Agrostis spp.), such as creeping bentgrass (Agrostis palustris), colonial bentgrass (Agrostis capillaris), velvet bentgrass (Agrostis canina), South German Mixed Bentgrass (Agrostis spp. including Agrostis tenius, Agrostis canina, and Agrostis palustris), Redtop (Agrostis alba), Spike Bentgrass (Agrostis exerata);
- the fescues (Festucu spp.), such as red fescue (Festuca rubra spp. rubra) creeping fescue (Festuca rubra), chewings fescue (Festuca rubra commutata), sheep fescue (Festuca ovina var. ovina), hard fescue (Festuca longifolia), hair fescue (Festucu capillata), tall fescue (Festuca arundinacea), meadow fescue (Festuca elatior), Arizona Fescue (Festuca arizonica), Foxtail Fescue (Festuca megalura), Idaho Fescue (Festuca idahoensis), Molate Fescue (Fescue rubra);
- the ryegrasses (Lolium spp.), such as annual ryegrass (Lolium multiflorum), perennial ryegrass (Lolium perenne), and italian ryegrass (Lolium multiflorum);
- the wheatgrasses (Agropyron spp.), such as crested wheatgrass (Agropyron cristatum), desert wheatgrass (Agropyron desertorum), western wheatgrass (Agropyron smithii), Intermediate Wheatgrass (Agropyron intermedium), Pubescent Wheatgrass (Agropyron trichophorum), Slender Wheatgrass (Agropyron trachycaulum), Streambank Wheatgrass (Agropyron riparium), Tall Wheatgrass (Agropyron elongatum), and Bluebunch Wheatgrass (Agropyron spicatum);
- beachgrass (Ammophila breviligulata);
- Brome grasses (Bromus spp.), such as Arizona Brome (Bromus arizonicus), California Brome (Bromus carinatus), Meadow Brome (Bromus biebersteinii), Mountain Brome (Bromus marginatus), Red Brome (Bromus rubens), and smooth bromegrass (Bromus inermis);
- cattails such as Timothy (Phleum pratense), and sand cattail (Phleum subulatum); orchardgrass (Dactylis glomerata);
- Alkaligrass (Puccinellia distans);
- crested dog's-tail (Cynosurus cristatus);
- Bermudagrass (Cynodon spp. such as Cynodon dactylon); hybrid bermudagrass such as tifdwarf bermudagrass, ultradwarf bermudagrass, tifgreen bermudagrass, tifsport bermudagrass, GN-1 bermudagrass, Ormond bermudagrass, and tifway bermudagrass;
- Zoysiagrasses (Zoysia spp.) such as Zoysia japonica, Zoysia matrella, and Zoysia tenuifolia;
- St. Augustinegrass (Stenotaphrum secundatum) such as Bitter Blue St. Augustinegrass, Seville St. Augustinegrass, Floratam St. Augustinegrass, Floralawn St. Augustinegrass, Floratine St. Augustinegrass, Raleigh St. Augustinegrass, and Texas Common St. Augustinegrass;
- Centipedegrass (Eremochloa ophiuroides);
- Carpetgrass (Axonopus fissifolius);
- Bahiagrass (Paspalum notatum);
- Kikuyugrass (Pennisetum clandestinum);
- Buffalograss (Buchloe dactyloids);
- Seashore paspalum (Paspalum vaginatum); Blue Grama (Bouteloua gracilis); Black Grama (Bouteloua eriopoda); Sideoats Grama (Bouteloua curtipendula);
- Sporobolus spp., such as Alkali Sacaton (Sporobolus airiodes);
- Sand Dropseed (Sporobolus cryptandrus), and Prairie Dropseed (Sporobolus heterolepis);
- Hordeum spp., such as California Barley (Hordeum californicum),
- Common Barley (Hordeum vulgare), and Meadow Barley (Hordeum brachyantherum);
- Alopecurus spp., such as Creeping Foxtail (Alopecurus arundinaceaus), and Meadow Foxtail (Alopecurus pratensis);
- Stipa spp., such as Needle & Thread (Stipa comata), Foothill Needlegrass (Stipa lepida), Green Needlegrass (Stipa viridula), Nodding Needlegrass (Stipa cernua), and Purple Needlegrass (Stipa pulchra);
- Elymus spp., such as Blue Wildrye (Elymus glaucus), Canada Wildrye (Elymus Canadensis), Creeping Wildrye (Elymus triticoides), and Russian Wildrye (Elymus junceus);
- Buffelgrass (Cenchrus ciliaris);
- Big Quaking Grass (Briza maxima);
- Big Bluestem (Andropogon gerardii),
- Little Bluestem (Schizachyruim scoparium, and Sand Bluestem (Andropogon hallii);
- Deergrass (Muhlenbergia rigens);
- Eastern Gamagrass (Tripsacum dactyloides);
- Galleta (Hilaria jamesii);
- Tufted Hairgrass (Deschampsia caespitosa);
- Indian Rice Grass (Oryzopsis hymenoides);
- Indian Grass (Sorghastrum nutans);
- Sand Lovegrass (Eragrostis trichodes); Weeping Lovegrass (Eragrostis curvula);
- California Melic (Melica californica);
- Prairie Junegrass (Koeleria pyramidata);
- Prairie Sandreed (Calamovilfa longifolia);
- Redtop (Agrostis alba);
- Reed Canarygrass (Phalaris arundinacea);
- Sloughgrass (Spartina pectinata);
- Green Sprangletop (Leptochloa dubia);
- Bottlebush Squirreltail (Sitanion hystrix);
- Panicum Switchgrass (virgatum); and
- Purple Threeawn (Aristida purpurea).

As used herein, the term "controlling infection of a plant by a biotic agent" means to diminish, ameliorate, or stabilize the infection and/or any other existing unwanted condition or side effect that is caused by the association of a pest organism with the plant include fungi, oomycetes, bacteria, viruses, viroids, virus-like organisms, phytoplasmas, protozoa, nematodes, parasitic plants and insects.

As used herein, the term "control a fungal pathogen of a plant" or "control a disease caused by a fungal pathogen" means to diminish, ameliorate, or stabilize the disaease and/or any other existing unwanted condition or side effect that is caused by the association of a fungal pathogen with the plant.

As used herein, the term "controlling infection of a plant by a fungal pathogen" means to diminish, ameliorate, or stabilize the infection and/or any other existing unwanted condition or side effect that is caused by the association of a fungal pathogen with the plant.

As used herein, the term "controlling a disease, condition, or injury caused by a pest of a plant") means to diminish, ameliorate, or stabilize the disease, condition, or injury and/or any other existing, unwanted condition(s) or side effect(s) that caused by the association of a pest of a plant with the plant.

As used herein, the term "pest of a plant" is used to refer to living organisms occurring on plants that are not desired to occur on plants or that cause injury or disease to plants. Examples include fungi, bacteria, viruses, spiders, ticks, mites, nematodes, gastropods and insects.

In certain implementations, the compositions, exhibit a synergistic response, for example in controlling a fungal pathogen in a crop plant. In certain implementations, the compositions may be synergistic fungicidal compositions for treating a fungal pathogen in crop plants. In selected implementations, the fungicidal compositions may exhibit a synergistic response, for example in controlling stem rusts in crop plants. As for example is suggested by Burpee and Latin (Plant Disease Vol. 92 No. 4, April 2008, 601-606), the term "synergy", "synergistic", or the like, may refer to the interaction of two or more agents so that their combined effect is greater than the sum of their individual effects, this may include, in the context of the invention, the action of two or more fungicidal agents in which the total response of a fungus to the fungicidal agent combination is greater than the sum of the individual components. Applying the approach to identifying synergy a set out in S.R. Colby, "Calculating synergistic and antagonistic responses of herbicide combinations", Weeds 15, 20-22 (1967), expected efficacy, E, may be expressed as: E=X+Y(100-X)/100, where X is the efficacy, expressed in % of the untreated control, of a first composition, and Y is the efficacy, expressed in % of the untreated control, of the second composition.

The details of one or more implementations of the methods described herein are set forth in the accompanying description below. Other features and advantages of the methods described herein will be apparent from the description and drawings, and from the claims.

### DESCRIPTION OF DRAWINGS

Figure 1 is a reference image of a leaf blade of a wheat plant displaying splotch blot disease after inoculation with Bipolaris sorokiniana without prior treatment with a fungicidal composition.
Figure 2 is an image of a leaf blade of a wheat plant inoculated with Bipolaris sorokiniana following the non-inventive foliar application of a fungicidal composition comprising Civitas™. Harmonizer™, and Folicur™ seven days before inoculation.
Figure 3 is an image of a leaf blade of a wheat plant inoculated with Bipolaris sorokiniana following soil drench application of a fungicidal composition comprising Civitas™ and Harmonizer™ seven days before inoculation.
Figure 4 is an image of a leaf blade of a wheat plant displaying splotch blot disease after inoculation with Puccinia triticina without prior treatment with a fungicidal composition.
Figure 5 is an image of a leaf blade of a wheat plant inoculated with Puccinia triticina following the non-inventive foliar application of a fungicidal composition comprising Civitas™. Harmonizer™, and Folicur™ seven days before inoculation.
Figure 6 is an image of a leaf blade of a wheat plant inoculated with Puccinia triticina following soil drench application of a fungicidal composition comprising Civitas™ and Harmonizer™ seven days before inoculation.

### DETAILED DESCRIPTION

This invention relates to methods for controlling a disease caused by fungi or bacteria in a plant or for increasing the amount of endophytic bacteria in the roots of a plant, which comprises applying a composition comprising a paraffinic oil and a metal phthalocyanine pigment to root tissue of the plant.

### I. Components

### [A] Conventional Chemical Fungicides and other active agents

In some implementations, the compositions include isomers such as geometrical isomers, optical isomers based on asymmetric carbon, stereoisomers and tautomers of the compounds described herein and are not limited by the description of the compounds for the sake of convenience.

**[1]** In some implementations, the conventional chemical fungicide is a DMI fungicide.

In certain implementations, the DMI fungicide is at least one fungicide selected from the group consisting of tetraconazole, tebuconazole, propioconazole, azaconazole, bitertanol, bromuconazole, cyproconazole, difenoconazole, diniconazole, epoxiconazole, etaconazole, fenbuconazole, fluquinconazole, flusilazole, flutriafol, hexaconazole, imibenconazole, ipconazole, metconazole, myclobutanil, penconazole, prothioconazole, simeconazole, triadimefon, triadimenol, triticonazole, imazalil, oxpoconazole, pefurazoate, prochloraz, triflumizole, fenarimol, nuarimol, triforine, and pyrifenox.

In certain implementations, the DMI fungicide is at least one fungicide selected from the group consisting of tetraconazole, tebuconazole, and propioconazole. Tetraconazole can be obtained commercially, for example, as a product identified as Domark^{™} (available from Valent). Tebuconazole can be obtained commercially, for example, as a product identified as Folicur^{™} (available from Bayer Crop Science). Propioconazole can be obtained commercially, for example, in the product identified as Quilt^{™} (available from Syngenta).

In other implementations, the DMI fungicides described herein can be synthesized using conventional techniques known in the art of synthetic organic chemistry.

In some implementations, the conventional chemical fungicide is a QoI fungicide.

In certain implementations, the QoI fungicide is at least one fungicide selected from the group consisting of pyraclostrobin, azoxystrobin, fluoxastrobin, trifloxystrobin, coumoxystrobin, dimoxystrobin, enoxastrobin, famoxadone, fenamidone, fenaminostrobin, flufenoxystrobin, kresoxim-methyl, metominostrobin, orysastrobin, pyraoxystrobin picoxystrobin, pyrametastrobin, pyribencarb, and triclopyricarb.

In certain implementations, the QoI fungicide is at least one fungicide selected from the group consisting of pyraclostrobin, azoxystrobin, fluoxastrobin, and trifloxystrobin.

In certain implementations, the QoI fungicide is at least one fungicide selected from the group consisting of pyraclostrobin and azoxystrobin.

In certain implementations, the QoI fungicide is methyl (2*E*)-2-{2-[(3-butyl-4-methyl-2-oxo-2*H*-chromen-7-yl)oxymethyl]phenyl}-3-methoxyacrylate (coumoxystrobin): CAS No. 850881-70-8.

In certain implementations, the QoI fungicide is (*E*)-2-(methoxyimino)-*N*-methyl-2-[α-(2,5-xylyloxy)-*o*-tolyl]acetamide (dimoxystrobin): CAS No. 149961-52-4.

In certain implementations, the QoI fungicide is enoxastrobin. In alternative implementations, the QoI fungicide may be, for example, (*RS*)-3-anilino-5-methyl-5-(4-phenoxyphenyl)-1,3-oxazolidine-2,4-dione (famoxadone): CAS No. 131807-57-3.

In certain implementations, the QoI fungicide is (*S*)-1-anilino-4-methyl-2-methylthio-4-phenylimidazolin-5-one (fenamidone): CAS No. 161326-34-7.

In certain implementations, the QoI fungicide is fenaminostrobin.

In certain implementations, the QoI fungicide is flufenoxystrobin.

In certain implementations, the QoI fungicide is methyl (*E*)-methoxyimino[α-(*o-*tolyloxy)-o-tolyl]acetate (kresoxim-methyl): CAS No. 143390-89-0.

In certain implementations, the QoI fungicide is (*E*)-2-(methoxyimino)-*N-*methyl-2-(2-phenoxyphenyl)acetamide (metominostrobin): CAS No. 133408-50-1.

In certain implementations, the QoI fungicide may be, for example, (2*E*)-2-(methoxyimino)-2-{2-[(3*E*,S*E*,6*E*)-5-(methoxyimino)-4,6-dimethyl-2,8-dioxa-3,7-diazanona-3,6-dien-1-yl]phenyl}-*N*-methylacetamide (orysastrobin): CAS No. 248593-16-0.

In certain implementations, the QoI fungicide is methyl (2*E*)-2-(2-{[3-(4-chlorophenyl)-1-methylpyrazol-5-yl]oxymethyl}phenyl)-3-methoxyacrylate (pyraoxystrobin): CAS No. 862588-11-2.

In certain implementations, the QoI fungicide is methyl (2*E*)-3-methoxy-2-{2-[6-(trifluoromethyl)-2-pyridyloxymethyl]phenyl}acrylate (picoxystrobin): CAS No. 117428-22-5.

In certain implementations, the QoI fungicide is pyrametastrobin.

In certain implementations, the QoI fungicide is methyl {2-chloro-5-[(1*E*)-1-(6-methyl-2-pyridylmethoxyimino)ethyl]benzyl}carbamate (pyribencarb): CAS No. 799247-52-2.

In certain implementations, the QoI fungicide is triclopyricarb.

In certain implementations, the QoI fungicide is carbamic acid, [2-[[[1-(4-chlorophenyl)-1*H*-pyrazol-3-yl]oxy]methyl]-phenyl]methoxy-,methyl ester (pyraclostrobin). Pyraclostrobin may be commercially available, for example, as a product identified as Insignia^{™} (available from BASF Corporation, 26 Davis Drive, Research Triangle Park, NC 27709).

In certain implementations, the QoI fungicide is methyl (E)-2-{2-[6-(2-cyano-phenoxy)pyrimidin-4-yloxy]phenyl}-3-methoxy-acrylate (azoxystrobin). Azoxystrobin may be commercially available, for example, as a product identified as Heritage^{™} (available from Syngenta Crop Protection, Inc., Greensboro, NC 27409).

In certain implementations, the QoI fungicide is [(1E)-[2-[[6-(2-chlorophenoxy)-5-fluoro-4-pyrimidinyl]oxy]phenyl]5,6-dihydro-1,4,2-dioxazin-3-yl]methanone-O-methyloxime] (fluoxastrobin). Fluoxastrobin may be commercially available, for example, as a product identified as Disarm^{™} (available from Arysta LifeScience North America, LLC, 15401 Weston Parkway, Suite 150, Cary, NC 27513).

In certain implementations, the QoI fungicide is benzeneacetic acid, (E,E)-alpha-(methoxyimino)-2((((1-(3-trifluoromethyl)phenyl)ethylidene)-amino)oxy)methyl)-,methyl ester (trifloxystrobin). Trifloxystrobin may be commercially available, for example, as a product identified as Compass^{™} (available from Bayer Environmental Science, 2T. W. Alexander Drive, Research Triangle Park, NC 27709).

In other implementations, the QoI fungicides described herein can be synthesized using conventional techniques known in the art of synthetic organic chemistry.

In some implementations, the other active agent is a Class B gibberellin biosynthesis inhibitor (plant growth regulator) that has formula V: 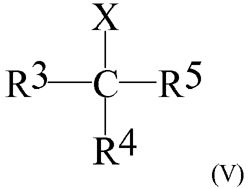 wherein:
R³ is 2-pyrazinyl, 3-pyridyl, or 5-pyrimidinyl;
R⁴ is phenyl, pyridyl, C₁-C₁₂ alkyl, or C₃-C₈ cycloalkyl;
R⁵ is trifluoromethoxyphenyl, tetrafluoroethoxyphenyl, pentafluoroethoxyphenyl, 3,4-(difluoromethylenedioxy)phenyl, or 2,2,4,4-tetrafluoro-1,3-benzodioxanyl; and
X is hydrogen, hydroxy, lower alkoxy, lower alkylthio, or lower alkanoyloxy;
or an acid addition salt thereof.

Examples of such compounds are described in in U.S. Patent No. 4,002,628.

In certain implementations, the compound of formula V is Flurprimidol (CAS No. 56425-91-3; Molecular Formula: C₁₅H₁₅F₃N₂O₂), which as the following chemical structure:

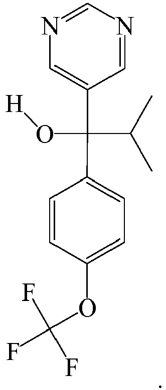

Flurprimidol is also known by the following synonyms:
- (*RS*)-2-methyl-1-pyrimidin-5-yl-1-(4-trifluoromethoxyphenyl)propan-1-ol;
- α-(1-methylethyl)-α-[4-(trifluoromethoxy)phenyl]-5-pyrimidinemethanol;
- alpha-isopropyl-alpha-(p-(trifluoromethoxy)phenyl)-5-pyrimidinemethanol;
- (RS)-2-methyl-1-pyrimidin-5-yl-1-(4-trifluoromethoxy)phenylpropan-2-ol;
- alpha-(1-methylethyl)-alpha-(4-(trifluoromethoxy)phenyl)-5-pyrimidinemethanol;
- 5-pyrimidinemethanol, alpha-(1-methylethyl)-alpha-(4-(trifluoromethoxy) phenyl)-; and
- 2-methyl-1-pyrimidin-5-yl-1-[4-(trifluoromethoxy)phenyl]propan-1-ol.

Flurprimidol can be obtained commercially, for example, as a product identified as Cutless^{™} (available from SePRO Corporation, Carmel, IN, USA); or synthesized using conventional techniques known in the art of synthetic organic chemistry.

In some implementations, the other active agent is a Class B gibberellin biosynthesis inhibitor (plant growth regulator) that has formula VI: 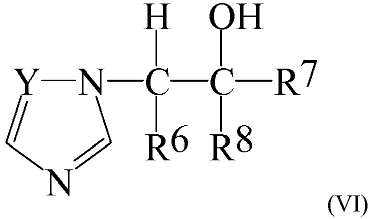 wherein:
R⁶ is alkenyl, alkynyl, or optionally substituted aralkyl;
Y is =N- or =C-;
R⁷ is cycloalkyl, alkyl, or haloalkyl; and
R⁸ is hydrogen, methyl or alkenyl;
or an ester, an ether, an acid addition salt or a metal complex thereof.

Examples of such compounds are described in in U.S. Patent No. 4,243,405.

In certain implementations, the compound of formula VI is Paclobutrazol (CAS No. 76738-62-0; Molecular Formula: C₁₅H₂₀ClN₃O), which as the following chemical structure:

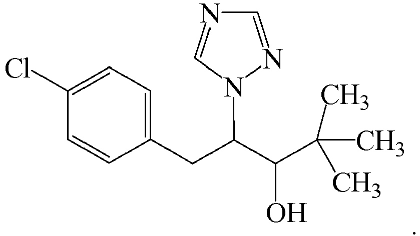

Paclobutrazol is also known by the following synonyms:
- (+/-)-R*,R*-beta-((4-chlorophenyl)methyl)-alpha-(1,1-dimethylethyl)-1H-1,2,4-triazol-1-ethanol;
- (R*,R*)-beta-[(4-chlorophenyl)methyl]-alpha(1,1-dimethylethyl)-1H-1,2,4-triazole-1-ethanol;
- (R*,R*)-β-[(4-chlorophenyl)methyl]-α-(1,1-dimethylethyl)-1H-1,2,4-triazole-1-ethanol;
- 1H-1,2,4-Triazole-1-ethanol, b-[(4-chlorophenyl)methyl]-a-(1,1-dimethylethyl)-, (R*,R*)-(+-)-;
- α-*tert*-butyl-β-(-chlorobenzyl)-1H-1,2,4-triazole-1-ethanol;
- (2RS,3RS)-1-(4-chlorophenyl)-4,4-dimethyl-2-(1H-1,2,4-triazol-1-yl)-pentane-3-ol;
- (α*R*,β*R*)-*rel*-β-[(4-chlorophenyl)methyl]-α-(1,1-dimethylethyl)-1*H-*1,2,4-triazole-1-ethanol;
- 1-(4-chloro-phenyl)-4,4-dimethyl-2-[1,2,4]triazol-1-yl-pentan-3-ol; and
- (R*,R*)-(+/-)-β-[(4-chlorophenyl)methyl]-α-(1,1dimethylethyl)-1H-1,2,4-triazole-1-ethanol;

Paclobutrazol can be obtained commercially, for example, as a product identified as Trimmit^{™} (available from Syngenta Crop Protection, Inc., Greensboro, NC, USA); or synthesized using conventional techniques known in the art of synthetic organic chemistry.

**[2]** In some implementations, the other chemical fungicide is methyl benzimidazole carbamate.

In some implementations, the other chemical fungicide is dicarboximide.

### [B] Paraffinic oil

The paraffinic oil confers properties (e.g., fungicidal properties) that are useful for promoting the health of a plant (e.g., crop plant). While not wishing to be bound by theory, it is believed that the paraffinic oil is able to provoke an induced systemic resistance (ISR) response, a systemic acquired resistance (SAR), or other defense response in a plant.

**[1]** In some implementations, the paraffinic oil includes an oil enriched in paraffin.

In certain implementations, the paraffinic oil includes a paraffin having from 12 carbon atoms to 50 carbon atoms (e.g., 12 carbon atoms to 40 carbon atoms, 16 carbon atoms to 35 carbon atoms, 12 carbon atoms to 21 carbon atoms; e.g., 16 carbon atoms to 35 carbon atoms).

In certain implementations, the paraffinic oil includes a paraffin having an average number of carbon atoms that is less than or equal to about 20 (e.g., 16).

In certain implementations, the paraffinic oil includes a paraffin having an average number of carbon atoms of from 16 to 30 e.g., 23 or 27).

In certain implementations, the paraffinic oil includes a paraffin having from 16 carbon atoms to 35 carbon atoms and an average number of carbon atoms of 23.

In certain implementations, the paraffin is an isoparaffin (e.g., a synthetic isoparaffin manufactured from two-stage Severe Hydrocracking/Hydroisomerization process).

In some implementations, a paraffin is present in the paraffinic oil in an amount, that is at least 80% (e.g., at least 90%, at least 99%).

**[2]** In some implementations, the paraffinic oil has been refined to remove compounds that are associated with plant injury, for example, aromatic compounds or compounds containing sulfur, nitrogen, or oxygen. In certain implementations, the paraffinic oil includes relatively low levels of aromatic compounds and/or compounds containing sulfur, nitrogen, or oxygen, e.g., less than 10 weight percent (less than 5 weight percent, less than 2 weight percent, less than 0.5 weight percent) of aromatic compounds and/or compounds containing sulfur, nitrogen, or oxygen.

**[3]** Non-limiting examples of suitable paraffinic oils include, HT60, HT100, High Flash Jet, LSRD, and N65DW (available from Petro-Canada, Calgary, AB, Canada).

### [C] Emulsifier

In some implementations, the compositions include both paraffinic oil, emulsifier, and water. It can be advantageous to store and/or apply such combinations as oil-in-water (O/W) emulsions.

Emulsions tend to be thermodynamically unstable due to excess free energy associated with the surface of the dispersed droplets such that the particles tend to flocculate (clumping together of dispersed droplets or particles) and subsequently coalesce (fusing together of agglomerates into a larger drop or droplets) to decrease the surface energy. If these droplets fuse, the emulsion will "break" (i.e., the phases will separate) destroying the emulsion, which in some cases can be detrimental to the storage shelf-life of the compositions. While not wishing to be bound by theory, it is believed that the addition of one (or more) emulsifying agents or emulsifiers can prevent or slow the "breaking" of an emulsion. As the skilled artisan will appreciate, the type and concentration of a particular emulsifying agent will depend, *inter alia*, on the emulsion phase components and the desired result.

**8293**In some implementations, the emulsifier is a "fast break" or "quick break"

In some implementations, the emulsifier is a "fast break" or "quick break" emulsifier. While not wishing to be bound by theory, it is believed that a "fast break" or "quick break" emulsifier allows the paraffinic oil to be quickly released from the O/W emulsion upon application to the turfgrass for contact, e.g., with a fungal pathogen. When a "fast break" or "quick break" emulsifier is present in a suitable amount (for example a selected proportion or ratio with respect to the paraffinic oil), the resulting "fast break" or "quick break" O/W emulsion quickly releases the oil phase upon application to the turfgrass. As such, there is less runoff of the O/W emulsion from the grass blades (as compared to more stable O/W emulsions) resulting in more oil adhering to the turfgrass for a longer period of time to more effectively contact and control, e.g., associated fungal pathogen. In certain implementations, the oil phase resides on the turfgrass for a period of not less than one hour. In certain implementations, the oil phase resides on the turfgrass for a period of from not less than 1 hour but not more than 30 days. In certain implementations, the "fast break" or "quick break" emulsion may be, for example, an emulsion having an oil phase that, after mixing with water, is reconstituted in 0.5 to 15 minutes according to the following test:
1. Fill 100mL graduated cylinder with tap water.
2. Add 1mL of emulsified oil.
3. Invert graduated cylinder 5 times.
4. Using a stop watch and human observation, measure how long it takes for the oil phase to reconstitute after inversion (step 3).

In some implementations, the oil phase is reconstituted in from 2 minutes to 5 minutes according to the test described above. In some instances, the "fast break" or "quick break" property of the O/W emulsion is balanced with the need to provide an O/W emulsion with a suitable shelf life under suitable storing conditions, and for a suitable timeframe.

**[2]** In some implementations, the emulsifier is (or includes) one (or more of the following) a natural or synthetic alcohol ethoxylate, an alcohol alkoxylate, an alkyl polysaccharide, a glycerol oleate, a polyoxyethylene-polyoxypropylene block copolymer, an alkyl phenol ethoxylate, a polymeric surfactant, a polyethylene glycol, a sorbitan fatty acid ester ethoxylate, or any combination thereof.

In certain implementations, the emulsifier is (or includes) a natural or synthetic alcohol ethoxylate, a polymeric surfactant, a sorbitan fatty acid ester, or any combination thereof.

In certain implementations, the natural or synthetic alcohol ethoxylate is a polyoxyethylene (4 to 12) lauryl ether (C12), polyoxyethylene (10) cetyl ether (C16), polyoxyethylene (10) stearyl ether (C18), polyoxyethylene (10) oleyl ether (C18 mono-unsaturated), a polyoxyethylene (2 to 11) C12-C15 alcohol, a polyoxyethylene (3 to 9) C11-C14 alcohol, a polyoxyethylene (9) C12-C14 alcohol, a polyoxyethylene (11) C16-C18 alcohol, a polyoxyethylene (20) C12-C15 alcohol, or any combination thereof. For example, the natural or synthetic alcohol ethoxylate can be a polyoxyethylene (4 to 7) lauryl ether (C12), polyoxyethylene (10) cetyl ether (C16), a polyoxyethylene (2 to 11) C12-C15 alcohol, a polyoxyethylene (3 to 9) C11-C14 alcohol, a polyoxyethylene (9) C12-C14 alcohol, or any combination thereof. As another example, the alcohol alkoxylate can be a butyl ether polyoxyethylene/polyoxypropylene block copolymer.

In certain implementations, the emulsifier is (or includes) an alkyl polysaccharide, e.g., a C8-C11 alkylpolysaccharide or any combination thereof.

In certain implementations, the emulsifier is (or includes) a glycerol oleate, e.g., a glycerol mono-, di-, tri-oleate, or any combination thereof.

In certain implementations, the emulsifier is (or includes) a polyoxyethylene-polyoxypropylene block copolymer, e.g., a polyoxyethylene-polyoxypropylene block copolymer having a molecular weight (or relative molar mass) of from 1100 to about 11400 and 10 to 80% (ethylene oxide) EO.

In certain implementations, the emulsifier is (or includes) an alkyl phenol ethoxylate, e.g., a nonyl phenol ethoxylate, a dodecyl phenol ethoxylate, or any combination thereof. For example, the nonyl phenol ethoxylate can be a polyoxyethylene (2 to 8) nonylphenol.

In certain implementations, the emulsifier is (or includes) a polymeric surfactant, e.g., a graft copolymer, a random copolymer, or any combination thereof. For example, the graft copolymer can be a polymethacrylic acid and acrylate with polyoxyethylene chains. For example, the random copolymer can be a random copolymer having ester and ether groups.

In certain implementations, the emulsifier is (or includes) a polyethylene glycol, e.g., a polyethylene glycol having a molecular weight ("MW") (or relative molar mass) of from 200 to 8000, e.g., MW 400 PEG dioleate; or MW600 PEG dioleate.

In certain implementations, the emulsifier is (or includes) a sorbitan fatty acid ester ethoxylate, e.g., polyoxyethylene (20) sorbitan tristearate, polyoxyethylene (20) sorbitan monooleate, polyoxyethylene (5) sorbitan monooleate, polyoxyethylene (20) sorbitan trioleate, or any combination thereof. For example, the sorbitan fatty acid ester can be a sorbitan tristearate, a sorbitan triolate, or any combination thereof.

In certain implementations, the emulsifier is (or includes) an alkyl phenol ethoxylate, a mixture of an ethoxylated alcohol and a glycerol oleate, or any combination thereof.

In certain implementations, the emulsifier is (or includes) a mixture of an ethoxylated alcohol and a glycerol oleate, e.g.: a C10 to C16 alcohol ethoxylate and a glycerol oleate combination; or polyoxyethylene lauryl ether, C10 to C16 alcohol ethoxylates, and glycerol oleate; or ethoxylated alcohols having primary C5-C20 carbon chains with an average of about 2 to about 7 ethoxylation groups, and a glycerol oleate; or a polyoxyethylene (11) C16-18 alcohol.

In certain implementations, the emulsifier is (or includes) a sorbitan tristearate.

Non-limiting examples of suitable emulsifiers include AL3149 (available from Uniqema), AL3313 (available from Uniqema), PC Emuls Green (available from Petro-Canada, Calgary, AB, Canada), Lutensol™ AT11 (available from BASF), SPAN65 (available from Uniqema), and S-MAZ^{™}65K (available from BASF).

**[3]** In some implementations, the weight ratio of the paraffinic oil to the emulsifier is from 10:1 to 500:1 (e.g., from 98:2 to 99.9:0.1, from 98:2 to 99.5:0.5). By way of example, the weight ratio of the paraffinic oil to the emulsifier can be 95:5, 98:2, 98.5:1.5, 99:1, 99.5:0.5.

### [D] Pigment

The compositions include metal phthalocyanine pigments. The pigments can provide color to the plant being treated (e.g., turf grass) and/or in some implementations, the pigment(s) and the paraffinic oil can exhibit a greater than additive effect in promoting the health of a plant (e.g., controlling a fungal pathogen of a plant; see, for example, WO 2009/155693).

In some implementations, the pigment is a water-based pigment dispersion.

In some implementations, the pigment is an oil-based pigment dispersion.

At least one of the pigments is a metal phthalocyanine compound.

In certain implementations, the pigment is a copper phthalocyanine.

In certain implementations, the copper phthalocyanine is a non-halogenated copper phthalocyanine, e.g., a nonchlorinated copper phthalocyanine. As an example, the pigment can be Phthalocyanine Blue BN (CAS 147-14-8).

In certain implementations, the copper phthalocyanine is a halogenated copper phthalocyanine. As an example, the pigment can be Phthalocyanine Green 6G (CAS 14302-13-7). As another example, the pigment can be polychlorinated (Cu II) phthalocyanine, such as Phthalocyanine Green G (CAS 1328-45-6 and 1328-53-6).

Non-limiting examples of suitable pigments include Sunsperse^{™} Green 7 (Pigment Green 7 dispersed in water, available from Sun Chemical Corp. Performance Pigments Cincinnati, OH, USA), Sunsperse^{™} EXP 006-102 and 006-95B (Pigment Green 7 dispersed in oil, available from Sun Chemical Corp. Performance Pigments, Cincinnati, OH, USA), and Pigment Green 7 powder (available from Hercules Exports, Mumbai, India).

### [E] Silicone Surfactant

In some implementations, it can be advantageous to further include one (or more) silicone surfactants in combinations that further include one or more pigments.

**[1]** In some implementations, the silicone surfactant is (or includes) a silicone polyether.

In certain implementations, the silicone surfactant is (or includes) a silicone polyether having a suitable alkoxy group with hydrogen end groups (H-capped), methyl end groups (CH₃-capped), or acetyl end groups (COCH₃-capped). In certain implementations, the silicone surfactant is (or includes) a trisiloxane having a suitable alkoxy group with hydrogen end groups (H-capped), methyl end groups (CH₃-capped), or acetyl end groups (COCH₃-capped).

In certain implementations, the silicone surfactant is (or includes) a silicone polyether of the formula I: 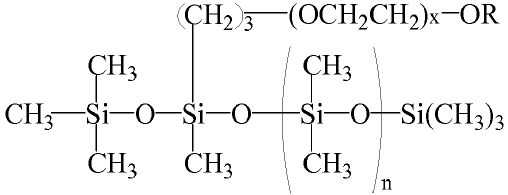 in which R is H, CH₃ or COCH₃; x is 1 to 24; and n is 0 or ≥ 1.

In certain implementations, the silicone surfactant is (or includes) a silicone polyether of the formula I wherein R = H; x = 1 to 24; and n = 0; e.g., a silicone polyether of the formula I wherein n = 0; x = 1 - 24; the average x = 8 - 10; and R = H.

In certain implementations, the silicone surfactant is (or includes) a silicone polyether of the formula I wherein R = H; x = 1 to 24; and n ≥ 1.

In certain implementations, the silicone surfactant is (or includes) a silicone polyether of the formula I wherein R = CH₃; x = 1 to 24; and n = 0.

In certain implementations, the silicone surfactant is (or includes) a silicone polyether of the formula I wherein R = CH₃; x = 1 to 24; and n ≥ 1.

In certain implementations, the silicone surfactant is (or includes) a silicone polyether of the formula I wherein R = COCH₃; x = 1 to 24; and n = 0; e.g., a silicone polyether of the formula I wherein n = 0; x = 1 - 24, the average x = 8 - 10; and R = COCH₃.

In certain implementations, the silicone surfactant is (or includes) a silicone polyether of the formula I wherein R = COCH₃; x = 1 to 24; and n ≥ 1.

In certain implementations, the silicone surfactant is (or includes) an H-capped dimethyl methyl (polyethylene oxide) silicone polymer; e.g., having a molecular weight (or relative molar mass) from 200 to 6000.

In certain implementations, the silicone surfactant is (or includes) a silicone polyether of the formula II: 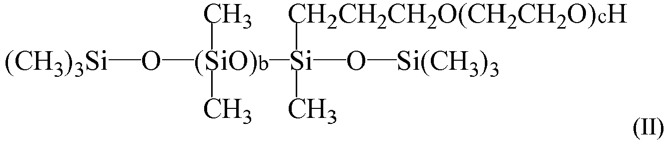 wherein c = 2 - 16; and b = 2 - 70. In certain implementations, the average b = 44. In certain implementations, the average c = 10. In certain implementations, the average b = 44, and the average c = 10.

In certain implementations, the silicone surfactant is (or includes) an H-capped trisiloxane, such as a silicone polyether of the formula III: 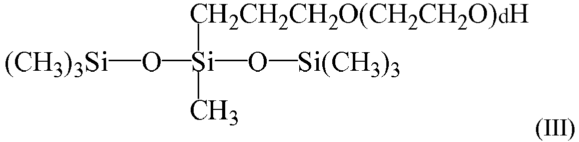 wherein d = 1- 24. In certain implementations, d = 1 - 20. In certain implementations, the average d = 8 - 10 (e.g., 8).

In certain implementations, the silicone surfactant is (or includes) a silicone copolyol, containing a hydrogen end group and one pendant polyethylene oxide group and has an average molecular weight between about 600 to about 1000 Daltons. In certain implementations, the silicone surfactant is (or includes) a trisiloxane with an ethoxylated alkyl group having a hydrogen end group (H-End); e.g., having a number of ethoxylation groups in the range of 1 - 20. In certain implementations, the silicone surfactant the silicone surfactant is (or includes) a methyl (propylhydroxide, ethoxylated) bis (trimethylsiloxy) silane; e.g., a dimethyl, methyl (polyethylene oxide) silicone polymer.

**[2]** In some implementations, commercial preparations of the silicone surfactants may or may not contain small amounts of polyethylene glycols (PEG) or other low molecular weight polydimethyl siloxanes (PDMS).

In some implementations, the silicone surfactant further includes a polyethylene glycol.

In certain implementations, the polyethylene glycol is (or includes) a polyethylene glycol of the formula IV:

R¹-O-(CH₂CH₂O)_{f}-R²

wherein R¹ = H or CH₂=CH-CH₂ or COCH₃; R² = H or CH₂=CH-CH₂ or COCH₃; and f ≥ 1.

In certain implementations, the polyethylene glycol has a relatively low molecular weight, e.g. from 300 Daltons to 1500 Daltons. In certain implementations, the polyethylene glycol is a low molecular weight polyethylene glycol allyl ether, such as a low molecular weight polyethylene glycol mono-allyl ether having an average molecular of from about 300 to about 600 Daltons and having from 1 to 20 moles of ethylene glycol with an average ethylene oxide unit (EO) of 8 to 10.

In certain implementations, the polyethylene glycol is (or includes) a polyethylene glycol of the formula IV wherein R¹ = CH₂=CH-CH₂, R² = H, and f = 1-20 with an average f = 8, a polyethylene glycol of the formula IV wherein R¹ = CH₂=CH-CH₂ or COCH₃, and R² = COCH₃, a polyethylene glycol of the formula IV wherein R¹ = CH₂=CH-CH₂, and R² = H, or any combination thereof.

In certain implementations, the polyethylene glycol is (or includes) a polyethylene glycol of the formula IV wherein R¹ = CH₂=CH-CH₂ or COCH₃, and R² = COCH₃, a polyethylene glycol of the formula IV wherein R¹ = CH₂=CH-CH₂, and R² = H, or any combination thereof.

In certain implementations, the polyethylene glycol is (or includes) a polyethylene glycol of the formula IV wherein R¹ = CH₂=CH-CH₂, R² = H, and f = 1-20 with an average f = 8.

In certain implementations, the polyethylene glycol is (or includes) a polyethylene glycol of the formula IV wherein R¹ = CH₂=CH-CH₂ or COCH₃, and R² = COCH₃.

In certain implementations, the polyethylene glycol is (or includes) a polyethylene glycol of the formula IV wherein R¹ = CH₂=CH-CH₂, and R² = H.

Non-limiting examples of suitable polyethylene glycols may include Polyglykol A500 (available from Clariant).

In certain implementations, the silicone surfactant includes from 10 to 30 weight percent of a polyethylene glycol as described anywhere herein.

**[3]** Non-limiting examples of suitable silicone surfactants may include Sylgard™ 309 (available from Dow Corning, Midland, MI, USA), Silfsurf™ A008-UP (available from Siltech Corp. Toronto, ON, Canada), Lambent MFF 199 SW (available from Lambent Technologies Corp., Gurnee, IL, USA), and Lambent MFF 159-100 (available from Lambent Technologies Corp., Gurnee, IL, USA).

### [F] Anti-Settling Agent

In some implementations, the composition can include one (or more) "anti-settling agents," which reduce the likelihood of having solids suspended in a dispersion from settling out under the influence of gravity.

In some implementations, the anti-setting agent is (or includes) a metal oxide and/or an organically modified clay.

In some implementations, the anti-setting agent is (or includes) a metal oxide.

In certain implementations, the anti-setting agent is (or includes) a fumed metal oxide and/or a precipitated metal oxide.

In certain implementations, the anti-setting agent is (or includes) one or more of the following forms of silica: precipitated silica (e.g., an untreated, precipitated silica) or fumed silica (e.g., an untreated, fumed silica). As used herein, the term "untreated fumed silica", or the like, is used to refer to a hydrophilic fumed silica. As used herein, the term "treated fumed silica", or the like, is used to refer to a hydrophobic fumed silica.

In some implementations, the anti-settling agent is (or includes) an organically modified clay. In certain implementations, the anti-setting agent is (or includes) one or more of the following organically modified clays: an organically modified smectite clay, an organically modified hectorite clay, an organically modified bentonite clay, an organically modified montmorillonite clay and an organically modified attapulgite clay.

In certain implementations, the organically modified clay is activated by a chemical activator.

In certain implementations, the chemical activator includes a low-molecular-weight polar organic compound, e.g., a least one compound selected from the group consisting of a low-molecular weight ketone, a low-molecular weight alcohol and propylene carbonate.

In certain implementations, the chemical activator includes water and at least one compound selected from the group consisting of a low-molecular weight ketone, a low-molecular weight alcohol and propylene carbonate.

In certain implementations, the chemical activator includes a low-molecular weight ketone; or a low-molecular weight ketone and water (such as a low molecular weight ketone and water in a weight ratio of 95/5). An example of a low-molecular weight ketone is acetone.

In certain implementations, the chemical activator includes a low-molecular weight alcohol; or a low-molecular weight alcohol and water (such as a low-molecular weight alcohol and water in a weight ratio of 95/5). Examples of low-molecular weight alcohols include methanol or ethanol.

In certain implementations, the chemical activator includes propylene carbonate; or propylene carbonate and water (such as, propylene carbonate and water in a weight ratio of 95/5).

### [G] Water

In some implementations, the compositions can further include water.

In some implementations, the pigment is dispersed in water before it is added to the remaining components of the composition (typically water is 1:1 weight percent with with pigment), resulting in, e.g., the presence of 3 parts per weight of water in the composition.

In some implementations, the composition can further include water, e.g., as a diluent, e.g., as a diluent added prior to application of the compositions to a plant (e.g., a turfgrass).

In some implementations, the compositions can further include both sources of water described above.

In some implementations the water is distilled water and/or other waters having a low mineral electrolyte content.

### [H] Other Components

In some implementations, the compositions further include one or more other components that are customary additives or adjuvants for the preparation of compositions in the field of crop protection and/or components that are inert (e.g., may not materially affect the activity and/or overall performance of the compositions) and/or one or more other active components. As an example, the compositions can further include customary additives or adjuvants that may be present in a commercially available conventional chemical fungicide.

In some implementations, the compositions include only compositions of the components set forth is sections **[A]** through **[G]** above.

In certain implementations, the compositions do not include one or more other components that are customary additives or adjuvants for the preparation of compositions in the field of crop protection and/or components that are inert (e.g., may not materially affect the activity and/or overall performance of the compositions) and/or one or more other active components that are other than conventional chemical fungicides.

In certain implementations, the compositions are free of one or more other components that are customary additives or adjuvants for the preparation of compositions in the field of crop protection and/or components that are inert (e.g., may not materially affect the activity and/or overall performance of the compositions) and/or one or more other active components that are other than conventional chemical fungicides; (e.g., the compositions contain less than 5%, less than 4%, less than 3%, less than 2%, less than 1% (w/w or w/v) of one or more other components that are customary additives or adjuvants for the preparation of compositions in the field of turf or field crop protection and/or components that are inert (e.g., may not materially affect the activity and/or overall performance of the compositions) and/or one or more other active components that are other than conventional chemical fungicides.

In some implementations, the compositions are substantially free of one or more other components that are customary additives or adjuvants for the preparation of compositions in the field of crop protection and/or components that are inert (e.g., may not materially affect the activity and/or overall performance of the compositions) and/or one or more other active components that are other than conventional chemical fungicides (e.g., the combinations contain less than 0.5%, less than 0.2, less than 0.1, less than 0.05% (w/w or w/v), do not include a detectable amount of one or more other components that are customary additives or adjuvants for the preparation of compositions in the field of turf or field crop protection and/or components that are inert (e.g., may not materially affect the activity and/or overall performance of the compositions) and/or one or more other that are other than conventional chemical fungicides.

### II. Non-limiting Combinations of Components

### [A] Combinations that include a single composition

**[1]** In some implementations, the composition is in the form of a single composition (e.g., contained within a storage pack or a vessel suitable for applying the composition to a plant, e.g., turf grass). These compositions are sometimes referred to herein (without limitation, e.g., as to quantity or application mode) as a 1-pack formulations or concentrates in the absence of water for dilution. The composition includes one (or more) paraffinic oil and a metal phthalocyanine pigment, which can include any one or more of the features described in any one or more of sections **[I][B][1], [I][B][2],** and **[I][B][3]** (i) or [I][D] (iii) above. In some implementations, the composition further includes (but is not limited to) one or more of the following:
(ii) one (or more) conventional chemical fungicides, which can include any one or more of the features described in any one or more of sections **[I][A][1]** and/or **[I][A][2]** (e.g., one or more DMI fungicides and/or one or more QoI fungicides);
(iii) one (or more) emulsifiers, which can include any one or more of the features described in any one or more of sections **[I][C][1], [I][C][2],** and **[I][C][3]** above;
(v) one (or more) silicone surfactants, which can include any one or more of the features described in any one or more of sections **[I][E][1], [I][E][2],** and **[I][E][3]** above;
(vi) one (or more) anti-settling agents, which can include any one or more of the features described in section **[I][D]** above; and
(vii) one (or more) components described in section **[I][H]**.

In some implementations, the composition includes (i) and (iii).

In some implementations, the composition includes (i), (iii), and (vi).

In some implementations, the composition includes (i), (iii), (iv), and (v).

In some implementations, the composition includes (i), (iii), (iv), (v), and (vi).

In some implementations, the composition includes (i), (ii), and (iii).

In some implementations, the composition includes (i), (ii), (iii), and (vi).

In some implementations, the composition includes (i), (ii), (iii), (iv), and (v).

In some implementations, the composition includes (i), (ii), (iii), (iv), (v), and (vi).

### Concentrates

[2] In some of the implementations described in section **[II][A][1]**, one or more of the following applies:
(**2-a**) the weight ratio of paraffinic oil to the emulsifier is from 10:1 to 500:1 (e.g., from 45:1 to 55:1, e.g., 49:1, 50:1);
(**2-b**) the weight ratio of paraffinic oil to the pigment is from 1:5 to 100:1 (e.g., from 25:1 to 35:1, e.g., 28:1, 30:1);
(**2-c**) the weight ratio of the pigment to the silicone surfactant is from 2:1 to 50:1 (e.g., from 3:1 to 6:1, e.g., 4.5:1);
(**2-d**) the weight ratio of paraffinic oil to the conventional chemical fungicide (e.g., one or more DMI fungicides and/or one or more QoI fungicides) is from 2:1 to 10000:1 (e.g., from 100:1 to 160:1; from 90:1 to 120:1, e.g., 111:1, 110:1; from 130:1 to 150:1, e.g., 139:1, 140:1).

In certain implementations, (**2-a**) applies; or (**2-a**), (**2-b**) and (**2-c**) apply; or (**2-b**), and (**2-c**) apply. In certain implementations, (**2-d**) further applies to any one of the above-listed combinations of (**2-a**), (**2-b**) and (**2-c**).

In some of the implementations described in section **[II][A][1],** one or more of the following applies:
(**2-aa**) the concentrate includes from 50 to 300 parts per weight (e.g., 200-300, e.g., 260; e.g., 50-150, e.g., 100) parts per weight of the paraffinic oil;
(**2-bb**) the concentrate includes from 1 to 10 parts per weight (e.g., 3-7, e.g., 5; e.g., 1-5, e.g., 1.9, e.g., 2) parts per weight of the emulsifier;
(**2-cc**) the concentrate includes from 1 to 15 parts per weight (e.g., 7-11, e.g., 9; e.g., 2-5, e.g., 3.5) parts per weight of the pigment;
(**2-dd**) the concentrate includes from 0.1 to 10 parts per weight (e.g., 0.5-1, e.g., 0.8, e.g., e.g., 2-5, e.g., 3.1) parts per weight of the silicone surfactant;
(**2-ee**) the concentrate includes from 0.5 to 20 parts per weight (e.g., 6-10, e.g., 8; e.g., 2-5, e.g., 3.1) parts per weight of the anti-settling agent; or
(**2-ff**) the concentrate includes from 0.01 to 10 parts per weight (e.g., 0.5-1, e.g., 0.8, e.g., e.g., 1-3, e.g., 2) parts per weight of the conventional chemical fungicide.

In certain implementations, (**2-aa**) and (**2-bb**) apply; or (**2-cc**) and (**2-dd**) apply; or (**2-aa**), (**2-bb**), and (**2-ff**) apply; or (**2-cc**), (**2-dd**), and (**2-ff**) apply; or (**2-aa**), (2**-bb**), (**2-cc**), and (**2-dd**) apply, or (**2-aa**), (**2-bb**), (**2-cc**), (**2-dd**), and (**2-ff**) apply. In certain implementations, (**2-ee**) further applies to each of the above-listed implementations.

In some implementations, any one or more of the features described in one or more of (**2-a**) and (**2-d**) can be combined with any one or more of the features described in one or more of (**2-aa**) and (**2-ff**).

In some implementations, the pigment is dispersed in compatible oil, e.g., a paraffinic oil, e.g., the same paraffinic oil as is used to provide the fungicidal properties as described herein, for addition to the other components of the compositions described herein. In certain implementations, a silicone surfactant and/or emulsifier and/or anti-settling agent can be included, e.g., to stabilize the pigment in the oil-based composition.

For example, polychlorinated Cu (II) phthalocyanine can be dispersed in a paraffinic oil, such as N65DW (available from Petro-Canada) to provide about 18% polychlorinated CU (II) phthalocyanine (SUNSPERSE(R) EXP 006-102, available from Sun Chemical Corp. Performance Pigments, Cincinnati, Ohio USA) prior to mixing with the remaining components. In certain implementations, a silicone surfactant and/or emulsifier and/or anti-settling agent can be included. While not wishing to be bound by theory, it is believed that the addition of these components can provide an intermolecular hydrophilic and lipophilic balance within the fungicidal formulation so as to substantially prevent the polychlorinated Cu (II) phthalocyanine from separating out of suspension during application, e.g., to a turf grass.

**[3]** In some of the implementations described in sections **[II][A][1]** and **[II][A][2]**, the composition further includes water. In certain implementations, weight percent ratio of the undiluted composition to water is from 1:1 to 1:100 (e.g., from 1-50, 1-30, 1-20, 1-15). In certain implementations, the weight percent of the paraffinic oil in the diluted compositions is from 2 to 50 weight percent (e.g., 15%). In certain implementations, the composition is in the form of an oil in water emulsion as described anywhere herein.

In some implementations, the pigment is dispersed in water for addition to the other components of the compositions described herein. In certain implementations, a silicone surfactant and/or emulsifier and/or anti-settling agent can be included, e.g., to stabilize the pigment in the oil/water-based composition.

For example, polychlorinated Cu (II) phthalocyanine can be dispersed in a water to provide about 40% polychlorinated CU (II) phthalocyanine (SUNSPERSE(R) GREEN 7, available from Sun Chemical Corp. Performance Pigments, Cincinnati, Ohio USA) prior to mixing with the remaining components. In certain implementations, a silicone surfactant and/or emulsifier and/or anti-settling agent can be included. While not wishing to be bound by theory, it is believed that the addition of these components can provide an intermolecular network so as to substantially prevent the polychlorinated Cu (II) phthalocyanine from separating out of suspension during application, e.g., to a turf grass.

### [B] Combinations that include two or more compositions

**[1]** In some implementations, the composition includes two or more separately contained (e.g., packaged) compositions, each containing one or more of the components described in sections **[I][A]-[I][F]** and **[I][H].** These implementations are sometimes referred to (as appropriate and without limitation, e.g., as to quantity or application mode) as 2-pack and 3-pack formulations, compositions, or concentrates in the absence of water for dilution.

In some implementations, the composition includes a first and separately contained composition and a second and separately contained composition, in which:
(1) the first and separately contained composition includes:
   - one (or more) paraffinic oils, which can include any one or more of the features described in any one or more of sections **[I][B][1], [I][B][2],** and **[I][B][3]** above;
   - one (or more) conventional chemical fungicides, which can include any one or more of the features described in any one or more of sections **[I][A][1]** and/or **[I][A][2]** (e.g., one or more DMI fungicides and/or one or more QoI fungicides); and
   - one (or more) emulsifiers, which can include any one or more of the features described in any one or more of sections **[I][C][1], [I][C][2],** and **[I][C][3]** above; and
(2) the second and separately contained composition includes:
   - one (or more) metal phthalocyanine pigments, which can include any one or more of the features described in section **[I][D]** above and
   - one (or more) silicone surfactants, which can include any one or more of the features described in any one or more of sections **[I][E][1], [I][E][2],** and **[I][E][3]** above.

In some implementations, the compositions includes a first and separately contained composition and a second and separately contained composition, in which:
(1) the first and separately contained composition includes:
   - one (or more) paraffinic oils, which can include any one or more of the features described in any one or more of sections **[I][B][1], [I][B][2],** and **[I][B][3]** above;
   - one (or more) emulsifiers, which can include any one or more of the features described in any one or more of sections **[I][C][1], [I][C][2],** and **[I][C][3]** above;
   - one (or more) metal phthalocyanine pigments, which can include any one or more of the features described in section **[I][D]** above;
   - one (or more) silicone surfactants, which can include any one or more of the features described in any one or more of sections **[I][E][1], [I][E][2],** and **[I][E][3]** above; and
   - one (or more) anti-settling agents, which can include any one or more of the features described in section **[I][D]** above; and
(2) the second and separately contained composition includes:
   - one (or more) conventional chemical fungicides, which can include any one or more of the features described in any one or more of sections **[I][A][1]** and/or **[I][A][2]** (e.g., one or more DMI fungicides and/or one or more QoI fungicides).

In some implementations, the composition includes a first and separately contained composition and a second and separately contained composition, in which:
(1) the first and separately contained composition includes:
   - one (or more) paraffinic oils, which can include any one or more of the features described in any one or more of sections **[I][B][1], [I][B][2],** and **[I][B][3]** above; and
   - one (or more) emulsifiers, which can include any one or more of the features described in any one or more of sections **[I][C][1], [I][C][2],** and **[I][C][3]** above;
(2) the second and separately contained composition includes:
   - one (or more) conventional chemical fungicides, which can include any one or more of the features described in any one or more of sections **[I][A][1]** and/or **[I][A][2]** (e.g., one or more DMI fungicides and/or one or more QoI fungicides);
   - one (or more) metal phthalocyanine pigments, which can include any one or more of the features described in section **[I][D]** above; and
   - one (or more) silicone surfactants, which can include any one or more of the features described in any one or more of sections **[I][E][1], [I][E][2]**, and **[I][E][3]** above.

In some implementations, the composition includes a first and separately contained composition and a second and separately contained composition, in which:
(1) the first and separately contained composition includes:
   - one (or more) paraffinic oils, which can include any one or more of the features described in any one or more of sections **[I][B][1], [I][B][2],** and **[I][B][3]** above; and
   - one (or more) emulsifiers, which can include any one or more of the features described in any one or more of sections **[I][C][1], [I][C][2],** and **[I][C][3]** above;
(2) the second and separately contained composition includes:
   - one (or more) metal phthalocyanine pigments, which can include any one or more of the features described in section **[I][D]** above; and
   - one (or more) silicone surfactants, which can include any one or more of the features described in any one or more of sections **[I][E][1], [I][E][2],** and **[I][E][3]** above.

In some implementations, the composition includes a first and separately contained composition, a second and separately contained composition, and a third and separately contained composition, wherein:
(1) the first and separately contained composition includes:
   - one (or more) paraffinic oils, which can include any one or more of the features described in any one or more of sections **[I][B][1], [I][B][2],** and **[I][B][3]** above; and
   - one (or more) emulsifiers, which can include any one or more of the features described in any one or more of sections **[I][C][1], [I][C][2],** and **[I][C][3]** above; and
(2) the second and separately contained composition includes:
   - one (or more) metal phthalocyanine pigments, which can include any one or more of the features described in section **[I][D]** above and
   - one (or more) silicone surfactants, which can include any one or more of the features described in any one or more of sections **[I][E][1], [I][E][2],** and **[I][E][3]** above.; and
(3) the third and separately contained composition includes:
   - one (or more) conventional chemical fungicides, which can include any one or more of the features described in any one or more of sections **[I][A][1]** and/or **[I][A][2]** (e.g., one or more DMI fungicides and/or one or more QoI fungicides).

### Component amounts in combinations having two or more composition (Concentrates)

[2] In some of the implementations described in section **[II][B][1],** one or more of the following applies:
(**2-aaa**) the weight ratio of paraffinic oil to the emulsifier is from 10:1 to 500:1 (e.g., from 45:1 to 55:1, e.g., 49:1, 50:1);
(**2-bbb**) the weight ratio of paraffinic oil in a composition to the pigment (in the same or a different composition) is from 1:5 to 100:1 (e.g., from 25:1 to 35:1, e.g., 28:1, 30:1);
(**2-ccc**) the weight ratio of the pigment to the silicone surfactant is from 2:1 to 50:1 (e.g., from 3:1 to 6:1, e.g., 4.5:1);
(**2-ddd**) the weight ratio of paraffinic oil in a composition to the weight ratio of paraffinic oil to the conventional chemical fungicide (e.g., one or more DMI fungicides and/or one or more QoI fungicides) in the same or a different composition is from 2:1 to 10,000:1 (e.g., from 100:1 to 160:1; from 90:1 to 120:1, e.g., 111:1, 110:1; from 130:1 to 150:1, e.g., 139:1, 140:1).

In certain implementations, (**2-aaa**) applies; or (**2-aaa**), (**2-bbb**) and (**2-ccc**) apply; or (**2-bbb**), and (**2-ccc**) apply. In certain implementations, (**2-ddd**) further applies to any one of the above-listed combinations of (**2-aaa**), (**2-bbb**) and (**2-ccc**).

In some of the implementations described in section **[II][B][1]**, one or more of the following applies:
(**2-aaaa**) the composition (concentrate) includes from 50 to 300 parts per weight (e.g., 100) parts per weight of the paraffinic oil;
(**2-bbbb**) the composition (concentrate) includes from 1 to 10 parts per weight (e.g., 1.9, e.g., 2) parts per weight of the emulsifier;
(**2-cccc**) the composition (concentrate) includes from 1 to 10 parts per weight (e.g., 3.5) parts per weight of the pigment;
(**2-dddd**) the composition (concentrate) includes from 0.1 to 10 parts per weight (e.g., 0.8) parts per weight of the silicone surfactant;
(**2-eeee**) the composition (concentrate) includes from 0.5 to 20 parts per weight (e.g., 3.1) parts per weight of the anti-settling agent; or
(**2-ffff**) the composition (concentrate) includes from 0.01 to 10 parts per weight (e.g., 0.8) parts per weight of the conventional chemical fungicide (e.g., one or more DMI fungicides and/or one or more QoI fungicides).

In certain implementations, (**2-aaaa**) and (**2-bbbb**) apply; or (**2-aaaa**) through (**2-eeee**) apply; or (**2-ffff**) applies; or (**2-cccc**), (**2-dddd**), and (**2-ffff**) apply; or (**2-cccc**) and (**2-dddd**) apply.

In certain implementations, (**2-aaaa**) through (**2-eeee**) apply in a composition (concentrate), and (**2-ffff**) applies in another composition (concentrate).

In certain implementations, (**2-aaaa**) and (**2-bbbb**) apply in a composition (concentrate), and (**2-cccc**), (**2-dddd**), and (**2-ffff**) apply in another composition (concentrate).

In certain implementations, (**2-aaaa**) and (**2-bbbb**) apply in a composition (concentrate), and (**2-cccc**) and (**2-dddd**) apply in another composition (concentrate).

In certain implementations, (**2-aaaa**) through (**2-eeee**) apply in a composition (concentrate), (**2-cccc**) and (**2-dddd**) apply in a second composition (concentrate), and (**2-ffff**) applies in a third composition (concentrate).

In some implementations, any one or more of the features described in one or more of (**2-aaa**) and (**2-ddd**) can be combined with any one or more of the features described in one or more of (**2-aaaa**) and (**2-ffff**).

In some of the implementations described in section **[II][B][1],** the second composition can further include water (e.g., resulting in a dispersion of the pigment in the water).

**[3]** In some of the implementations described in sections **[II][B][1]** and **[II][B][2]**, each of the compositions, independently, further includes water. In certain implementations, the combination of compositions (concentrates) described above are combined and diluted with water ((e.g., volume of the diluted end product is 935.4 to 7483.2 L/ha , e.g. 1870.8 to 3741.6 L/ha (100 to 800 gal/acre, e.g., 200 to 400 gal/acre)). In certain implementations, oil in the end product is from 80 to 640 oz/acre (other components can be calculated based on ratio with oil).
**[C]** As the skilled artisan will appreciate, the weight percent of a given component(s) can vary, e.g., due to dilution with water or whether the composition is in the form of a single composition or two or more separately contained compositions. In some implementations, the weight ratio of any two or more components is essentially the same regardless of whether the compositionis in the form of a single composition (diluted with water or undiluted) or in the form two or more separately contained compositions (diluted with water or undiluted). In the latter case, this can be achieved by adjusting the component amounts in each of the separately contained compositions to match, for example, a weight percent ratio employed in single composition combination.

### III. Application of Compositions

### [A]

In some implementations, the compositions described herein can be applied by contacting the surface of the growing medium with a composition as described anywhere herein (e.g., by pouring), contacting an area that is beneath the surface of the growing medium with a compositionas described anywhere herein, or any combination thereof.

In some implementations, the compositionscan be applied to a growing medium that is in proximity to a base and root system of the plant, wherein the amount of the composition that is applied to the growing medium is sufficient to penetrate the growing medium and contact the root tissue for uptake by the plant.

In certain implementations, the growing medium (e.g., soil) can include any surface of the growing medium that is from 0cm (0 inches) to 183cm (six feet) (e.g., 0cm (0 inches) to 152cm (five feet), 0cm (0 inches) to 122cm (four feet), 0cm (0 inches) to 91cm (three feet), 0cm (0 inches) to 61cm (two feet), 0cm (0 inches) to 30cm (12 inches), 0cm (0 inches) to 15cm (six inches), 0cm (0 inches) to 2,5cm (one inch), 0cm (0 inches) to 1.25cm (0.5 inch) from the base of the plant and any growing medium that is from 0cm (0 inches to 61 cm (24 inches) beneath said surface of the growing medium. In other implementations, the length of the surface of the growing medium can be determined on the basis of the height of the plant, e.g., can correspond to the shade radius of the plant (i.e., the distance around the plant that is shaded during daylight hours due to the height of the plant).

In certain implementations, when the plant is a tree, the compositions can be applied to the trunk of the tree.

In general, the compositions are applied in an amount that is greater than the amount, which would contact the growing medium by run-off after spraying the ariel portions of the plant with the same amount of the compositions.

For example, the plant can be a crop plant (e.g., wheat, barley, soybean, tomatoes, potatoes, or corn, or any combination thereof; e.g., wheat or tomatoes). In certain implementations, the compositionsfurther includes from 50 to 99 parts per weight of water (e.g., the composition can be an oil-in-water emulsion). In certain implementations, the compositions can be applied at a rate of from 935.4 to 7483.2 L/ha (e.g. 1870.8 to 3741.6 L/ha) (100 gal/acre to 800 gal/acre (e.g., 200 gal/acre to 400 gal/acre)). In certain implementations, the compositions further include from 50 to 99 parts per weight of water (e.g., the composition can be an oil-in-water emulsion), and the compositions can be applied at a rate of from 935.4 to 7483.2 L/ha (e.g. 1870.8 to 3741.6 L/ha) (100 gal/acre to 800 gal/acre (e.g., 200 gal/acre to 400 gal/acre)). In certain implementations, the oil can be applied at a rate of from 1 gal/acre to 20 gal/acre.

As another example, the plant can be a tree (e.g., a maple tree, a citrus tree, an apple tree, a pear tree, an oak tree, an ash tree, a pine tree, or a spruce tree, or any combination thereof; e.g., a maple tree). In certain implementations, the compositions further includes from 5 to 99 parts per weight of water (e.g., the composition can be an oil-in-water emulsion). In certain implementations, the oil can be added at a rate of from 1 oz to 2 gallons of the compositions per inch of tree diameter. In certain implementations, the composition further includes from 5 to 99 parts per weight of water (e.g., the composition can be an oil-in-water emulsion), and the oil can be added at a rate of from 29.6ml (1 oz) to 7.561 (2 gallons) of the combinations (e.g., compositions, e.g., fungicidal compositions) per inch of tree diameter.

In some implementations, the compositions can be applied over a time period of at least ten seconds (e.g., at least five seconds, at least two seconds).

In some implementations, the aerial exterior portion of the plant is free (e.g., contains less than 5%, or 4%, or 3%, or 2%, or 1%, or 0%) of the compositionsduring application of the composition to the root tissue. In certain implementations, the composition is not applied to any aerial portion of the plant during application of the compositions to the root tissue.

In some implementations, the aerial exterior portion of the plant is free (e.g., contains less than 5%, or 4%, or 3%, or 2%, or 1%, or 0%) of the compositions. In certain implementations, the composition is not applied to any aerial portion of the plant.

In some implementations, the method can further include applying one or more conventional chemical fungicides to the plant (e.g., .the one or more conventional chemical fungicides can be applied to an aerial portion of the plant).

In some implementations, applying is carried out by soil drenching (e.g., by pouring the combinations described herein as a bolus on the surface of the growing medium or soaking a plant tray in the combinations described herein, e.g., root bathing).

In some implementations, applying is carried out by drip irrigation.

In some implementations, applying is carried out by soil injection.

In some implementations, the compositionsmay be reapplied as required.

In some implementations, the method can further include adding water (e.g.,to the growing medium) after the composition has been applied. In certain implementations, the methods can further include "watering in" the compositions. For example, the compositionscan be applied first to a growing medium (e.g., soil) and then watered in with, e.g., 0.5 to 2 inches of water.

In some implementations, the compositions include both paraffinic oil and water. It is advantageous to apply such combinations as oil-in-water (O/W) emulsions. In some implementations, an oil-in-water emulsion is prepared by a process that includes combining the paraffinic oil, water, and any other components and the paraffinic oil and applying shear until the emulsion is obtained.

In other implementations, the compositions can include two or more separately contained (e.g., packaged) compositions, each containing one or more of the above-mentioned components. Said compositions can be combined and applied to to an area of the growing medium with or without prior dilution with water; or each composition can be applied separately to the same to an area of the growing medium either simultaneously or sequentially, and each independently applied with or without prior dilution with water.

In the above-described implementations, application of any one (or more) compositions can be repeated one or more times.

### [B]

In some implementations, the pest is any one or more of the following (or any combination thereof): fungus or fungior one or more bacteria.

In certain implementations, the pest is any one or more of the following (or any combination thereof): *Colletotrichum cereale, Rhizoctonia solani,* the fungus that causes crown rust, *Sclerotinia homoeocarpa, Microdochium nivale, Pyricularia grisea, Drechslera spp., Biopolaris spp., Leptosphaeria korrae, Erysiphe graminis, Laetisaria fuciformis, Typhula ishikariensis, Typhula incarnate, Microdochium nivale,* the fungus that causes southern blight, *Ophiosphaerella korrae, Magnaporthe poae, Pythium* spp., *Limonomyces roseipellis, Rhizoctonia cerealis, Sclerophthora macrospora, Ustilago striiformi, Gaeumannomyces graminis* var. *avenae, Puccinia* spp., *Ascochyta spp.* In certain implementations, the pest is any one or more of the following (or any combination thereof): *Colletotrichum cereale, Rhizoctonia solani,* the fungus that causes crown rust, *Sclerotinia homoeocarpa, Microdochium nivale, Pyricularia grisea, Drechslera spp., Biopolaris spp., Leptosphaeria korrae, Erysiphe graminis, Laetisaria fuciformis, Typhula ishikariensis, Typhula incarnate, Microdochium nivale,* the fungus that causes southern blight, *Ophiosphaerella korrae, Magnaporthe poae, Pythium* spp., *Limonomyces roseipellis, Rhizoctonia cerealis, Sclerophthora macrospora, Ustilago striiformi, Gaeumannomyces graminis* var. *avenae, Puccinia* spp., or *Ascochyta spp.*

In certain implementations, the pest is any one or more of the following (or any combination thereof): a fungus that causes anthracnose, a fungus that causes brown patch, a fungus that causes dollar spot, a fungus that causes gray leaf spot, a fungus that causes crown rust, a fungus that causes fusarium patch, a fungus that causes large patch of zoysia, a fungus that causes leaf spot, a fungus that causes necrotic ring, a fungus that causes powdery mildew, a fungus that causes red thread, a fungus that causes pink snow mold, a fungus that causes grey snow mold, a fungus that causes southern blight, a fungus that causes spring dead spot, a fungus that causes summer patch, a fungus that causes yellow turf, a fungus that causes pythium foliar blight, a fungus that causes pink patch, a fungus that causes leaf blight, a fungus that causes yellow patch, a fungus that causes downey mildew, a fungus that causes pythium blight, a fungus that causes rusts, a fungus that causes stripe smut, a fungus that causes summer leaf spot, a fungus that causes take-all patch and a fungus that causes microdochium patch.

In certain implementations, the pest is any one or more of the following (or any combination thereof): a fungus that causes anthracnose, a fungus that causes brown patch, a fungus that causes crown rust, a fungus that causes dollar spot, a fungus that causes fusarium patch, a fungus that causes gray leaf spot, a fungus that causes large patch of zoysia, a fungus that causes leaf spot, a fungus that causes melting-out, a fungus that causes necrotic ring, a fungus that causes powdery mildew, a fungus that causes red thread, a fungus that causes grey snow mold, a fungus that causes pink snow mold, a fungus that causes southern blight, a fungus that causes spring dead spot and a fungus that causes summer patch.

### [C]

In some implementations, the plant is a tree (e.g., a maple tree, a citrus tree, an apple tree, a pear tree, an oak tree, an ash tree, a pine tree, or a spruce tree, or any combination thereof; e.g., a maple tree).

In some implementations, the plant is monocotyledonous. In certain implementations, the monocotyledonous plant is of the order Poaceae. In certain implementations, the plant is of the genus Triticum, Secale, Hordeum, Oryza, Zea, or Elymus.

In some implementations, the plant is dicotyledonous. In certain implementations, the plant is of the order Fabaceae. In certain implementations, the plant is of the species Glycine max.

In some implementations, the plant is a turf grass.

In certain implementations, the turf grass is one or more of: bentgrass, fine-leaf fescue, poa annua, tall fescue, seashore paspalum, Bermudagrass, zoysiagrass, bahiagrass, centipedegrass, or St. Augustinegrass.

In certain implementations, the turf grass is one or more of: bentgrass, bluegrass, ryegrass, fescue, bermudagrass, bahiagrass, zoysia, beachgrass, wheatgrass or carpetgrass.

In certain implementations, the turf grass is one or more of: creeping bentgrass, colonial bentgrass, perennial ryegrass, annual ryegrass, Kentucky bluegrass, common bermudagrass, hybrid bermudagrass, annual bluegrass, seashore paspalum, St. Augustinegrass, tall fescue, bahiagrass, zoysiagrass, centipedegrass, rough stalk bluegrass, buffalo grass, blue grama, or annual bentgrass.

In certain implementations, the turf grass is one or more of: creeping bentgrass or annual bluegrass.

In some implementations, the plant is a "crop plant."

In certain implementations, the crop plant is sugar cane, wheat, rice, corn (maize), potatoes, sugar beets, barley, sweet potatoes, cassava, soybeans, tomatoes, legumes (beans and peas).

In certain implementations, the crop plant is wheat, barley, oat, soybeans, and corn.

In certain implementations, the crop plant is wheat, barley, and/or oat.

In certain implementations, the crop plant is soybeans.

In certain implementations, the crop plant is corn.

### [D]

In some implementations, the plant disease is maple tar spot.

In some implementations, the plant disease is Asian Citrus Psyllid (ACP) / Huanglongbing (HLB), or Citrus cancer. In other implementations, the plant disease is one or more of those listed in http://www.cdfa.ca.gov/plant/PDEP/target_pests.html; http://www.fs.fed.us/r6/nr/fid/wo-fidls/fidls-title.shtml; or http://tidcf.nrcan.gc.ca/home).

In some implementations, the plant disease is bacterial spot and/or bacterial speck.

In some implementations, the plant disease may be caused by, for example, a fungal pathogen, e.g., *Sclerotinia homoeocarpa, Colletotrichum cereale, Rhizoctonia solani, Microdochium nivale, Pyricularia grisea, Rhizoctonia solani, Drechslera spp., Biopolaris spp, Leptosphaeria korrae, Erysiphe graminis, Laetisaria fuciformis, Typhula ishikariensis, Typhula incarnate, Ophiosphaerella korrae, Magnaporthe poae,* or a combination thereof. In certain implementations, the fungal pathogen is *Sclerotinia homoeocarpa.*

In some implementations, the turfgrass disease may be, for example, dollar spot, anthracnose, brown patch, crown rust, fusarium patch, gray leaf spot, large patch of zoysia, leaf spot/melting-out, necrotic ring, powdery mildew, red thread, grey snow mold, pink snow mold, southern blight, spring dead spot, summer patch, or a combination thereof.

In certain implementations, the plant disease may be, for example, at least one plant disease selected from the group consisting of anthracnose, brown patch, crown rust, dollar spot, fusarium patch, gray leaf spot, large patch of zoysia, leaf spot, melting-out, necrotic ring, powdery mildew, red thread, grey snow mold, pink snow mold, southern blight, spring dead spot, summer patch, yellow patch, downy mildew/yellow tuft, stripe smut, take-all patch, microdochium patch, rusts, yellow turf, leaf blight, summer leaf spot, pythium foliar blight disease, pink patch and pythium blight.

In certain implementations, the plant disease may be, for example, at least one plant disease selected from the group consisting of anthracnose, brown patch, crown rust, dollar spot, fusarium patch, gray leaf spot, large patch of zoysia, leaf spot, melting-out, necrotic ring, powdery mildew, red thread, grey snow mold, pink snow mold, southern blight, spring dead spot and summer patch.

In certain implementations, the fungal pathogen is a fungus that blights leaf tissue in a turfgrass.

In certain implementations, the fungal pathogen is a fungus that causes dollar spot in a turf grass.

In some implementations, the fungal pathogen may be, for example, *Gymnosporangium juniperi-virginianae,* Cronartium ribicola, Hemileia vastatrix *Puccinia graminis,* Puccinia coronata, Puccinia hemerocallidis, Puccinia persistens subsp. Triticina, Puccinia sriiformis, Puccinia triticina, Phakopsora meibomiae, Phakopsora pachyrhizi, Uromyces phaseoli, Uromyces appendeculatus, Fusarium graminearum, Bipolaris sorokiniana, or a combination thereof. In alternative implementations, the fungal disease may be, for example: cedar-apple rust, which attacks, for example, apple and pear and hawthorn); white pine blister rust, which attacks, for example, white pines and currants; coffee rust, which attacks, for example, the coffee plant; wheat stem rust, which attacks, for example, Kentucky bluegrass, barley, and wheat; crown rust, which attacks, for example, oats and ryegrass; soybean rust, which attacks, for example, soybean and various legumes; leaf rust, which attacks, for example, wheat; bean rust which attacks, for example, bean; Daylily rust, which attacks, for example, Daylily; wheat rust in grains, also known as "brown" or "red rust'); "yellow" or "stripe rust", which attacks, for example, wheat; spot blotch, which attacks, for example, wheat; and Fusarium head blight, which attacks, for example, wheat.

In alternative implementations, the fungal pathogen may be, for example, a fungus that blights leaf tissue in a crop plant. In selected implementations, the crop plant pathogen is the fungal pathogen *Gymnosporangium juniperi-virginianae,* and the disease may be, for example, cedar-apple rust. In alternative implementations, the crop plant pathogen is the fungal pathogen Cronartium ribicola, and the disease may be, for example, white pine blister rust. In selected implementations, the crop plant pathogen is the fungal pathogen, and the disease may be, for example, coffee rust. In alternative implementations, the crop plant pathogen is the fungal pathogen Puccinia graminis, and the disease may be, for example, wheat stem rust. In selected implementations, the crop plant pathogen is the fungal pathogen Puccinia coronata, and the disease may be, for example, crown rust. In alternative implementations, the crop plant pathogen is the fungal pathogen Phakopsora meibomiae or Phakospora pachyrhizi, and the disease may be, for example, soybean rust. In alternative implementations, the crop plant pathogen is the fungal pathogen Uromyces phaseoli, and the disease may be, for example, bean rust. In selected implementations, the crop plant pathogen is the fungal pathogen Puccinia hemerocallidis, and the disease may be, for example, Daylily rust. In alternative implementations, the crop plant pathogen is the fungal pathogen Puccinia persistens subsp. triticina, and the disease may be, for example, brown rust or red rust. In selected implementations, the crop plant pathogen is the fungal pathogen Puccinia sriiformis, and the disease may be, for example, yellow rust or strip rust. In alternative implementations, the crop plant pathogen is the fungal pathogen Uromyces appendeculatus, and the disease may be, for example, bean rust. In selected implementations, the crop plant pathogen is the fungal pathogen *Puccinia triticina,* and the disease may be, for example, leaf rust. In alternative implementations, the crop plant fungal pathogen is Fusarium graminearum and the disease may be, for example, Fusarium head blight. In selected implementations, the crop plant pathogen is the fungal pathogen Bipolaris sorokiniana, and the disease may be, for example, spot blotch.

In various additional implementations wherein the crop plant is wheat, the fungal pathogen may be any one of the fungal pathogens listed in the right hand column of Table 1, and the disease may be the corresponding disease of wheat listed in the left column of Table 1.

**Table 1. Fungal diseases of wheat.**

| **Disease** | **Causative fungal pathogen(s)** |
|---|---|
| Alternaria leaf blight | *Alternaria triticina* |
| Anthracnose | *Colletotrichum graminicola* |
| | *Glomerella graminicola* [teleomorph] |
| Ascochyta leaf spot | *Ascochyta tritici* |
| Aureobasidium decay | *Microdochium bolleyi* |
| | *= Aureobasidium bolleyi* |
| Black head molds = sooty molds | *Alternaria* spp. |
| | *Cladosporium* spp. |
| | *Epicoccum* spp. |
| | *Sporobolomyces* spp. |
| | *Stemphylium* spp. and other genera |
| Cephalosporium stripe | *Hymenula cerealis* |
| | *= Cephalosporium gramineum* |
| | *Tilletia tritici = Tilletia caries Tilletia laevis = Tilletia foetida* |
| Common bunt = stinking smut | |
| | |
| | |
| Common root rot | *Cochliobolus sativus* [teleomorph] |
| | *Bipolaris sorokiniana* [anamorph] |
| | *= Helminthosporium sativum* |
| Cottony snow mold | *Coprinus psychromorbidus* |
| Crown rot = foot rot, seedling blight, dryland root rot | *Fusarium* spp. |
| | *Fusarium pseudograminearum* |
| | *Gibberella zeae* |
| | *Fusarium graminearum* Group II [anamorph] |
| | *Gibberella avenacea* |
| | *Fusarium avenaceum* [anamorph] |
| | *Fusarium culmorum* |
| Dilophospora leaf spot = twist | *Dilophospora alopecuri* |
| Downy mildew = crazy top | *Sclerophthora macrospora* |
| Dwarf bunt | *Tilletia controversa* |
| Ergot | *Claviceps purpurea* |
| | *Sphacelia segetum* [anamorph] |
| Eyespot = foot rot, strawbreaker | *Tapesia yallundae* |
| | *Ramulispora herpotrichoides* [anamorph] |
| | *= Pseudocercosporella herpotrichoides W-pathotype* |
| | *Tapesia acuformis* |
| | *Ramulispora acuformis* [anamorph] |
| | *= Pseudocercosporella herpotrichoides var. acuformis R-pathoytpe* |
| False eyespot | *Gibellina cerealis* |
| Flag smut | *Urocystis agropyri* |
| Foot rot = dryland foot rot | *Fusarium* spp. |
| Halo spot | *Pseudoseptoria donacis* |
| | *= Selenophoma donacis* |
| Karnal bunt = partial bunt | *Tilletia indica* |
| | *= Neovossia indica* |
| Leaf rust = brown rust | *Puccinia triticina* |
| | *= Puccinia recondita f.sp. tritici* |
| | *Puccinia tritici-duri* |
| Leptosphaeria leaf spot | *Phaeosphaeria herpotrichoides* |
| | *= Leptosphaeria herpotrichoides* |
| | *Stagonospora* sp. [anamorph] |
| Loose smut | *Ustilago tritici* |
| | *= Ustilago segetum var. tritici* |
| | *Ustilago segetum var. nuda* |
| | *Ustilago segetum var. avenae* |
| Microscopica leaf spot | *Phaeosphaeria microscopica* |
| | *= Leptosphaeria microscopica* |
| Phoma spot | *Phoma* spp. |
| | *Phoma glomerata* |
| | *Phoma sorghina* |
| | *= Phoma insidiosa* |
| Pink snow mold = Fusarium patch | *Microdochium nivale* |
| | *= Fusarium nivale* |
| | *Monographella nivalis* [teleomorph] |
| Platyspora leaf spot | *Clathrospora pentamera* |
| | *= Platyspora pentamera* |
| Powdery mildew | *Erysiphe graminis f.sp. tritici* |
| | *Blumeria graminis* |
| | *= Erysiphe graminis* |
| | *Oidium monilioides* [anamorph] |
| Pythium root rot | *Pythium aphanidermatum* |
| | *Pythium arrhenomanes* |
| | *Pythium graminicola* |
| | *Pythium myriotylum* |
| | *Pythium volutum* |
| Rhizoctonia root rot | *Rhizoctonia solani* |
| | *Thanatephorus cucumeris* [teleomorph] |
| Ring spot = Wirrega blotch | *Pyrenophora seminiperda* |
| | *= Drechslera campanulata* |
| | *Drechslera wirreganensis* |
| Scab = head blight | *Fusarium* spp. |
| | *Gibberella zeae* |
| | *Fusarium graminearum* Group II [anamorph] |
| | *Gibberella avenacea* |
| | *Fusarium avenaceum* [anamorph] |
| | *Fusarium culmorum* |
| | *Microdochium nivale* |
| | *= Fusarium nivale* |
| | *Monographella nivalis* [teleomorph] |
| Sclerotinia snow mold = snow scald | *Myriosclerotinia borealis* |
| | *= Sclerotinia borealis* |
| Sclerotium wilt (see Southern blight) | *Sclerotium rolfsii* |
| | *Athelia rolfsii* [teleomorph] |

In various additional embodiments wherein the crop plant is of the genus Zea, the

| | |
|---|---|
| Septoria blotch | *Septoria tritici* |
| | *Mycosphaerella graminicola* [teleomorph] |
| Sharp eyespot | *Rhizoctonia cerealis* |
| | *Ceratobasidium cereale* [teleomorph] |
| Snow rot | *Pythium* spp. |
| | *Pythium aristosporum* |
| | *Pythium iwayamae* |
| | *Pythium okanoganense* |
| Southern blight = Sclerotium base rot | *Sclerotium rolfsii* |
| | *Athelia rolfsii* [teleomorph] |
| Speckled snow mold = gray snow mold or Typhula blight | *Typhula idahoensis* |
| | *Typhula incarnata* |
| | *Typhula ishikariensis* |
| | *Typhula ishikariensis var. canadensis* |
| Spot blotch | *Cochliobolus sativus* [teleomorph] |
| | *Bipolaris sorokiniana* [anamorph] |
| | *= Helminthosporium sativum* |
| Stagonospora blotch | *Phaeosphaeria avenaria f.sp. triticae* |
| | *Stagonospora avenae f.sp. triticae* [anamorph] |
| | *= Septoria avenae f.sp. triticea* |
| | *Phaeosphaeria nodorum* |
| | *Stagonospora nodorum* [anamorph] |
| | *= Septoria nodorum* |
| Stem rust = black rust | *Puccinia graminis* |
| | *= Puccinia graminis f*.*sp*. *tritici* (Ug99) |
| Storage molds | *Aspergillus* spp. |
| | *Penicillium* spp. |
| | and others |
| Stripe rust = yellow rust | *Puccinia striiformis* |
| | *Uredo glumarum* [anamorph] |
| Take-all | *Gaeumannomyces graminis var. tritici* |
| | *Gaeumannomyces graminis var*. *avenae* |
| Tan spot = yellow leaf spot, red smudge | *Pyrenophora tritici-repentis* |
| | *Drechslera tritici*-*repentis* [anamorph] |
| Tar spot | *Phyllachora graminis* |
| | *Linochora graminis* [anamorph] |
| Wheat Blast | *Magnaporthe grisea* |
| Zoosporic root rot | *Lagena radicicola* |
| | *Ligniera pilorum* |
| | *Olpidium brassicae* |
| | *Rhizophydium graminis* |

fungal pathogen may be any one of the fungal pathogens listed in the right hand column of Table 2, and the disease may be the corresponding disease of wheat listed in the left column of Table 2.

**Table 2. Fungal diseases of maize.**

| **Disease** | **Causative fungal pathogen** |
|---|---|
| | *Colletotrichum graminicola* |
| Anthracnose leaf blight | *Glomerella graminicola* [teleomorph] |
| Anthracnose stalk rot | *Glomerella tucumanensis* |
| | *Glomerella falcatum* [anamorph] |
| Aspergillus ear and kernel rot | *Aspergillus flavus* |
| Banded leaf and sheath spot | *Rhizoctonia solani* = *Rhizoctonia microsclerotia* |
| | *Thanatephorus cucumeris* [teleomorph] |
| Black bundle disease | *Acremonium strictum* = *Cephalosporium acremonium* |
| Black kernel rot | *Lasiodiplodia theobromae* = *Botryodiplodia theobromae* |
| Borde blanco | *Marasmiellus* sp. |
| Brown spot | *Physoderma maydis* |
| Black spot | |
| Stalk rot | |
| Cephalosporium kernel rot | *Acremonium strictum* = *Cephalosporium acremonium* |
| Charcoal rot | *Macrophomina phaseolina* |
| Corticium ear rot | *Thanatephorus cucumeris* = *Corticium sasakii* |
| | *Curvularia clavata* |
| | *Curvularia eragrostidis* = *Curvularia maculans* |
| | *Cochliobolus eragrostidis* [teleomorph] |
| | *Curvularia inaequalis* |
| | *Curvularia intermedia* |
| Curvularia leaf spot | *Cochliobolus intermedius* [teleomorph] |
| | *Curvularia lunata* |
| | *Cochliobolus lunatus* [teleomorph] |
| | *Curvularia pallescens* |
| | *Cochliobolus pallescens* [teleomorph] |
| | *Curvularia senegalensis* |
| | *Curvularia tuberculata* |
| | *Cochliobolus tuberculatus* [teleomorph] |
| Didymella leaf spot | *Didymella exitalis* |
| Diplodia ear rot and stalk rot | *Diplodia frumenti* |
| | *Botryosphaeria festucae* [teleomorph] |
| Diplodia ear rot | |
| Stalk rot | *Diplodia maydis* |
| Seed rot | |
| Seedling blight | |
| Diplodia leaf spot or leaf streak | *Stenocarpella macrospora* = *Diplodia macrospora* |
| Brown stripe downy mildew | *Sclerophthora rayssiae* |
| Crazy top downy mildew | *Sclerophthora macrospora* = *Sclerospora macrospora* |
| Green ear downy mildew | *Sclerospora graminicola* |
| Graminicola downy mildew | |
| Java downy mildew | *Peronosclerospora maydis* = *Sclerospora maydis* |
| Philippine downy mildew | *Peronosclerospora philippinensis* = *Sclerospora philippinensis* |
| Sorghum downy mildew | *Peronosclerospora sorghi* = *Sclerospora sorghi* |
| Spontaneum downy mildew | *Peronosclerospora spontanea* = *Sclerospora spontanea* |
| Sugarcane downy mildew | *Peronosclerospora sacchari* = *Sclerospora sacchari* |
| Dry ear rot | *Nigrospora oryzae* |
| Cob, kernel and stalk rot | *Khuskia oryzae* [teleomorph] |
| | *Alternaria alternata* = *Alternaria tenuis* |
| | *Aspergillus glaucus* |
| | *Aspergillus niger* |
| | *Aspergillus* spp. |
| | *Botrytis cinerea* |
| | *Botryotinia fuckeliana* [teleomorph] |
| Ear rots, minor | *Cunninghamella* sp. |
| | *Curvularia pallescens* |
| | *Doratomyces stemonitis* = *Cephalotrichum stemonitis* |
| | *Fusarium culmorum* |
| | *Gonatobotrys simplex* |
| | *Pithomyces maydicus* |
| | *Rhizopus microsporus* |
| | *Rhizopus stolonifer* = *Rhizopus nigricans* |
| | *Scopulariopsis brumptii* |
| Ergot | *Claviceps gigantea* |
| Horse's tooth | *Sphacelia* sp. [anamorph] |
| Eyespot | *Aureobasidium zeae* = *Kabatiella zeae* |
| Fusarium ear and stalk rot | *Fusarium subglutinans* = *Fusarium moniliforme* |
| Fusarium kernel, root and stalk rot, seed rot and seedling blight | *Fusarium moniliforme* |
| | *Gibberella fujikuroi* [teleomorph] |
| Fusarium stalk rot | *Fusarium avenaceum* |
| Seedling root rot | *Gibberella avenacea* [teleomorph] |
| Gibberella ear and stalk rot | *Gibberella zeae* |
| | *Fusarium graminearum* [anamorph] |
| Gray ear rot | *Botryosphaeria zeae* = *Physalospora zeae* |
| | *Macrophoma zeae* [anamorph] |
| Gray leaf spot | *Cercospora sorghi* = *Cercospora sorghi* |
| Cercospora leaf spot | *Cercospora zeae-maydis* |
| Helminthosporium root rot | *Exserohilum pedicellatum* = *Helminthosporium pedicellatum* |
| | *Setosphaeria pedicellata* [teleomorph] |
| Hormodendrum ear rot Cladosporium rot | *Cladosporium cladosporioides* = *Hormodendrum cladosporioides* |
| | *Cladosporium herbarum* |
| | *Mycosphaerella tassiana* [teleomorph] |
| Hyalothyridium leaf spot | *Hyalothyridium maydis* |
| Late wilt | *Cephalosporium maydis* |
| | *Alternaria alternata* |
| | *Ascochyta maydis* |
| | *Ascochyta tritici* |
| | *Ascochyta zeicola* |
| | *Bipolaris victoriae* = *Helminthosporium victoriae* |
| | *Cochliobolus victoriae* [teleomorph] |
| | *Cochliobolus sativus* |
| | *Bipolaris sorokiniana* [anamorph] = *Helminthosporium* |
| | *sorokinianum* = *H. sativum* |
| | *Epicoccum nigrum* |
| Leaf spots, minor | *Exserohilum prolatum* = *Drechslera prolata* |
| | *Setosphaeria prolata* [teleomorph] |
| | *Graphium penicillioides* |
| | *Leptosphaeria maydis* |
| | *Leptothyrium zeae* |
| | *Ophiosphaerella herpotricha* |
| | *Scolecosporiella* sp. [anamorph] |
| | *Paraphaeosphaeria michotii* |
| | *Phoma* sp. |
| | *Septoria zeae* |
| | *Septoria zeicola* |
| | *Septoria zeina* |
| Northern corn leaf blight | *Setosphaeria turcica* |
| White blast | *Exserohilum turcicum* [anamorph] = *Helminthosporium turcicum* |
| Crown stalk rot | |
| Stripe | |
| Northern corn leaf spot | *Cochliobolus carbonum* |
| Helminthosporium ear rot (race 1) | *Bipolaris zeicola* [anamorph] = *Helminthosporium carbonum* |
| Penicillium ear rot | *Penicillium* spp. |
| | *Penicillium chrysogenum* |
| Blue eye | *Penicillium expansum* |
| Blue mold | *Penicillium oxalicum* |
| Phaeocytostroma stalk rot and root rot | *Phaeocytostroma ambiguum* = *Phaeocytosporella zeae* |
| Phaeosphaeria leaf spot | *Phaeosphaeria maydis* = *Sphaerulina maydis* |
| Physalospora ear rot | *Botryosphaeria festucae* = *Physalospora zeicola* |
| Botryosphaeria ear rot | *Diplodia frumenti* [anamorph] |
| Purple leaf sheath | Hemiparasitic bacteria and fungi |
| Pyrenochaeta stalk rot and root rot | *Phoma terrestris* = *Pyrenochaeta terrestris* |
| Pythium root rot | *Pythium* spp. |
| | *Pythium arrhenomanes* |
| | *Pythium graminicola* |
| Pythium stalk rot | *Pythium aphanidermatum = Pythium butleri* |
| Red kernel disease | *Epicoccum nigrum* |
| Ear mold, leaf and seed rot | |
| Rhizoctonia ear rot | *Rhizoctonia zeae* |
| Sclerotial rot | *Waitea circinata* [teleomorph] |
| Rhizoctonia root rot and stalk rot | *Rhizoctonia solani* |
| | *Rhizoctonia zeae* |
| | *Alternaria alternata* |
| | *Cercospora sorghi* |
| | *Dictochaeta fertilis* |
| | *Fusarium acuminatum Gibberella acuminata* [teleomorph] |
| | *Fusarium equiseti* |
| | *Gibberella intricans* [teleomorph] |
| | *Fusarium oxysporum* |
| | *Fusarium pallidoroseum* |
| Root rots, minor | *Fusarium poae* |
| | *Fusarium roseum* |
| | *Gibberella cyanogena* |
| | *Fusarium sulphureum* [anamorph] |
| | *Microdochium bolleyi* |
| | *Mucor* sp. |
| | *Periconia circinata* |
| | *Phytophthora cactorum* |
| | *Phytophthora drechsleri* |
| | *Phytophthora nicotianae* |
| | *Rhizopus arrhizus* |
| Rostratum leaf spot Helminthosporium leaf disease, ear and stalk rot | *Setosphaeria rostrata = Helminthosporium rostratum* |
| Rust, common corn | *Puccinia sorghi* |
| Rust, southern corn | *Puccinia polysora* |
| Rust, tropical corn | *Physopella pallescens* |
| | *Physopella zeae = Angiopsora zeae* |
| Sclerotium ear rot | *Sclerotium rolfsii* |
| Southern blight | *Athelia rolfsii* [teleomorph] |
| | *Bipolaris sorokiniana* |
| | *Bipolaris zeicola* = *Helminthosporium carbonum* |
| | *Diplodia maydis* |
| | *Exserohilum pedicillatum* |
| | *Exserohilum turcicum = Helminthosporium turcicum* |
| | *Fusarium avenaceum* |
| | *Fusarium culmorum* |
| | *Fusarium moniliforme* |
| Seed rot-seedling blight | *Gibberella zeae* |
| | *Fusarium graminearum* [anamorph] |
| | *Macrophomina phaseolina* |
| | *Penicillium* spp. |
| | *Phomopsis* spp. |
| | *Pythium* spp. |
| | *Rhizoctonia solani* |
| | *Rhizoctonia zeae* |
| | *Sclerotium rolfsii* |
| | *Spicaria* spp. |
| Selenophoma leaf spot | *Selenophoma* sp. |
| Sheath rot | *Gaeumannomyces graminis* |
| Shuck rot | *Myrothecium gramineum* |
| Silage mold | *Monascus purpureus* |
| | *Monascus ruber* |
| Smut, common | *Ustilago zeae* = *Ustilago maydis* |
| Smut, false | *Ustilaginoidea virens* |
| Smut, head | *Sphacelotheca reiliana* = *Sporisorium holci-sorghi* |
| Southern corn leaf blight and stalk rot | *Cochliobolus heterostrophus* |
| | *Bipolaris maydis* [anamorph] = *Helminthosporium maydis* |
| Southern leaf spot | *Stenocarpella macrospora = Diplodia macrospora* |
| | *Cercospora sorghi* |
| | *Fusarium episphaeria* |
| | *Fusarium merismoides* |
| | *Fusarium oxysporum* |
| | *Fusarium poae* |
| Stalk rots, minor | *Fusarium roseum* |
| | *Fusarium solani* |
| | *Nectria haematococca* [teleomorph] |
| | *Fusarium tricinctum* |
| | *Mariannaea elegans* |
| | *Mucor* spp. |
| | *Rhopographus zeae* |
| | *Spicaria* spp. |
| Storage rots | *Aspergillus* spp. |
| | *Penicillium* spp. and other fungi |
| Tar spot | *Phyllachora maydis* |
| Trichoderma ear rot and root rot | *Trichoderma viride* = *Trichoderma lignorum* |
| | *Hypocrea* sp. [teleomorph] |
| White ear rot, root and stalk rot | *Stenocarpella maydis* = *Diplodia zeae* |
| Yellow leaf blight | *Ascochyta ischaemi* |
| | *Phyllosticta maydis* |
| | *Mycosphaerella zeae-maydis* [teleomorph] |
| Zonate leaf spot | *Gloeocercospora sorghi* |

In various additional embodiments wherein the crop plant is barley, the fungal pathogen may be any one of the fungal pathogens listed in the right hand column of Table 3, and the disease may be the corresponding disease of wheat listed in the left column of Table 3.

**Table 3. Fungal diseases of barley.**

| **Disease** | **Causative fungal pathogen(s)** |
|---|---|
| Anthracnose^{[1]} | *Colletotrichum cereale Manns* |
| Barley stripe | *Pyrenophora graminea* |
| | *= Drechslera graminea* |
| Cephalosporium stripe | *Hymenula cerealis* |
| | *= Cephalosporium gramineum* |
| Common root rot, crown rot and seedling blight | *Cochliobolus sativus* |
| | *= Bipolaris sorokiniana* |
| | *Fusarium culmorum* |
| | *Fusarium graminearum* |
| | *Gibberella zeae* [teleomorph] |
| Downy mildew | *Sclerophthora rayssiae* |
| Dwarf bunt | *Tilletia controversa* |
| Ergot | *Claviceps purpurea* |
| | *Sphacelia segetum* [anamorph] |
| Eyespot | *Pseudocercosoporella herpotrichoides* |
| | *Tapesia yallundae* [teleomorph] |
| Halo spot | *Pseudoseptoria donacis* |
| | *= Selenophoma donacis* |
| Kernel blight = black point | *Alternaria* spp. |
| | *Arthrinium arundinis*^{[2]} |
| | *Apiospora montagnei* [teleomorph] |
| | *Cochliobolus sativus* |
| | *Fusarium spp.* |
| Ascochyta leaf spot^{[1][3]} | *Ascochyta hordei* |
| | *Ascochyta graminea* |
| | *Ascochyta sorghi* |
| | *Ascochyta tritici* |
| Net blotch | *Drechslera teres* |
| | *Pyrenophora teres* [teleomorph] |
| Net blotch (spot form) | *Drechslera teres f*. *maculata* |
| Powdery mildew | *Erysiphe graminis f.sp. hordei* |
| | *= Blumeria graminis* |
| | *Oidium monilioides* [anamorph] |
| Pythium root rot | *Pythium* spp. |
| | *Pythium arrhenomanes* |
| | *Pythium graminicola* |
| | *Pythium tardicrescens* |
| Rhizoctonia root rot | *Rhizoctonia solani* |
| | *Thanatephorus cucumeris* [teleomorph] |
| Crown rust | *Puccinia coronata var*. *hordei* |
| Leaf rust | *Puccinia hordei* |
| Stem rust | *Puccinia graminis f*.*sp*. *secalis* |
| | *Puccinia graminis f*.*sp*. *tritici* |
| Stripe rust = yellow rust | *Puccinia striiformis f. sp. hordei* |
| Scab = head blight | *Fusarium* spp. |
| | *Fusarium graminearum* |
| Scald | *Rhynchosporium secalis* |
| Septoria speckled leaf blotch | *Septoria passerinii* |
| | *Stagonospora avenae f.sp. triticae* |
| Sharp eyespot | *Rhizoctonia cerealis* |
| | *Ceratobasidium cereale* [teleomorph] |
| Covered smut | *Ustilago hordei* |
| False loose smut | *Ustilago nigra* |
| | = Ustilago avenae |
| Loose smut | *Ustilago nuda* |
| | *= Ustilago tritici* |
| Gray snow mold = Typhula blight | *Typhula incarnata* |
| | *Typhula ishikariensis* |
| Pink snow mold = Fusarium patch | *Microdochium nivale* |
| | *= Fusarium nivale* |
| | *Monographella nivalis* [teleomorph] |
| Speckled snow mold | *Typhula idahoensis* |
| Snow rot | *Pythium iwayamae* |
| | *Pythium okanoganense* |
| | *Pythium paddicum* |
| Snow scald = Sclerotinia snow mold | *Myriosclerotinia borealis* |
| | *= Sclerotinia borealis* |
| Southern blight | *Sclerotium rolfsii* |
| | *Athelia rolfsii* [teleomorph] |
| Spot blotch | *Cochliobolus sativus* |
| | *Drechslera teres* [anamorph] |
| Stagonospora blotch | *Stagonospora avenae f.sp. triticae* |
| | *Phaeosphaeria avenaria f.sp. triticae* [teleomorph] |
| | *Stagonospora nodorum* |
| | *= Septoria nodorum* |
| | *Phaeosphaeria nodorum* [teleomorph] |
| Take-all | *Gaeumannomyces graminis var tritici* |
| Tan spot | *Pyrenophora tritici-repentis* |
| | *= Pyrenophora trichostoma* |
| | *Drechslera tritici*-*repentis* [anamorph] |
| | *= Helminthosporium tritici-repentis* |
| Verticillium wilt^{[4][5]} | *Verticillium dahliae* |
| Wirrega blotch | *Drechslera wirreganensis* |

In various additional embodiments wherein the crop plant is rice, the fungal pathogen may be any one of the fungal pathogens listed in the right hand column of Table 4, and the disease may be the corresponding disease of wheat listed in the left column of Table 4.

**Table 4. Fungal diseases of rice.**

| **Disease** | **Causative fungal pathogen(s)** |
|---|---|
| Aggregate sheath spot | *Ceratobasidium oryzae-sativae* |
| | *Rhizoctonia oryzae*-*sativae* [anamorph] |
| Black kernel | *Curvularia lunata* |
| | *Cochliobolus lunatus* [teleomorph] |
| Blast (leaf, neck [rotten neck], nodal and collar) | *Pyricularia grisea* |
| | *= Pyricularia oryzae* |
| | *Magnaporthe grisea* [teleomorph] |
| Brown spot | *Cochliobolus miyabeanus* |
| | *Bipolaris oryzae* [anamorph] |
| Crown sheath rot | *Gaeumannomyces graminis* |
| Downy mildew | *Sclerophthora macrospora* |
| Eyespot | *Drechslera gigantea* |
| False smut | *Ustilaginoidea virens* |
| Kernel smut | *Tilletia barclayana* |
| | *= Neovossia horrida* |
| Leaf smut | *Entyloma oryzae* |
| Leaf scald | *Microdochium oryzae* |
| | *= Rhynchosporium oryzae* |
| Narrow brown leaf spot | *Cercospora janseana* |
| | *= Cercospora oryzae* |
| | *Sphaerulina oryzina* [teleomorph] |
| Pecky rice (kernel spotting) | Damage by many fungi including |
| | *Cochliobolus miyabeanus* |
| | *Curvularia* spp. |
| | *Fusarium spp.* |
| | *Microdochium oryzae* |
| | *Sarocladium oryzae* |
| | and other fungi. |
| Root rots | *Fusarium* spp. |
| | *Pythium* spp. |
| | *Pythium dissotocum* |
| | *Pythium spinosum* |
| Seedling blight | *Cochliobolus miyabeanus* |
| | *Curvularia* spp. |
| | *Fusarium* spp. |
| | *Rhizoctonia solani* |
| | *Sclerotium rolfsii* |
| | *Athelia rolfsii* [teleomorph] |
| | and other pathogenic fungi. |
| Sheath blight | *Thanatephorus cucumeris* |
| | *Rhizoctonia solani* [anamorph] |
| Sheath rot | *Sarocladium oryzae* |
| | *= Acrocylindrium oryzae* |
| Sheath spot | *Rhizoctonia oryzae* |
| Stackburn (Alternaria leaf spot) | *Alternaria padwickii* |
| Stem rot | *Magnaporthe salvinii* |
| | *Sclerotium oryzae* [synanamorph] |
| Water-mold (seed-rot and seedling disease) | *Achlya conspicua* |
| | *Achlya klebsiana* |
| | *Fusarium* spp. |
| | *Pythium* spp. |
| | *Pythium dissotocum* |
| | *Pythium spinosum* |

In various additional embodiments wherein the crop plant is soybean, the fungal pathogen may be any one of the fungal pathogens listed in the right hand column of Table 5, and the disease may be the corresponding disease of wheat listed in the left column of Table 5.

**Table 5. Fungal diseases of soybean.**

| **Disease** | **Causative fungal pathogen(s)** |
|---|---|
| Alternaria leaf spot | *Alternaria* spp. |
| Anthracnose | *Colletotrichum truncatum* |
| | *Colletotrichum dematium f. truncatum* |
| | *Glomerella glycines* |
| | *Colletotrichum destructivum* [anamorph] |
| Black leaf blight | *Arkoola nigra* |
| Black root rot | *Thielaviopsis basicola* |
| | *Chalara elegans* [synanamorph] |
| Brown spot | *Septoria glycines* |
| | *Mycosphaerella usoenskajae* [teleomorph] |
| Brown stem rot | *Phialophora gregata* |
| | *= Cephalosporium gregatum* |
| Charcoal rot | *Macrophomina phaseolina* |
| Choanephora leaf blight | *Choanephora infundibulifera* |
| | *Choanephora trispora* |
| Damping-off | *Rhizoctonia solani* |
| | *Thanatephorus cucumeris* [teleomorph] |
| | *Pythium aphanidermatum* |
| | *Pythium debaryanum* |
| | *Pythium irregulare* |
| | *Pythium myriotylum* |
| | *Pythium ultimum* |
| Downy mildew | *Peronospora manshurica* |
| Drechslera blight | *Drechslera glycines* |
| Frogeye leaf spot | *Cercospora sojina* |
| Fusarium root rot | *Fusarium* spp. |
| Leptosphaerulina leaf spot | *Leptosphaerulina trifolii* |
| Mycoleptodiscus root rot | *Mycoleptodiscus terrestris* |
| Neocosmospora stem rot | *Neocosmospora vasinfecta* |
| | *Acremonium* spp. [anamorph] |
| Phomopsis seed decay | *Phomopsis* spp. |
| Phytophthora root and stem rot | *Phytophthora sojae* |
| Phyllosticta leaf spot | *Phyllosticta sojaecola* |
| Phymatotrichum root rot = cotton root rot | *Phymatotrichopsis omnivora* |
| | *= Phymatotrichum omnivorum* |
| Pod and stem blight | *Diaporthe phaseolorum Phomopsis sojae* [anamorph] |
| Powdery mildew | *Microsphaera diffusa* |
| Purple seed stain | *Cercospora kikuchii* |
| Pyrenochaeta leaf spot | *Pyrenochaeta glycines* |
| Pythium rot | *Pythium aphanidermatum* |
| | *Pythium debaryanum* |
| | *Pythium irregulare* |
| | *Pythium myriotylum* |
| | *Pythium ultimum* |
| Red crown rot | *Cylindrocladium crotalariae* |
| | *Calonectria crotalariae* [teleomorph] |
| Red leaf blotch = Dactuliophora leaf spot | *Dactuliochaeta glycines* |
| | *= Pyrenochaeta glycines* |
| | *Dactuliophora glycines* [synanamorph] |
| Rhizoctonia aerial blight | *Rhizoctonia solani* |
| | *Thanatephorus cucumeris* [teleomorph] |
| Rhizoctonia root and stem rot | *Rhizoctonia solani* |
| Rust | *Phakopsora pachyrhizi* |
| Scab | *Spaceloma glycines* |
| Sclerotinia stem rot | *Sclerotinia sclerotiorum* |
| Southern blight (damping-off and stem rot) = Sclerotium blight | *Sclerotium rolfsii* |
| | *Athelia rolfsii* [teleomorph] |
| Stem canker | *Diaporthe phaseolorum* |
| | *Diaporthe phaseolorum var*. *caulivora* |
| | *Phomopsis phaseoli* [anamorph] |
| Stemphylium leaf blight | *Stemphylium botryosum* |
| | *Pleospora tarda* [teleomorph] |
| Sudden death syndrome | *Fusarium solani f.sp. glycines* |
| Target spot | *Corynespora cassiicola* |
| Yeast spot | *Nematospora coryli* |

In various additional embodiments wherein the crop plant is potato, the fungal pathogen may be any one of the fungal pathogens listed in the right hand column of Table 6, and the disease may be the corresponding disease of wheat listed in the left column of Table 6.

**Table 6. Fungal diseases of potato.**

| **Disease** | **Causative fungal pathogen(s)** |
|---|---|
| Black dot | *Colletotrichum coccodes* |
| | *= Colletotrichum atramentarium* |
| Brown spot and Black pit | *Alternaria alternata* |
| | *= Alternaria tenuis* |
| Cercospora leaf blotch | *Mycovellosiella concors* |
| | *= Cercospora concors* |
| | *Cercospora solani* |
| | *Cercospora solani-tuberosi* |
| Charcoal rot | *Macrophomina phaseolina* |
| | *= Sclerotium bataticola* |
| Choanephora blight | *Choanephora cucurbitarum* |
| Common rust | *Puccinia pittieriana* |
| Deforming rust | *Aecidium cantensis* |
| Early blight | *Alternaria solani* |
| Fusarium dry rot | *Fusarium* spp. |
| | *Gibberella pulicaris* |
| | *= Fusarium solani* |
| | Other *Fusarium* spp. include: |
| | *Fusarium avenaceum* |
| | *Fusarium oxysporum* |
| | *Fusarium culmorum* |
| | Less common *Fusarium* spp. include: |
| | *Fusarium acuminatum* |
| | *Fusarium equiseti* |
| | *Fusarium crookwellense* |
| Fusarium wilt | *Fusarium spp.* |
| | |
| | *Fusarium avenaceum* |
| | *Fusarium oxysporum* |
| | *Fusarium solani f*.*sp*. *eumartii* |
| Gangrene | *Phoma solanicola f. foveata* |
| | *Phoma foveata* |
| | *= Phoma exigua var*. *foveata* |
| | *= Phoma exigua f. sp. foveata* |
| | *Phoma exigua var*. *exigua* |
| Gray mold | *Botrytis cinerea* |
| | *Botryotinia fuckeliana* [teleomorph] |
| Late blight | *Phytophthora infestans* |
| Leak | *Pythium* spp. |
| | *Pythium ultimum var*. *ultimum* |
| | *= Pythium debaryanum* |
| | *Pythium aphanidermatum* |
| | *Pythium deliense* |
| Phoma leaf spot | *Phoma andigena var*. *andina* |
| Pink rot | *Phytophthora* spp. |
| | *Phytophthora cryptogea* |
| | *Phytophthora drechsleri* |
| | *Phytophthora erythroseptica* |
| | *Phytophthora megasperma* |
| | *Phytophthora nicotianae var*. *parasitica* |
| Powdery mildew | *Erysiphe cichoracearum* |
| Powdery scab | *Spongospora subterranea f.sp. subterranea* |
| Rhizoctonia canker and black scurf | *Rhizoctonia solani* |
| | *Thanatephorus cucumeris* [teleomorph] |
| Rosellinia black rot | *Rosellinia* sp. |
| | *Dematophora* sp. [anamorph] |
| Septoria leaf spot | *Septoria lycopersici var. malagutii* |
| Silver scurf | *Helminthosporium solani* |
| Skin spot | *Polyscytalum pustulans* |
| Stem rot (southern blight) | *Sclerotium rolfsii* |
| | *Athelia rolfsii* [teleomorph] |
| Thecaphora smut | *Angiosorus solani* |
| | = *Thecaphora solani* |
| Ulocladium blight | *Ulocladium atrum* |
| Verticillium wilt | *Verticillium albo-atrum* |
| | *Verticillium dahliae* |
| Wart | *Synchytrium endobioticum* |
| White mold | *Sclerotinia sclerotiorum* |

In some implementations, the compositions described herein can be prepared using the methods described in, for example, WO 2009/155693.

### EXAMPLES

### Example 1: Greenhouse Stem Rust Evaluation Study

The efficacy of Civitas™ alone or in combination with Harmonizer™ in controlling infection of wheat (Triticum aestivum 'Norin43') by Puccinia graminis f.sp. tritici ("Pgt") was tested under greenhouse conditions. Briefly, each treatment consisted of four pots containing four plants. Plants were planted on March 2nd. Civitas™, Harmonizer™, and combinations thereof were applied to test plants, by foliar application, for reference purposes, on March 10th, seven days before inoculation (DBI) on March 17th as indicated in Table 7. The average severity of infection, in terms of % leaf area infected, was evaluated 12 days after inoculation on March 29th. Foliar application is a reference.

**Table 7. Results of greenhouse stem rust evaluation study.**

| **Greenhouse Stem Rust Evaluation Study** | | | | | | | | | | |
|---|---|---|---|---|---|---|---|---|---|---|
| **Pathogen:** *Puccinia graminis* f.sp. t*ritici* | | | | | | | | | | |
| **Treat ID** | **Method** | **Carrier in gal/A (L/ha)** | **Timing** | **Civitas In oz/acre (L/ha)** | **Harmonizer In oz/acre (L/ha)** | | % Leaf Area (severity) | | Infection Type | |
| | | | | | | **Treated** | **Avg. Sev** | **SD %** | **Avg. IT** | **SD %** |
| 1 | Foliar | 20 (187) | 7DBI | 160 (12) | 0 | 3/10 | 20.00 | 7.07 | 2.25 | 0.50 |
| 2 | Foliar | 20 (187) | 7DBI | 320 (24) | 0 | 3/10 | 15.00 | 4.08 | 2.25 | 0.50 |
| 3 | Foliar | 20 (187) | 7DBI | 0 | 10 (0.7) | 3/10 | 26.25 | 6.29 | 3.50 | 0.58 |
| 4 | Foliar | 20 (187) | 7DBI | 0 | 20 (1.5) | 3/10 | 25.00 | 4.08 | 3.25 | 0.50 |
| 5 | Foliar | 20 (187) | 7DBI | 40 (3) | 2.5 (0.2) | 3/10 | 16.00 | 2.71 | 2.50 | 0.58 |
| 6 | Foliar | 20 (187) | 7DBI | 160 (12) | 10 (0.7) | 3/10 | 11.25 | 4.79 | 1.75 | 0.50 |
| 7 | Foliar | 20 (187) | 7DBI | 320 (24) | 20 (1.5) | 3/10 | 8.75 | 4.79 | 1.25 | 0.50 |
| 8 | Drench | 400 (3736) | 7DBI | 160 (12) | 0 | 3/10 | 17.50 | 6.45 | 2.25 | 0.50 |
| 9 | Drench | 400 (3736) | 7DBI | 320 (24) | 0 | 3/10 | 16.25 | 2.50 | 2.25 | 0.50 |
| 10 | Drench | 400 (3736) | 7DBI | 0 | 10 (0.7) | 3/10 | 26.25 | 4.79 | 3.25 | 0.96 |
| 11 | Drench | 400 (3736) | 7DBI | 0 | 20 (1.5) | 3/10 | 25.00 | 7.07 | 3.25 | 0.50 |
| 12 | Drench | 400 (3736) | 7DBI | 40 (3) | 2.5 (0.2) | 3/10 | 17.50 | 2.89 | 2.00 | 0.82 |
| 13 | Drench | 400 (3736) | 7DBI | 160 (12) | 10 (0.7) | 3/10 | 10.00 | 4.08 | 1.50 | 0.58 |
| 14 | Drench | 400 (3736) | 7DBI | 320 (24) | 20 (1.5) | 3/10 | 7.50 | 2.89 | 1.25 | 0.50 |
| 15 | Control | 20 (187) | N/A | 0 | 0 | 3/10 | 27.50 | 6.45 | 3.75 | 0.50 |

### Example 2: Wheat Stem Rust Study (reference example)

The efficacy of Civitas™ alone or in combination with Harmonizer™, Folicur™, or Quilt™ in controlling infection of wheat (Triticum aestivum 'Norin43') by Pgt was tested between May and July. A field was treated with Roundup™ on May 9th and cultivated twice before planting. Plots were planted on May 28 using a seeding rate of 77.8 kg/ha (1.25 bu/A), and were 4.57 m (15 ft) long by 1.52 m (5 ft) wide with 7 rows. Due to flooding in the field shortly after planting, plots lengths were reduced to 2.13 m (7 ft) long prior to cutting of the alleys. Plots consisting of a highly susceptible rust spreader mixture were alternated with the experimental units.

The experimental design was a randomized complete block with five replicates. Puma™ (0.48L/ha) (0.4 pt/A) and Bronate Advanced™ (0.96L/ha) (0.8 pt/A) were applied on June 10th to control weeds. On July 14th, urediniospores of Pgt were collected from nearby trap plots and applied to the spreader rows in a 0.1% water agar suspension using a hand-powered backpack sprayer. On July 20th, fungicide treatments were applied with a CO₂-powered backpack sprayer in a carrier volume of 187L/ha using XR8002 flat fan nozzles and an application pressure of 2. 76 bar (40 PSI). The plants in each plot were at Feekes 10.51 (early anthesis). At 48 hr after fungicide application, the experimental plots were inoculated as previously described with Pgt and misted at night for 7 days (3 min on per each 30 min) to facilitate infection and disease development. One treatment received a second application 7 days later (Treatment 5, see Table 8 below). Plots were rated for stem rust severity at 14 d after inoculation by visually estimating the percentage of stem area covered with pustules for 50 plants per plot (5 randomly chosen locations of 10 plants each). Plots were harvested with a small plot combine and yield was determined. Data were analyzed using an ANOVA and pair-wise comparisons were performed using Tukey's HSD (P=0.05).

**Table 8. Results of Wheat Stem Rust Study**

| **Trt No.** | **App Rate (oz/acre)** | **Upper Stem Severity (% infected area)** | **Average Stem Severity (% infected area)** | **Yield (g/plot)** | **Yield (% of Control)** |
|---|---|---|---|---|---|
| 1 | Non-inoculated Control | 37.50 | 39.17 | 67.325 | 6 |
| 2 | Inoculated Control | 38.00 | 39.00 | 63.4 | 0 |
| 3 | Civitas (160) (=12L/ha)) | 27.25 | 29.33 | 80.05 | 26 |
| 4 | Civitas (320) (=24L/ha) | 25.75 | 28.50 | 63.475 | 0 |
| 5 | Civitas + Harmonizer (160+10) (=12+0.7L/ha) (1 app) | 26.25 | 29.50 | 71.65 | 13 |
| 6 | Civitas + Harmonizer (160+10) (=12+0.7L/ha) (2 apps) | 27.00 | 29.75 | 96.225 | 52 |
| 7 | Civitas + Harmonizer (320+20) (=24+1.4L/ha) | 25.50 | 30.00 | 78.525 | 24 |
| 8 | Folicur (4) (=0.3L/ha) | 25.00 | 29.08 | 142.175 | 124 |
| 9 | Quilt (14) (=1L/ha) | 14.50 | 19.17 | 161.75 | 155 |
| 10 | Civitas + 1/2 Folicur (160+2) (=12+0.15L/ha) | 20.75 | 24.75 | 169.75 | 168 |
| 11 | Civitas + Harmonizer + 1/2 Folicur (80+5+2) (=6+0.35+0.15L/ha) | 19.25 | 24.25 | 176.2 | 178 |
| 12 | Civitas + Harmonizer + 1/2 Folicur (160+10+2) (=12+0.7+0.15L/ha) | 16.75 | 22.17 | 203.5 | 221 |
| 13 | Civitas + Harmonizer + 1/2 Folicur (320+20+2) (=24+1.4+0.15L/ha) | 11.00 | 16.92 | 185.175 | 192 |
| 14 | Civitas + Harmonizer + | 19.50 | 25.00 | 162.075 | 156 |
| | 1/2 Quilt (80+5+7) (=6+0.35+0.5L/ha) | | | | |

### Example 3: Greenhouse Spot Blotch Evaluation Study

The efficacy of Civitas™/Harmonizer™, alone or in combination with Folicur™ in controlling infection of wheat (Triticum aestivum 'Baart') by Bipolaris sorokiniana was tested under greenhouse conditions. Briefly, each treatment consisted of three pots (10.2 cm x 10.2 cm) (4" by 4") containing three plants each. Plants were planted on March 1 st. Civitas™/Harmonizer™, Folicur™, and combinations thereof were applied to test plants, by foliar application (reference) on March 8 (seven DBI), by soil drench on March 8th (7 DBI), or by foliar application on March 14th (1 DBI), as indicated in Table 9 ("Foliar" as reference, rates of Civitas, Harmonizer, and Folicur are expressed in oz/acre (and L/ha in parenthesis). For the foliar application for reference purposes, the treaments were applied in 0.2 mL per pot, which is the equivalent of 20 gal/A (187L/ha). For soil drench, treatments were applied in 3.8 mL, which is the equivalent of 400 gal/A (3736L/ha). Plants were innoculated on March 15th. The average severity of infection, in terms of % leaf area infected, was evaluated 14 days after inoculation on March 29th.

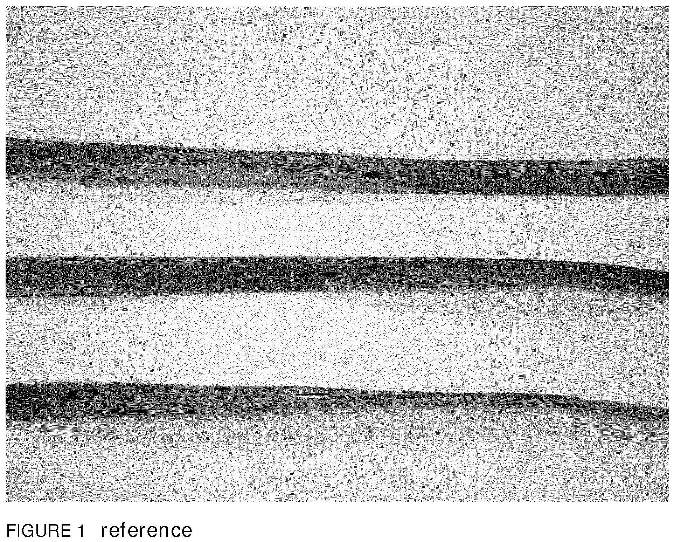

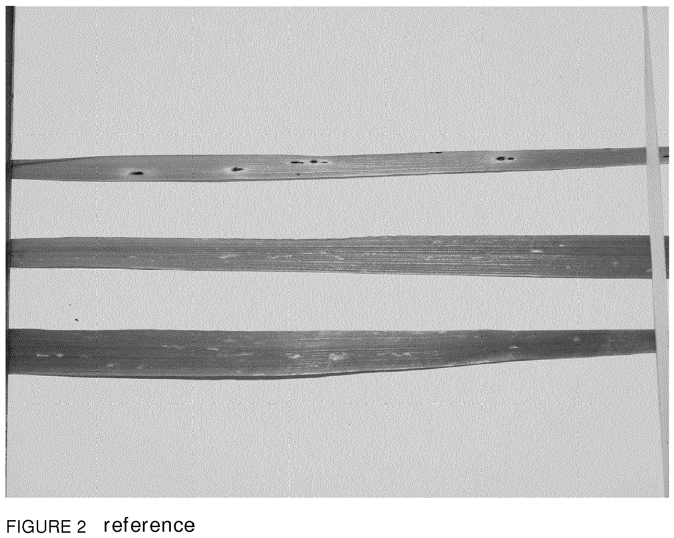

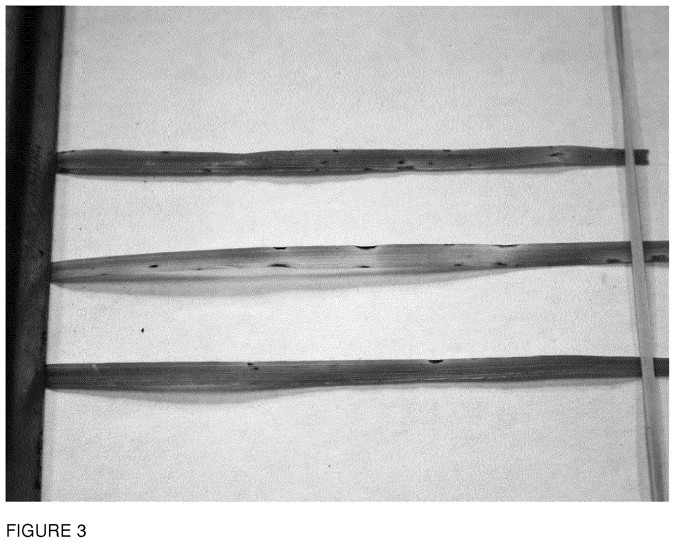

Images of the untreated, inoculated control are presented in Figure 1. Note the number of pustules (dark spots), near lack of chlorosis (light halos surrounding dark spots), and large pustule size. Figure 2 shows leaves of inoculated plants that were treated with Civitas™/Harmonizer™ (160+10 oz/acre (12+0.7L/ha)) and Folicur (2 oz/acre (0.15L/ha)) by reference foliar application 7DBI. Note the near lack of symptoms, small pustule size, and chlorotic halos. Figure 3 shows leaves of inoculated plants that were treated with Civitas™/Harmonizer™ (320+20 oz/acre (24+1.5L/ha)) by soil drench application 7 DBI. Note the near lack of symptoms, chlorotic halos, and reduced pustule size.

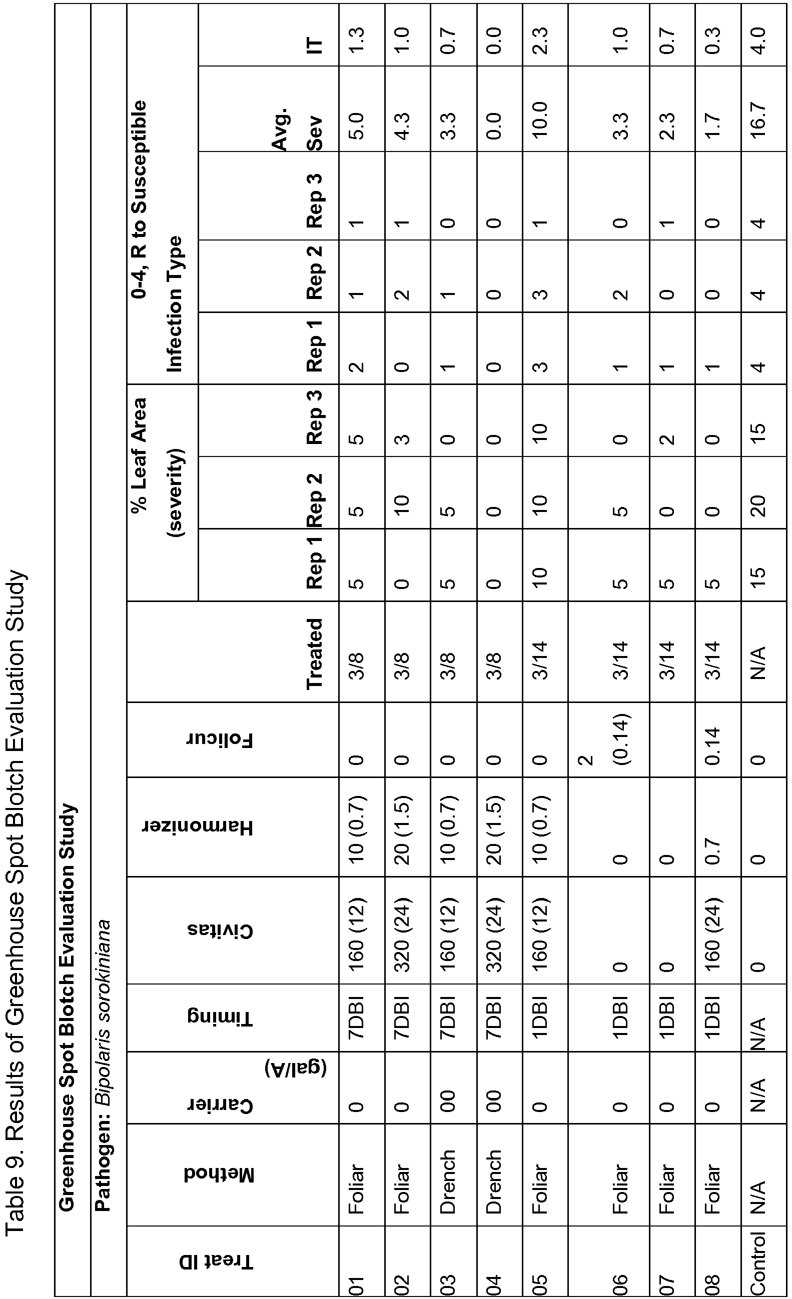

### Example 4: Greenhouse Leaf Rust Evaluation Study

The efficacy of Civitas™/Harmonizer™, alone or in combination with Folicur™ in controlling infection of wheat (Triticum aestivum 'Baart') by Puccinia triticina was tested under greenhouse conditions. Briefly, each treatment consisted of three pots (10.2cm x 10.2cm) (4" by 4") containing three plants each. Plants were planted on March 1st. Civitas™/Harmonizer™, Folicur™, and combinations thereof were applied to test plants, by foliar application on March 8 (seven DBI), by soil drench on March 8th (7 DBI), or by foliar application on March 14th (1 DBI), as indicated in Table 10 ("Foliar" is a reference, rates of Civitas, Harmonizer, and Folicur are expressed in oz/acre, with L/ha in parenthesis). The foliar application was for reference purposes. For foliar application, the treaments were applied in 0.2 mL per pot, which is the equivalent of 20 gal/A (187L/ha). For soil drench, treatments were applied in 3.8 mL, which is the equivalent of 400 gal/A (3736L/ha). Plants were innoculated on March 15th. The average severity of infection, in terms of % leaf area infected, was evaluated 14 days after inoculation on March 29th.

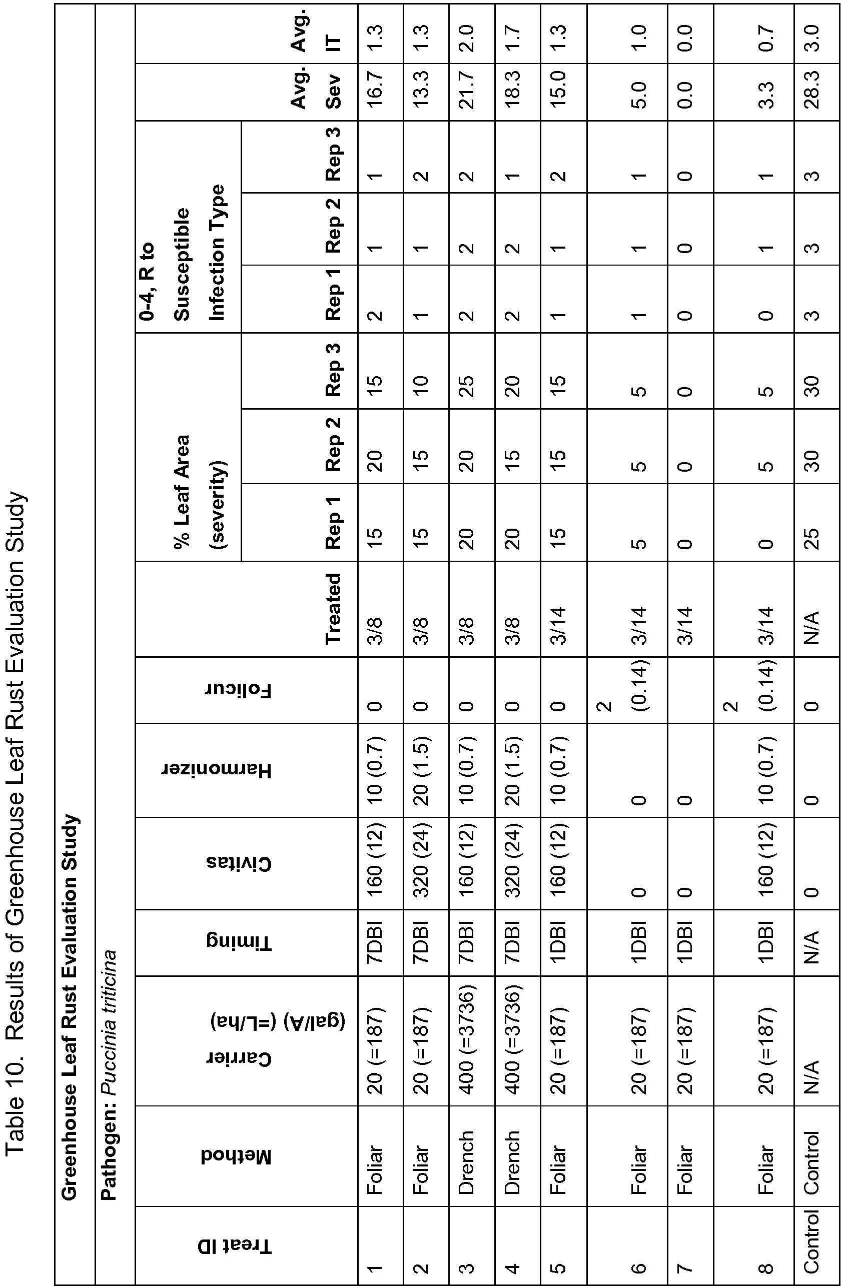

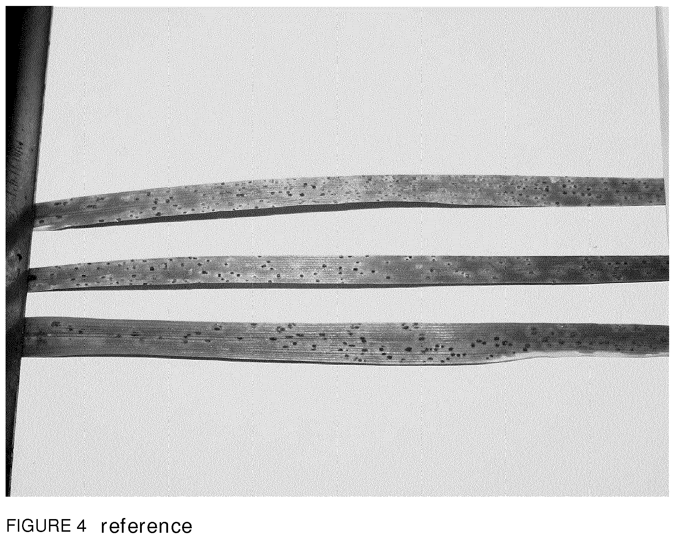

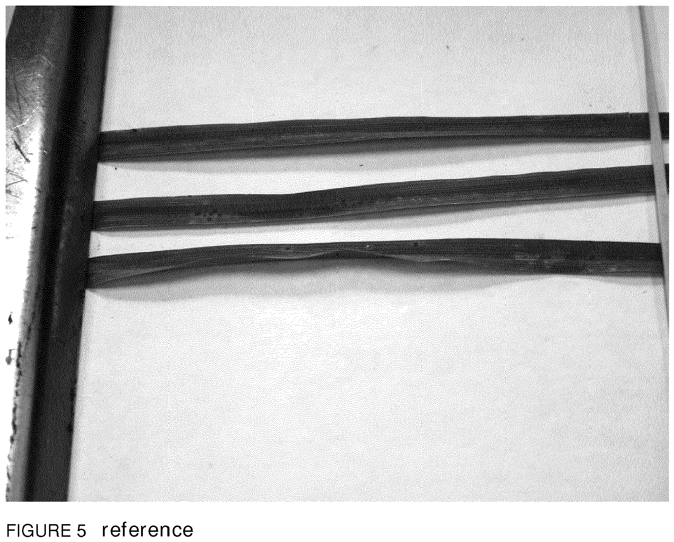

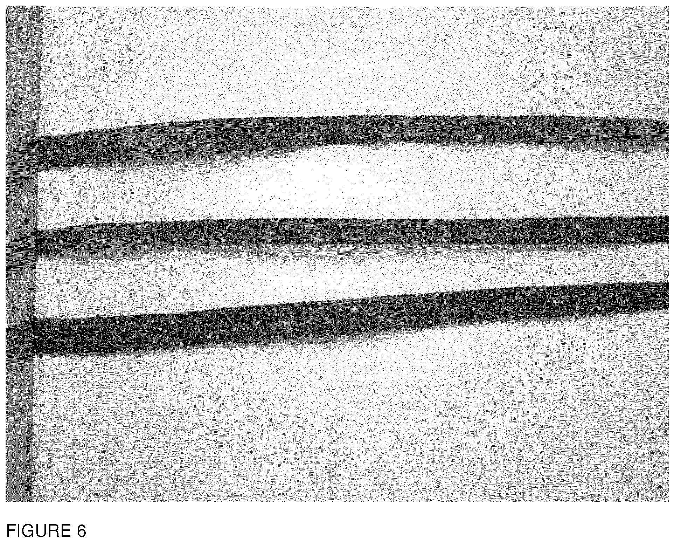

Images of the untreated, inoculated control are presented in Figure 4. Note the large number of pustules (dark spots), near lack of chlorosis, and large pustule size. Figure 5 shows leaves of inoculated plants that were treated with Civitas™/Harmonizer™ (160+10 oz/acre (12+0.7L/ha) and Folicur (2 oz/acre (0.14L/ha) by reference foliar application 7DBI. Note the near lack of pustules, somewhat restricted size, and small chlorotic halos indicative of a resistance response. Figure 6 shows leaves of inoculated plants that were treated with Civitas™/Harmonizer™ (320+20 gal/A (24+1.4L/ha) by soil drench application 7 DBI. Note the lack of pustules, restricted size, and large chlorotic halos indicative of a resistance response.

### Example 5: Greenhouse Fusarium Head Blight Evaluation Study

The efficacy of Civitas™, Harmonizer™, and Folicur™ alone or in combination, in controlling infection of wheat (Triticum aestivum 'Sonalika') by Fusarium graminearum was tested under greenhouse conditions. Briefly, each treatment consisted of four pots (4" by 4") containing nine plants each. Plants were planted on March 2nd. Civitas™, Harmonizer™, Folicur™, and combinations thereof were applied to test plants, by foliar application or by soil drench on March 10 (39 DBI), or 35 DBI by reference foliar application on March 16th, as indicated in Table 11 ("Foliar" is a reference, rates of Civitas, Harmonizer, and Folicur are expressed in oz/acre (with L/ha in parenthesis). For foliar application for reference purposes, the treaments were applied in 0.2 mL per pot, which is the equivalent of 20 gal/A (187L/ha). For soil drench, treatments were applied in 3.8 mL, which is the equivalent of 400 gal/A (3736L/ha). Plants were innoculated on April 18th. The average severity of infection was evaluated 14 days after inoculation on May 2nd.

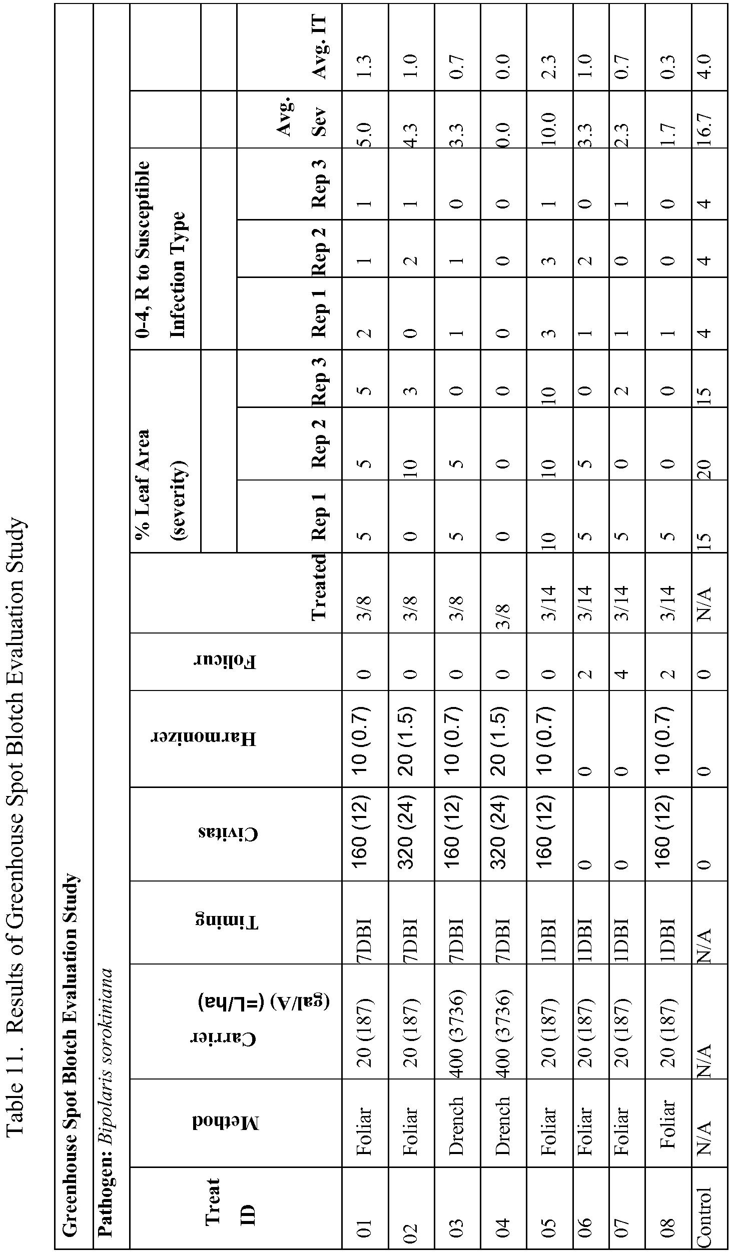

### Example 6: Soybean Rust Study in Georgia (reference)

The efficacy of Civitas™, Harmonizer™, and Headline™ (Pyraclostrobin, BASF), and Domark®230 ME (Tetraconazole, Valent), alone or in combination, in controlling infection of soybean (Glycine max) by Phakospora pachyrhizi was tested in the field in Georgia. Civitas was tested at 640 oz/a (5 gal/a) (=48L/ha) and 320 oz/a (2.5 gal/a) (=24L/ha) with and without Harmonizer. Two conventional chemical fungicides that are labelled for soybean rust, Headline® and Domark®230 ME were used alone, as well as tank mix partners with Civitas. The total spray volume is 15 gal/a (140L/ha),.. The treatments are listed in Table 12. The results of this study are provided in Table 13. Civitas showed significant control of Phakospora pachyrhizi on soybean. The incidence and severity were equal to or exceeded control by the conventional fungicides. The combination of the conventional fungicides with Civitas alone or Civitas/Harmonzier provided better efficacy than the conventional fungicides used alone.

**Table 12. List of treatments of soybean plants prior to innoculation**

| Trt No. | Treatment | | | Rate (oz/acre) (L/ha) | Appl Code | Application Description | Amount Production to Measure |
|---|---|---|---|---|---|---|---|
| 1 | Headline | | | 6 (0.44) | AB | R2-R3 | 9.375 ml/mx |
| 2 | Headline | | | | AB | R2-R3 | 6.25 ml/mc |
| 3 | Headline | | | 6 (0.44) | AB | R2-R3 | 6.25 ml/mx |
| | Civitas | | | | AB | R2-R3 | 1000.0 ml/mx |
| 4 | Headline | | | 0.3 (0.22) | AB | R2-R3 | 6.25 ml/mx |
| | Civitas | | | 320 (24) | AB | R2-R3 | 500.0 ml/mx |
| | Harmonizer | | | 20 (1.5) | AB | R2-R3 | 31.25 ml/mx |
| 5 | Headline | | | 0.3 (0.22) | AB | R2-R3 | 6.25 ml/mx |
| | Civitas | | | 640 (48) | AB | R2-R3 | 1000.0 ml/mx |
| | Harmonizer | | | 40 (3) | AB | R2-R3 | 62.25 ml/mx |
| 6 | Civitas | | | 640(48) | AB | R2-R3 | 1000.0 ml/mx |
| 7 | Civitas | | | 640 (48) | AB | R2-R3 | 1000.0 ml/mx |
| | Harmonizer | | | 40 (3) | AB | R2-R3 | 62.25 ml/mx |
| 8 | Headline | | | 0.3 (0.22) | AB | R2-R3 | 9.375 ml/mx |
| | Civitas | | | 640 (48) | AB | R2-R3 | 500. mlmx |
| | Harmonizer | | | 40 (3) | AB | R2-R3 | 31.25 ml/mx |
| 9 | Domark 230 | | | | AB | R2-R3 | 6.25 ml/mx |
| | ME | | | | | | |
| 10 | Domark 230 | | | 2(0.15) | AB | R2-R3 | 3.12 ml/mx |
| | ME | | | | | | |
| 11 | Domark 230 | | | 2(0.15) | AB | R2-R3 | 3.125 ml/mx |
| | ME | | | 640 (48) | AB | R2-R3 | 1000.0 ml/mx |
| | Civitas | | | | | | |
| 12 | Domark 230 | | | 2(0.15) | AB | R2-R3 | 3.125 ml/mx |
| | ME | | | 320 (24) | AB | R2-R3 | 500.0 ml/mx |
| | Civitas | | | 20(0.15) | AB | R2-R3 | 31.25 ml/mx |
| | Harmonizer | | | | | | |
| 13 | Domark 230 | | | 2(0.15) | AB | R2-R3 | 3.125 ml/mx |
| | ME | | | 320 (12) | AB | R2-R3 | 1000.0 ml/mx |
| | Civitas | | | 20(0.15) | AB | R2-R3 | 62.5 ml/mx |
| | Harmonizer | | | | | | |
| 14 | Civitas | | | 640 (48) | AB | R2-R3 | 1000.0 ml/mx |
| 15 | Civitas | | | 640 (48) | AB | R2-R3 | 1000.0 ml/mx |
| | Harmonizer | | | 40 (0.3) | AB | R2-R3 | 62.5 ml/mx |
| 16 | Domark 230 | | | | AB | R2-R3 | 6.25 ml/mx |
| | ME | | | 320 (24) | AB | R2-R3 | 500.0 ml/mx |
| | Civitas | | | 20(0.15) | AB | R2-R3 | 31.25 ml/mx |
| | Harmonizer | | | | | | |

**Table 13. Results of Soybean Rust Study.**

| | | | | | | |
|---|---|---|---|---|---|---|
| Pest Type | | D Disease | D Disease | D Disease | D Disease | D Disease |
| Pest Name | | SBR | SBR | SBR | SBR | SBR |
| Crop Name | | Soy Bean | Soy Bean | Soy Bean | Soy Bean | Soy Bean |
| Rating Date | | Oct. 21 | Oct. 21 | Oct. 21 | Oct. 21 | Nov. 17 |
| Rating Date Type | | Defoliation | Incidence | Leaf Area | Severity | Yield |
| Rating Unit | | % | | % | Scale | Lb |
| Sample Size Unit | | | | | | Plot |
| Days After First/Last | | | | | | |
| Applic. | | 71/42 | 71/42 | 71/42 | 71/42 | 98 /69 |

| Trt No. | Treatment Name | 1 | 2 | 3 | 4 | 5 |
|---|---|---|---|---|---|---|
| 1 | Headline | 82.5 b-e | 32.5 b-e | 1.258 a | 0.58 a | 23.755 a |
| 2 | Headline | 76.3 e | 62.5 ab | 3.423 a | 1.45 ab | 24.070 a |
| 3 | Headline | 83.8 b-e | 30.0 b-e | 4.963 a | 1.20 abc | 19.660 cd |
| | Civitas | | | | | |
| 4 | Headline | 81.3 b-e | 32.5 b-e | 0.378 a | 0.38 bcd | 19.575 cd |
| | Civitas | | | | | |
| | Harmonizer | | | | | |
| 5 | Headline | 83.8 b-e | 20.0 cde | 0.213 a | 0.30 cd | 18.868 cde |
| | Civitas | | | | | |
| | Harmonizer | | | | | |
| 6 | Civitas | 83.8 b-e | 27.5 b-e | 0.218 a | 0.30 cd | 18.868 cde |
| 7 | Civitas | 88.8 ab | 50.0 a-d | 1.405 a | 0.85 bcd | 18.325 def |
| | Harmonizer | | | | | |
| 8 | Headline | 80.8 cde | 30.0 b-e | 0.275 a | 0.33 cd | 23.370 ab |
| | Civitas | | | | | |
| | Harmonizer | | | | | |
| 9 | Domark 230 ME | 77.5 de | 30.0 b-e | 0.265 a | 0.30 cd | 23.370 ab |
| 10 | Domark 230 ME | 87.5 abc | 20.0 cde | 0.158 a | 0.20 cd | 19.688 cd |
| 11 | Domark 230 ME | 87.5 abc | 5.0 e | 0.015 a | 0.05 d | 19.008 cde |
| | Civitas | | | | | |
| 12 | Domark 230 ME | 85.0 a-d | 17.5 de | 0.105 a | 0.18 cd | 21.030 bc |
| | Civitas | | | | | |
| | Harmonizer | | | | | |
| 13 | Domark 230 ME | 92.2 a | 12.5 de | 0.073 a | 0.13 cd | 16.560 ef |
| | Civitas | | | | | |
| | Harmonizer | | | | | |
| 14 | Civitas | 86.3 abc | 57.5 abc | 1.460 a | 0.90 bcd | 18.925 cde |
| 15 | Civitas | 87.2 abc | 37.5 b-e | 1.880 a | 0.75 bcd | 16.143 f |
| | Harmonizer | | | | | |
| 16 | Domark 230 ME | 88.8 ab | 30.0 b-e | 0.375 a | 0.35 cd | 18.385 def |
| | Civitas | | | | | |
| | Harmonizer | | | | | |
| 17 | Untreated Control | 82.5 b-e | 82.5 a | 6.233 a | 2.20 a | 23.210 ab |
| LSD (P=.05) | | 7.52 | 39.88 | 4.0345 | 1.082 | 2.4490 |
| Standard Deviation | | 5.26 | 27.91 | 2.8232 | 0.757 | 1.7137 |
| CV | | 6.24 | 82.15 | 211.5 | 124.35 | 8.61 |
| Bartlett's x2 | | 15.841 | 22.741 | 147.989 | 64.207 | 35.418 |
| P(Bartlett's X2) | | 0.393 | 0.121 | 0.001* | 0.001* | 0.003* |
| | | | | | | |
| Replicate F | | 2.920 | 3.678 | 2.208 | 3.515 | 3.563 |
| Replicate Prob(F) | | 0.0439 | 0.0183 | 0.0992 | 0.0220 | 0.0208 |
| Treatment F | | 2.545 | 1.946 | 1.715 | 2.266 | 8.017 |
| Treatment Prob(F) | | 0.0069 | 0.0387 | 0.0760 | 0.0149 | 0.0001 |

### Example 7. Control of Leaf rust on wheat (reference)

Leaf rust field trial was carried out on spring wheat cultivars. Spores from the spreader plots were served as innoculum source for the natural infection of experimental plots. Treatments were applied at heading (Feekes 10.1/10.2) using a CO₂-powered backpack sprayer operating at the pressure of ca. 276 kPa, fitted with flat-fan spray tip (TeeJet SS8003; Spraying Systems Co., Wheaton, IL), at the rate of 20 gal per acre (187L/Ha). Prosaro (Bayer Crop Science) was used as the standard chemical control.

Disease rating was done 19 days after chemical spray. Leaf rust severity was rated as percent leaf area infected on 12 randomly selected flag leaves per plot. Data were analyzed using 'R' statistical package. Data on leaf rust severity was transformed using square root and arcsin function for analysis of variance. Means presented for rust severity in the graph and tables are back transformed mean value.

The treatments of Civitas/Harmonizer (160:10 oz/acre 12+0.7L/Ha)) and Civitas/Harmonizer (320:20 oz/acre (24+1.5L/Ha)) resulted in significantly low rust infection compared to control plots. The efficacy of Civitas treatments are at par with the chemical standard Prosaro (6.5 oz/acre (0.5L/Ha)).

**ANOVA table (Table 14):**

| **Source** | **DF** | **MS** | **F-value** | **Prob** > **F** |
|---|---|---|---|---|
| Treatment | 12 | 6.199 | 2.617 | 0.01157 |
| Error | 39 | 2.3686 | ... | ... |

**Table 15. Mean Comparisons Between Treatments:**

| Treatment | Mean | Group* |
|---|---|---|
| Untreated | 2.81 | a |
| Civitas/Harmonizer - 160:10 oz/acre (12+0.7L/Ha) | 0.88 | b |
| Prosaro - 6.5 oz/acre (0.5L/ha) | 0.77 | b |
| Civitas/Harmonizer - 320:20 oz/acre (24+1.5L/ha) | 0.67 | b |

| | | |
|---|---|---|
| *Treatment with same letters are not statistically different | | |

### Example 8. Control of Gray Leaf Spot on Corns (reference)

Gray Leaf Spot *(Cercospora zeae-maydis)* field trial was conducted on hybrid corns (NK 67 3000GT) with natural infection. Civitas treatments were applied at R1 and R3 growth stage with the spray rate of 20 gal per acre (187L/Ha). Headline (BASF) and Stratego (Bayer Crop Science) were applied at R1 as the standard chemical control.

Disease rating was done about 16 days and 40 days after R1 application. Gray leaf spot severity was rated as percent leaf area infected in the plots.

All of the chemical treatments resulted in lower disease severity than control plots.

**Table 15**

| | | | | **16** | | **40** |
|---|---|---|---|---|---|---|
| | | | | **DAA** | | **DAA** |
| **No of treatment** | **Chemicals** | **application rate (fl.oz product/A) (=L/ha)** | **Growth Stage** | **% Leaf area infected** | | **% Leaf area infected** |
| | untreated | | | 2.5 | A | 12.0 |
| 1 | Civitas | 640 (=48) | R1 + R3 | 1.0 | C | 7.8 |
| | +Harmonizer | 40 (=3) | | | | |
| 2 | Headline | 6 (=0.44) | R1 | 1.0 | C | 0.8 |
| 3 | Stratego | 10 (=0.73) | R1 | 1.0 | C | 1.0 |
| | | | **P > F** | 0.0084 | | <.0001 |
| | | | **LSD** | | | |
| | | | **0.05** | 0.9 | | 4.2 |
| | | | **CV %** | 46 | | 73 |

### Example 9. Maple tar spot

Maple saplings (∼ 50 cm tall) were transplanted into pots containing 50% compost and 50% sand topdressing mix in May.

A randomized complete block design (RCBD) with seven treatments (Table 16) and four replicate trees per treatment was set up. Each tree was sprayed twice with the same treatment (28 May and 16 June). Treatments were mixed by volume with deionized water.

For reference foliar treatments, up to 30 ml were applied by spraying both foliar surfaces (adaxial and abaxial) of all leaves on a tree until run-off while attempting to minimize dripping onto the soil. For soil treatments, 5.5 ml was applied to each pot, and 1.7 L of water was added, which was sufficient to drench the treatment into the soil without water leaching out at the bottom of the pot. Observations of the number of spots per plant were made in August. The data were subjected to Analysis of Variance, and means separated by the test of Least Significant Difference at p=0.05.

**Table 16: Treatments applied to potted plants on 28 May and 16 June 2009, and spots counted 17 August. ("foliar" is a reference)**

| Treatment | Application method | Product/tree (mL) | Total water volume | Maple spots per tree |
|---|---|---|---|---|
| Control (water) | foliar | 30 | 30 | 124a |
| Civitas+Harmonizer | foliar | 0.6+0.0375 | 30 | 19b |
| Civitas+Harmonizer | foliar | 1.5+0.0938 | 30 | 16b |
| Civitas | foliar | 0.6 | 30 | 51b |
| Civitas | foliar | 0.275 | 30 | 111a |
| Civitas | soil | 0.3 | 5.5mL followed by 1.7L to water in | 67ab |
| Civitas+Harmonizer | soil | 0.275+0.0172 | 5.5mL followed by | 43b |
| | | | 1.7L to water in | |

Civitas and Civitas+Harmonizer were applied either sprayed directly on the leaves or applied directly to the soil. The results demonstrate that Civitas or Civitas + harmonizer when applied to the soil was statistically just as effective as when applied foliarly. For soil applications, Civitas + harmonizer were more effective than Civitas alone.

### Example 10. Evaluation of Civitas+Harmonizer for management of bacterial speck on processing tomato transplants

### Materials & Methods

Tomato variety 'TSH4' was seeded into Fafard germination mix on January 4. Each replicate consisted of a 25 cell square cut from a 200-cell size transplant tray, for a total of 25 transplants per replicate or one plant per cell. Seeds were covered with a medium grind vermiculite, placed in a seed germination room for three days, and then moved to greenhouse. Replicates were arranged in a randomized complete block design with four replications per treatment. Plants were fertilized with 200 ppm of 20-20-20 (NPK) at 14, 20, 26, 30, 36, and 44 DAS.

The standard Kocide 2000 (copper hydroxide, 53.8%) treatment was applied 21, 25, 30, 38, and 45 days after seeding (DAS). The treatments were applied using a hand-held mist sprayer using an application rate of 1000 L of water Ha-1. Civitas and Harmonizer were applied 21 DAS. Soil injection treatments were applied by filling a syringe with 0.6 mL of solution, wiping the outside of the barrel with a cotton ball, and applying the solution to the growing media in each cell. Tray soak treatments were applied by soaking trays in the treatment solution until the trays were fully saturated.

Inoculum was prepared in tryptic soy broth, and diluted to a concentration 106 CFU mL-1 in sterile distilled water with 0.025% v/v Sylgard 309. After inoculation, the trial was enclosed in a plastic tent structure in order to maintain leaf wetness and relative humidity. Few symptoms were apparent 6 days after the first inoculation, so the trial was inoculated for a second time 31 DAS using a slurry tomato leaves infected with Pst (01T23B). Tomato leaves (28 g) were collected and blended with 200 mL of distilled water for 30 seconds. The mixture was filtered through 3 layers of cheese cloth, Sylgard 309 was added (0.025% v/v) was added, and the mixture was applied to the tomato plants using a handheld mist sprayer until run-off.

The number of lesions on all true leaves in each replicate was counted one each assessment date. Phytotoxicity symptoms were observed 19 days after the Civitas and Harmonizer treatments were applied in the injection application treatments. At the end of the study period, foliar weight was measured by removing plant from nine cells in the centre of each replicate, placing the plant material in paper envelopes in a drying oven (70°C), and recording the dry weight. Samples to measure foliar dry weight were taken 49 DAS.

Statistical analysis was conducted using ARM 7 (Gylling Data Management, Brookings, SD). Data were tested for normality using Bartlett's homogeneity of variance test. Data which were not normal (P ≤ 0.05) were transformed. Analysis of variance was conducted and means comparisons were performed when P ≤ 0.05, with Duncan's new multiple range test.

Filtered through 3 layers of cheese cloth, Sylgard 309 was added (0.025% v/v) was added, and the mixture was applied to the tomato plants using a handheld mist sprayer until run-off

The number of lesions on all true leaves in each replicate was counted one each assessment date.

Statistical analysis was conducted using ARM 7 (Gylling Data Management, Brookings, SD). Data were tested for normality using Bartlett's homogeneity of variance test. Data which were not normal (P ≤ 0.05) were transformed. Analysis of variance was conducted and means comparisons were performed when P ≤ 0.05, with Duncan's new multiple range test.

### Results

The quality and yield of processing tomato can be greatly impacted by a number of diseases. For example, bacterial speck (Pseudomonas syringae pv. tomato) and bacterial spot, (primarily Xanthomonas vesicatoria Group B and X. gardneri Group D) have reduced yields in Ontario by up to 60% (Cupples et al. 2006, LeBoeuf et al. 2005). There are few effective management tools for these diseases other than sanitation and numerous applications of copper during transplant and field production.

One application of Civitas 5% v/v + Harmonizer 5% v/v, applied by soil injection or soaking transplant trays in the product solution, was as effective as five application of the standard bacteriacide Kocide 2000

**Table 17. Number of lesions, area under the disease progress curve (AUDPC), and foliar dry weight of plants treated with different products for management of bacterial speck on processing tomato variety 'TSH 4' grown under greenhouse conditions. "Foliar" is reference.**

| | | | # Lesions (per 25 plants) | | | | | UDPC |
|---|---|---|---|---|---|---|---|---|
| Treatment | Application method | Application rate | 0PI | 3DPI | 6DPI | ODPI | 4DPI | |
| Nontreated control | | | .7 | .4 | 3.8 | 9.9 | 0.6 | 22.2 |
| Kocide 2000 | Foliar | 3.2 kg/Ha | .7 | .2 | .5 | 7.6 | 7.8 | 43.4 |
| Civitas+Harmonizer | Soil injection | 5%+5% | | .1 | 3.2 | 3 | 3.4 | 61.2 |
| Civitas+Harmonizer | soak | 5%+5% | .5 | | .3 | 6.7 | 2.8 | 49.6 |

### Example 11. Evaluation of Civitas and Harmonizer for the management of bacterial spot and bacterial speck in processing tomato under field conditions.

PEST(S): Bacterial spot (Xanthomonas gardneri syn. Xanthomonas campestris pv. vesicatoria Group D); bacterial speck (Pseudomonas syringae pv. tomato).

MATERIALS: Kocide 2000 (copper hydroxide 53.8%), Civitas and Civitas Harmonizer.

METHODS: Tomato transplants (cv. H9909) were transplanted into twin-rows on June 6 using a mechanical transplanter at a rate of 3 plants per metre. Each set of twin-rows were spaced 1.5m apart. Each treatment plot was 7m long and consisted of one twin-row. The trial was setup as a randomized complete block design, with 4 replications per treatment. Reference foliar treatments were applied using a 1.5m boom hand-held CO2 sprayer (35 psi) with XULD 120-02 nozzles and water volume of 200 L Ha-1. Soak treatments were applied just prior to transplanting on June 6. Plug trays (288-cell size) were cut into 4 sections of 72 plants each. Each tray section was individually treated and used for one replicated plot. The moisture content was determined by removing five plugs of soilless mix from the tray and measuring percent water content using an Extech Soil Moisture Meter MO750 (Extech Instruments Corporation, Nashua, NH). Treatment solution (1.5 L) for each plot was placed in a kitty litter contained and each tray was soaked in the solution for one hour. After removing the tray from the solution, the remaining volume was recorded and the volume of solution absorbed by the section of transplant tray was calculated. The mean volume absorbed per plug was 6.2 mL for treatment Civitas 5 % v/v + Harmonizer 5 % v/v. In-furrow treatments were applied at the time of transplanting. The treatment solution was mixed in a 2 L bottle and applied using CO2 pressure. A nozzle (Lumark 015-F110) was installed in the transplant show, in front of the transplant kicker. Treatments were delivered at a rate of 540 mL Ha-1 (40.5 mL per twin row). Transplant water was also used at the time of planting at a rate of 2.4 L Ha-1.

The trial was inoculated with Xanthomonas campestris pv. vesicatoria (Group D) and Pseudomonas syringae pv. tomato on June 16 at a concentration of ∼106 CFU ml-1. Inoculum was applied using a hand-held 2m CO2 boom sprayer with ULD 120-02 nozzles at a pressure of 2.41 bar (35 psi), and water volume of 200 L Ha-1. Symptoms of bacterial disease began to appear in the trial within 10 days after inoculation, so the trial was not re-inoculated.

The trial was irrigated using a drip irrigation system as required throughout the growing season. Revus (mandipropamid) was applied on July 26 and Aug 7 for preventative protection from late blight.

Bacterial spot and bacterial speck was assessed on June 29, July 5, Aug 2, 8, and 16 by counting the number of infected leaves on five plants in each plot and estimating the percent defoliation. Percent defoliation was also estimated on Sept 12.

**Table 18. Number of leaves infected with bacterial spot or bacterial speck, and area under the disease progress curve (AUDPC), on five tomato plants in plots treated with different products for bacterial disease management. "Foliar" is a reference.**

| Treatment | Application method/rate | No. Infected leaves | | | | | |
|---|---|---|---|---|---|---|---|
| | | June 29 | July 5 | Aug 2 | Aug 8 | Aug 16 | AUDPC |
| Nontreated control | | 0.8 | 45 | 4.8 | 20.8 | 76.8 | 611.8 |
| Kocide 2000 | Foliar(BCD) : 3.2 kg/Ha | 0.0 | 2.0 | 4.8 | 16.8 | 23 | 324.0 |
| Civitas+Harmonizer | Soak(A): 5%+5% | 0.3 | 2.3 | 3.5 | 4.8 | 53.3 | 344.8 |
| Civitas+Harmonizer | In furrow(A):5 %+5% | 0.5 | 1.3 | 9.8 | 6.0 | 26.8 | 339.0 |

| | | | | | | | |
|---|---|---|---|---|---|---|---|
| Application date: A = June 6, B = June 15, C = June 20, D = June 27. All foliar treatments were applied using water volume of 200 L Ha-1. | | | | | | | |

One application of Civitas+Harmonizer applied by soaking transplant trays in the product solution or applied in furrow, was as effective as three applications of the standard bacteriacide Kocide 2000.

### Example 12

Soil application of Civitas is effective against early blight of tomato. Early blight of tomato, caused by the fungus, *Alternaria solani,* can be the most common foliar disease of tomatoes in eastern North America. It can also be a serious problem on potato. Preliminary evidence shows that application of Civiatas to soil results in fewer leaf lesions due to tomato early blight and an approx. 10 fold increase in endophytiic bacteria living inside the roots of the tomato plants. There are at least four species of bacteria that are affected by Civitas in the tomato roots. See Table 19.

**Table 19. Bacterial endophyte populations in roots of N. benthamiana at 7 days following soil application of 10% Civitas, or water.**

| Bacteria | Water¹ (CFU/g root) | Civitas (CFU/g root) |
|---|---|---|
| *Bacillus cereus* LW1 | ND² | 3.75E+04 |
| *Bacillus megaterium* LW2 | 5.25E+04 a | 1.05E+05a |
| *Pseudomonas sp.* LW3 | 1.33E+06 b | 3.01E+07a |
| *Bacillus simplex* LW4 | 2.21E+05 a | 5.23E+05 a |
| *Bacillus pumilis* LW5 | 3.57E+03 | 1.68E+04 |
| *Pseudomonas alcaligenes* SW1 | 4.77E+06a | 8.57E+06a |
| *Bacillus marisflavi* LY1 | 1.33E+04a | 7.64E+04a |
| *Bacillus massiliensis* SY1 | 1.95E+05a | 1.25E+05a |
| Total | 6.52E+06b | 3.95E+07a |

| | | |
|---|---|---|
| ¹ Means averaged from 5 experiments (120301, 110719, 110712, 110705 and 110628), with 3 plants per experiment for a total of 15 measurements per endophyte. To test for significant differences among the ehdophytes, an analysis of variance using SAS procedure GLM was performed. The test of Least Significant Difference (LSD) was used to separate means. Means followed by a letter in common are not significantly different (p=0.05). ² Not detected. | | |

**Table 19. Bacterial endophyte populations in roots of N. benthamiana at 7 days following soil application of 10% Civitas, or water.**

| Bacteria | Water¹ (CFU/g root) | Civitas (CFU/g root) |
|---|---|---|
| *Bacillus cereus* LW1 | ND² | 3.75E+04 |
| *Bacillus megaterium* LW2 | 5.25E+04 a | 1.05E+05a |
| *Pseudomonas sp.* LW3 | 1.33E+06 b | 3.01E+07a |
| *Bacillus simplex* LW4 | 2.21E+05 a | 5.23E+05 a |
| *Bacillus pumilis* LW5 | 3.57E+03 | 1.68E+04 |
| *Pseudomonas alcaligenes* SW1 | 4.77E+06a | 8.57E+06a |
| *Bacillus marisfla vi* LY1 | 1.33E+04a | 7.64E+04a |
| *Bacillus massiliensis* SY1 | 1.95E+05a | 1.25E+05a |
| Total | 6.52E+06b | 3.95E+07a |

| | | |
|---|---|---|
| Means averaged from 5 experiments (120301, 110719, 110712, 110705 and 110628), with 3 plants per experiment for a total of 15 measurements per endophyte. To test for significant differences among the ehdophytes, an analysis of variance using SAS procedure GLM was performed. The test of Least Significant Difference (LSD) was used to separate means. Means followed by a letter in common are not significantly different (p=0.05). ² Not detected. | | |

## Claims

1. A method for controlling a disease caused by fungi or bacteria in a plant or for increasing the amount of endophytic bacteria in the roots of a plant, which comprises applying a composition comprising a paraffinic oil and a metal phthalocyanine pigment to root tissue of the plant.

2. The method according to claim 1, wherein the composition is applied by one or more of the following: as a bolus, by soil drenching, by drip irrigation, or by soil injection.

3. The method of claim 2, wherein the composition is applied as a bolus by pouring and/or root bathing.

4. The method according to any one of claims 1-3, wherein the composition is applied over a time period of at least ten seconds.

5. The method according to any one of claims 1-4, wherein the aerial portion of the plant is free of the composition during application of the composition to the root tissue.

6. The method according to any one of claims 1-5, wherein the aerial portion of the plant is free of the composition.

7. The method according to any one of claims 1-6, further comprising applying one or more conventional chemical fungicides to the plant.

8. The method of claim 7, wherein the one or more conventional chemical fungicides is applied to an aerial portion of the plant.

9. The method according to any one of claims 1-8, wherein the plant is a crop plant.

10. The method of claim 9, wherein the crop plant is wheat, barley, soybean, tomatoes, potatoes, or corn.

11. The method according to any one of claims 9 and 10, wherein the composition further comprises from 50 to 99 parts per weight of water.

12. The method according to claim 11, wherein the composition is an oil-in-water emulsion.

13. The method according to claim 1, wherein the composition is applied to a growing medium, wherein the growing medium comprises any surface of the growing medium that is from 0 cm (0 inches) to 183 cm (six feet) from the base of the plant and any growing medium that is from 0 cm (0 inches) to 61 cm (24 inches) beneath said surface of the growing medium, and wherein the composition that is applied at a rate of from 935.4L/ha (100 gal/acre) to 7483.2 L/ha (800 gal/acre), on basis of said composition further including from 50 to 99 parts by weight water.

14. The method according to claim 13, wherein the growing medium is soil.

15. The method according to any one of claims 1-8, or 13-14 wherein the plant is a tree.

16. The method of claim 15, wherein the tree is a maple tree, a citrus tree, an apple tree, a pear tree, an oak tree, an ash tree, a pine tree, or a spruce tree, or any combination thereof.

17. The method according to claim 15 or 16, wherein the composition further comprises 5 to 99 parts per weight of water.

18. The method according to claim 17, wherein the composition is an oil-in-water emulsion.

19. The method according to any preceding claim, wherein the paraffinic oil comprises a paraffin having from 16 carbon atoms to 35 carbon atoms.

20. The method according to any preceding claim, wherein the paraffinic oil comprises an isoparaffin.

21. The method according to any preceding claim, wherein the composition further comprises an emulsifier.

22. The method of claim 19, wherein the weight ratio of the paraffinic oil to the emulsifier is from 10:1 to 500:1.

23. The method according to claim 21, wherein the emulsifier comprises a natural or synthetic alcohol ethoxylate, an alcohol alkoxylate, an alkyl polysaccharide, a glycerol oleate, a polyoxyethylene-polyoxypropylene block copolymer, an alkyl phenol ethoxylate, a polymeric surfactant, a polyethylene glycol, a sorbitan fatty acid ester ethoxylate, or a composition thereof.

24. The method according to any one of claims 1 to 23, wherein the pigment is a polychlorinated (Cu II) phthalocyanine.

25. The method according to any one of claims 1 to 24, wherein the weight ratio of the paraffinic oil to the pigment is from 1:5 to 100:1.

26. The method according to any one of claims 1 to 25, wherein the weight ratio of the paraffinic oil to the pigment is 30:1.

27. The method according to any one of claims 1 to 26, wherein the pigment is a water-based pigment dispersion.

28. The method according to any one of claims 1 to 27, wherein the composition further comprises a silicone surfactant.

29. The method of claim 28, wherein the silicone surfactant is a silicone polyether.

30. The method of any one of claim 28 and 29, wherein the silicone surfactant further comprises a polyethylene glycol according to formula IV:
R¹-O-(CH₂CH₂O)_{f}-R²
wherein R¹ = H or CH₂=CH-CH₂ or COCH₃; R² = H or CH₂=CH-CH₂ or COCH₃; and f≥ 1.

31. The method according to any one of claims 28 to 30, wherein the weight ratio of the pigment to the silicone surfactant is from 2:1 to 50:1.

32. The method according to any preceding claim, wherein the composition further comprises an anti-settling agent.

33. The method according to any preceding claim, wherein the method is for controlling a disease caused by a fungal pathogen.

34. The method of claim 33, wherein the disease is maple tar spot.

35. The method of claim 28, wherein the weight ratio of the pigment to the silicone surfactant is from 2:1 to 50:1.

36. The method according to any one of claims 1 through 35, wherein the method is for increasing the amount of endophytic bacteria living inside the roots of the plant.

37. The method of claim 36, wherein the immune response is an induced systemic resistance (ISR) response, a systemic acquired resistance (SAR), or other defense response in the plant.

## Patentansprüche

1. Verfahren zum Bekämpfen einer durch Pilze oder Bakterien verursachten Krankheit in einer Pflanze oder zum Erhöhen der Menge an endophytischen Bakterien in den Wurzeln einer Pflanze, bei dem man eine Zusammensetzung, die ein Paraffinöl und ein Metallphthalocyaninpigment umfasst, auf Wurzelgewebe der Pflanze ausbringt.

2. Verfahren nach Anspruch 1, wobei die Zusammensetzung mittels eines oder mehrerer der Folgenden ausgebracht wird: als Bolus, durch Tränken des Bodens, mittels Tröpfchenbewässerung oder mittels Injizieren in den Boden.

3. Verfahren nach Anspruch 2, wobei die Zusammensetzung als Bolus, durch Gießen und/oder durch Tauchen der Wurzeln ausgebracht wird.

4. Verfahren nach einem der Ansprüche 1-3, wobei die Zusammensetzung über einen Zeitraum von mindestens zehn Sekunden ausgebracht wird.

5. Verfahren nach einem der Ansprüche 1-4, wobei der oberirdische Teil der Pflanze während der Ausbringung der Zusammensetzung auf das Wurzelgewebe frei von der Zusammensetzung ist.

6. Verfahren nach einem der Ansprüche 1-5, wobei der oberirdische Teil der Pflanze frei von der Zusammensetzung ist.

7. Verfahren nach einem der Ansprüche 1-6, bei dem man weiterhin ein oder mehrere traditionelle chemische Fungizide auf die Pflanze ausbringt.

8. Verfahren nach Anspruch 7, wobei das eine oder die mehreren traditionellen chemischen Fungizide auf einen oberirdischen Teil der Pflanze ausgebracht werden.

9. Verfahren nach einem der Ansprüche 1 bis 8, wobei es sich bei der Pflanze um eine Kulturpflanze handelt.

10. Verfahren nach Anspruch 9, wobei es sich bei der Kulturpflanze um Weizen, Gerste, Sojabohne, Tomaten, Kartoffeln oder Mais handelt.

11. Verfahren nach einem der Ansprüche 9 und 10, wobei die Zusammensetzung weiterhin 50 bis 99 Gewichtsteile Wasser umfasst.

12. Verfahren nach Anspruch 11, wobei es sich bei der Zusammensetzung um eine Öl-in-Wasser-Emulsion handelt.

13. Verfahren nach Anspruch 1, wobei die Zusammensetzung auf ein Wachstumssubstrat ausgebracht wird, wobei das Wachstumssubstrat eine beliebige Oberfläche des Wachstumssubstrats, die 0 cm (0 Inches) bis 183 cm (sechs Feet) von der Pflanzenbasis liegt, und jegliches Wachstumssubstrat, das 0 cm (0 Inches) bis 61 cm (24 Inches) unterhalb der Oberfläche des Wachstumssubstrats liegt, umfasst, und wobei die Zusammensetzung, die mit einer Aufwandmenge von 935,4 l/ha (100 gal/acre) bis 7483,2 l/ha (800 gal/acre) basierend darauf, dass die Zusammensetzung weiterhin 50 bis 99 Gewichtsteile Wasser beinhaltet, ausgebracht wird.

14. Verfahren nach Anspruch 13, wobei es sich bei dem Wachstumssubstrat um Boden handelt.

15. Verfahren nach einem der Ansprüche 1-8 oder 13-14, wobei es sich bei der Pflanze um einen Baum handelt.

16. Verfahren nach Anspruch 15, wobei es sich bei dem Baum um einen Ahornbaum, einen Citronenbaum, einen Apfelbaum, einen Birnenbaum, einen Eichenbaum, einen Eschenbaum, einen Kiefernbaum oder einen Fichtenbaum oder eine beliebige Kombination davon handelt.

17. Verfahren nach Anspruch 15 oder 16, wobei die Zusammensetzung weiterhin 5 bis 99 Gewichtsteile Wasser umfasst.

18. Verfahren nach Anspruch 17, wobei es sich bei der Zusammensetzung um eine Öl-in-Wasser-Emulsion handelt.

19. Verfahren nach einem vorhergehenden Anspruch, wobei das Paraffinöl ein Paraffin mit 16 Kohlenstoffatomen bis 35 Kohlenstoffatomen umfasst.

20. Verfahren nach einem vorhergehenden Anspruch, wobei das Paraffinöl ein Isoparaffin umfasst.

21. Verfahren nach einem vorhergehenden Anspruch, wobei die Zusammensetzung weiterhin einen Emulgator umfasst.

22. Verfahren nach Anspruch 19, wobei das Gewichtsverhältnis des Paraffinöls zu dem Emulgator 10:1 bis 500:1 beträgt.

23. Verfahren nach Anspruch 21, wobei der Emulgator ein natürliches oder synthetisches Alkoholethoxylat, ein Alkoholalkoxylat, ein Alkylpolysaccharid, ein Glycerinoleat, ein Polyoxyethylen/Polyoxypropylen-Blockcopolymer, ein Alkylphenolethoxylat, ein polymeres Tensid, ein Polyethylenglykol, ein Sorbitanfettsäureesterethoxylat oder eine Zusammensetzung davon umfasst.

24. Verfahren nach einem der Ansprüche 1 bis 23, wobei es sich bei dem Pigment um ein polychloriertes (Cu II)-Phthalocyanin handelt.

25. Verfahren nach einem der Ansprüche 1 bis 24, wobei das Gewichtsverhältnis des Paraffinöls zu dem Pigment 1:5 bis 100:1 beträgt.

26. Verfahren nach einem der Ansprüche 1 bis 25, wobei das Gewichtsverhältnis des Paraffinöls zu dem Pigment 30:1 beträgt.

27. Verfahren nach einem der Ansprüche 1 bis 26, wobei es sich bei dem Pigment um eine Pigmentdispersion auf Wasserbasis handelt.

28. Verfahren nach einem der Ansprüche 1 bis 27, wobei die Zusammensetzung weiterhin ein Silikontensid umfasst.

29. Verfahren nach Anspruch 28, wobei es sich bei dem Silikontensid um einen Silikonpolyether handelt.

30. Verfahren nach einem der Ansprüche 28 und 29, wobei das Silikontensid weiterhin ein Polyethylenglykol der Formel IV
R¹-O-(CH₂CH₂O)_{f}-R²,
worin R¹ = H oder CH₂=CH-CH₂ oder COCH₃; R² = H oder CH₂=CH-CH₂ oder COCH₃; und f ≥ 1,
umfasst.

31. Verfahren nach einem der Ansprüche 28 bis 30, wobei das Gewichtsverhältnis des Pigments zu dem Silikontensid 2:1 bis 50:1 beträgt.

32. Verfahren nach einem vorhergehenden Anspruch, wobei die Zusammensetzung weiterhin ein Antiabsetzmittel umfasst.

33. Verfahren nach einem vorhergehenden Anspruch, wobei das Verfahren der Bekämpfung einer Krankheit, die von einem pilzlichen Pathogen verursacht wird, dient.

34. Verfahren nach Anspruch 33, wobei es sich bei der Krankheit um die Teerfleckenkrankheit des Ahorns handelt.

35. Verfahren nach Anspruch 28, wobei das Gewichtsverhältnis des Pigments zu dem Silikontensid 2:1 bis 50:1 beträgt.

36. Verfahren nach einem der Ansprüche 1 bis 35, wobei das Verfahren der Erhöhung der Menge an endophytischen Bakterien, die innerhalb der Wurzeln der Pflanze leben, dient.

37. Verfahren nach Anspruch 36, wobei es sich bei der Immunreaktion um eine induzierte systemische Resistenzreaktion (ISR-Reaktion), eine systemische erworbene Resistenz (Systemic Acquired Resistance, SAR) oder eine sonstige Abwehrreaktion in der Pflanze handelt.

## Revendications

1. Procédé pour lutter contre une maladie provoquée par des champignons ou des bactéries dans une plante ou pour augmenter la quantité de bactéries endophytes dans les racines d'une plante, qui comprend l'application d'une composition comprenant une huile paraffinique et un pigment de type phtalocyanine métallique au tissu des racines de la plante.

2. Procédé selon la revendication 1, la composition étant appliquée par l'un ou plusieurs des procédés suivants : sous forme d'un bolus, par trempage du sol, par irrigation goutte à goutte ou par injection dans le sol.

3. Procédé selon la revendication 2, la composition étant appliquée sous forme d'un bolus par déversement et/ou immersion des racines dans un bain.

4. Procédé selon l'une quelconque des revendications 1 à 3, la composition étant appliquée sur un laps de temps d'au moins dix secondes.

5. Procédé selon l'une quelconque des revendications 1 à 4, la partie aérienne de la plante étant exempte de la composition pendant l'application de la composition au tissu des racines.

6. Procédé selon l'une quelconque des revendications 1 à 5, la partie aérienne de la plante étant exempte de la composition.

7. Procédé selon l'une quelconque des revendications 1-6, comprenant en outre l'application d'un ou de plusieurs fongicides chimiques classiques à la plante.

8. Procédé selon la revendication 7, ledit un ou lesdits plusieurs fongicides chimiques classiques étant appliqué(s) à une partie aérienne de la plante.

9. Procédé selon l'une quelconque des revendications 1-8, la plante étant une plante de culture.

10. Procédé selon la revendication 9, la plante de culture étant le blé, l'orge, le soja, la tomate, la pomme de terre ou le maïs.

11. Procédé selon l'une quelconque des revendications 9 et 10, la composition comprenant en outre 50 à 99 parties en poids d'eau.

12. Procédé selon la revendication 11, la composition étant une émulsion huile-dans-eau.

13. Procédé selon la revendication 1, la composition étant appliquée à un milieu de croissance, le milieu de croissance comprenant l'une quelconque surface du milieu de croissance qui est située à 0 cm (0 pouce) jusqu'à 183 cm (six pieds) à partir de la base de la plante et l'un quelconque milieu de culture qui est situé à 0 cm (0 pouce) jusqu'à 61 cm (24 pouces) sous ladite surface du milieu de croissance et la composition qui est appliquée à un taux de 935,4 l/ha (100 gal/acre) à 7483,2 l/ha (800 gal/acre), sur base de ladite composition, comprenant en outre 50 à 99 parties en poids d'eau.

14. Procédé selon la revendication 13, le milieu de culture étant le sol.

15. Procédé selon l'une quelconque des revendications 1 à 8 ou 13 à 14, la plante étant un arbre.

16. Procédé selon la revendication 15, l'arbre étant un érable, un citronnier, un pommier, un poirier, un chêne, un frêne, un pin ou un épicéa ou une quelconque combinaison de ceux-ci.

17. Procédé selon la revendication 15 ou 16, la composition comprenant en outre 5 à 99 parties en poids d'eau.

18. Procédé selon la revendication 17, la composition étant une émulsion huile-dans-eau.

19. Procédé selon l'une quelconque revendication précédente, l'huile paraffinique comprenant une paraffine présentant 16 à 35 atomes de carbone.

20. Procédé selon l'une quelconque revendication précédente, l'huile paraffinique comprenant une isoparaffine.

21. Procédé selon l'une quelconque revendication précédente, la composition comprenant en outre un émulsifiant.

22. Procédé selon la revendication 19, le rapport pondéral d'huile paraffinique à émulsifiant étant de 10:1 à 500:1.

23. Procédé selon la revendication 21, l'émulsifiant comprenant un éthoxylate d'alcool naturel ou synthétique, un alcoxylate d'alcool, un alkylpolysaccharide, un oléate de glycérol, un copolymère séquencé de polyoxyéthylène-polyoxypropylène, un éthoxylate d'alkylphénol, un tensioactif polymère, un polyéthylèneglycol, un éthoxylate d'ester d'acide gras de sorbitane ou une composition de ceux-ci.

24. Procédé selon l'une quelconque des revendications 1 à 23, le pigment étant une phtalocyanine (Cu II) polychlorée.

25. Procédé selon l'une quelconque des revendications 1 à 24, le rapport pondéral d'huile paraffinique à pigment étant de 1:5 à 100:1.

26. Procédé selon l'une quelconque des revendications 1 à 25, le rapport pondéral d'huile paraffinique à pigment étant de 30:1.

27. Procédé selon l'une quelconque des revendications 1 à 26, le pigment étant une dispersion pigmentaire à base d'eau.

28. Procédé selon l'une quelconque des revendications 1 à 27, la composition comprenant en outre un tensioactif de type silicone.

29. Procédé selon la revendication 28, le tensioactif de type silicone étant un polyéther de silicone.

30. Procédé selon l'une quelconque parmi la revendication 28 et 29, le tensioactif de type silicone comprenant en outre un polyéthylèneglycol selon la formule IV :
R¹-O-(CH₂CH₂O)_{f}-R²
dans laquelle
R¹ = H ou CH₂=CH-CH₂ ou COCH₃ ; R² = H ou CH₂=CH-CH₂ ou COCH₃ ; et f ≥ 1.

31. Procédé selon l'une quelconque des revendications 28 à 30, le rapport pondéral de pigment à tensioactif de type silicone étant de 2:1 à 50:1.

32. Procédé selon l'une quelconque revendication précédente, la composition comprenant en outre un agent d'antisédimentation.

33. Procédé selon l'une quelconque revendication précédente, le procédé étant destiné à lutter contre une maladie provoquée par un agent pathogène fongique.

34. Procédé selon la revendication 33, la maladie étant la maladie des taches goudronneuses de l'érable.

35. Procédé selon la revendication 28, le rapport pondéral de pigment à tensioactif de type silicone étant de 2:1 à 50:1.

36. Procédé selon l'une quelconque des revendications 1 à 35, le procédé étant destiné à augmenter la quantité de bactéries endophytes vivant dans les racines de la plante.

37. Procédé selon la revendication 36, la réponse immune étant une réponse de résistance systémique induite (RSI), de résistance systémique acquise (RSA) ou une autre réponse de défense dans la plante.
